(19) Europäisches Patentamt
European Patent Office
Office européen des brevets

(11) Veröffentlichungsnummer : **0 124 679**
**B1**

(12) # EUROPÄISCHE PATENTSCHRIFT

(45) Veröffentlichungstag der Patentschrift : **11.11.87**

(51) Int. Cl.⁴ : **D 06 P 3/06**, D 06 P 5/20, D 06 P 1/00, C 09 B 1/34// C09B45/04

(21) Anmeldenummer : **84100196.9**

(22) Anmeldetag : **10.01.84**

(54) **Verfahren zum Färben oder Bedrucken von Polyamidfasern.**

(30) Priorität : **13.01.83 CH 176/83**

(43) Veröffentlichungstag der Anmeldung : **14.11.84 Patentblatt 84/46**

(45) Bekanntmachung des Hinweises auf die Patenterteilung : **11.11.87 Patentblatt 87/46**

(84) Benannte Vertragsstaaten : **BE CH DE FR GB IT LI NL**

(56) Entgegenhaltungen :
**EP-A- 0 049 832**
**EP-A- 0 058 139**
**EP-A- 0 103 541**
**DE-A- 1 619 393**
**DE-A- 1 810 156**
**DE-B- 1 189 669**
**GB-A- 1 206 295**
**GB-A- 2 041 010**
**US-A- 3 170 757**
**AMERICAN DYESTUFF REPORTER, Band 67, Nr. 6, Juni 1978, Seiten 27, 30, 31, 34, New York, USA; C.G.NAMBOODRI et al.: "Continuous foam dyeing for carpets"**
**AMERICAN DYESTUFF REPORTER**
**JOURNAL OF THE SOCIETY OF DYERS & COLOURISTS, Band 97, Nr. 6, Juni 1981, Seiten 262-274, Bradford, GB; T.L. DAWSON: "Foam dyeing and printing of carpets"**
**CHEMICAL ABSTRACTS, Band 97, Nr. 24, Dezember 1982, Seite 72, Nr. 199496x, Columbus, Ohio, USA**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Raisin, Helmut**
**Im Baumgarten 9**
**CH-4125 Riehen (CH)**
Erfinder : **Teutelink, Bernard Christiaan**
**Rheinparkstrasse 5**
**CH-4127 Birsfelden (CH)**

(74) Vertreter : **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun.**
**Bräuhausstrasse 4**
**D-8000 München 2 (DE)**

**EP 0 124 679 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Bei den in der Praxis gebräuchlichen Kontinuefärbe- und Druckverfahren für Polyamidfasermaterialien erfolgt die Fixierung des auf das Substrat gebrachten Farbstoffes durch Dämpfen mit Sattdampf von etwa 100 °C, bei Druckverfahren gelegentlich mit überhitztem Dampf von 105° bis 110 °C, und Dämpfzeiten von 5 bis 10 Minuten Dauer. Derart lange Dämpfzeiten lassen jedoch nur niedrige Produktionsgeschwindigkeiten zu und sind daher wirtschaftlich ein Nachteil.

Die der vorliegenden Erfindung zugrunde liegende Aufgabe war es, ein Verfahren für das Kontinuefärben oder Bedrucken von Polyamidfasern zusammen mit einer Auswahl dafür geeigneter Farbstoffe zu finden, nach welchem mit bedeutend kürzeren Dämpfzeiten als sie nach dem Stand der Technik üblich sind, gearbeitet werden kann.

Die erfindungsgemäss zu verwendenden Farbstoffe sollten eine Auswahl darstellen, welche die wichtigsten Farben aus dem sichtbaren Spektrum enthält, so dass dem Färber ein vollständiges Sortiment zur Verfügung gestellt werden kann. Ferner sollten die Farbstoffe einheitlich nach dem neuen Verfahren eingesetzt werden können und nach diesem farbstarke, egale Färbungen bzw. Drucke mit guten Licht- und Nassechtheiten liefern.

Die Farbstoffe sollten insbesondere eine gute Kombinierbarkeit aufweisen, so dass durch Färbung mit Mischungen, z. B. nach dem Trichromieprinzip, alle gewünschten Farbtöne hergestellt werden können.

Es wurde gefunden, dass das weiter unten beschriebene Verfahren den genannten Anforderungen genügt.

Gegenstand der vorliegenden Erfindung ist somit ein Verfahren zum Färben oder Bedrucken von synthetischen Polyamidfasern nach einem Schnellfixierverfahren, welches dadurch gekennzeichnet ist, dass man Farbstoffe oder Mischungen aus Farbstoffen der Formeln

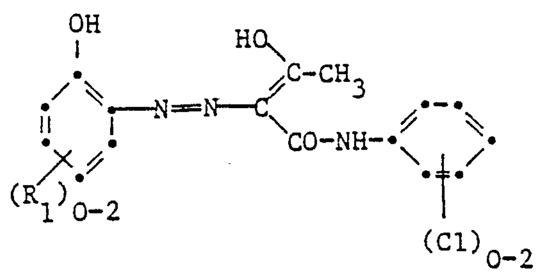

(1),

1 : 2-Kobaltkomplex

worin $(R_1)_{0-2}$ für 0 bis 2 Substituenten $R_1$ steht, die unabhängig voneinander $C_{1-4}$-Alkyl, $C_{1-4}$-Alkoxy, Halogen, Nitro, Sulfamoyl, N-$C_{1-4}$-Alkylsulfamoyl, N-$C_{1-2}$-Alkoxy-$C_{1-2}$-Alkylsulfamoyl, Phenylaminosulfonyl, Carboxyphenylaminosulfonyl, $C_{1-4}$-Alkylsulfonyl oder Acetylamino sein können ;

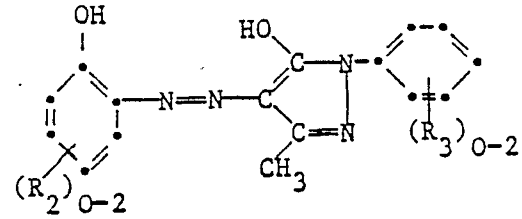

(2),

1 : 2-Chromkomplex

worin $(R_2)_{0-2}$ für 0 bis 2 Substituenten $R_2$ steht, die unabhängig voneinander $C_{1-4}$-Alkyl, $C_{1-4}$-Alkoxy, Halogen, Nitro, Sulfamoyl, N-$C_{1-4}$-Alkylsulfamoyl, N-$C_{1-2}$-Alkoxy-$C_{1-3}$-Alkylsulfamoyl, Phenylaminosulfonyl, Carboxyphenylaminosulfonyl, $C_{1-4}$-Alkylsulfonyl oder Acetylamino sein können, und $(R_3)_{0-2}$ für 0 bis 2 Substituenten, $R_3$ steht, die unabhängig voneinander Halogen, $C_{1-4}$-Alkyl, Cyan oder Sulfamoyl sein können ; 1 : 2-Kobaltkomplex der Farbstoffe der Formel (2), worin $R_2$ die gleiche Bedeutung hat wie in den 1 : 2-Chromkomplexen und $(R_3)_{0-2}$ für 0 bis 2 Substituenten $R_3$ steht, die unabhängig voneinander Halogen, Cyan oder Sulfamoyl sein können ;

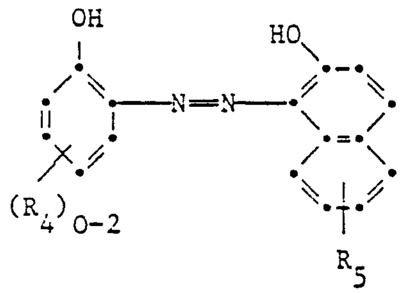

(3),

1 : 2-Kobalt- oder 1 : 2-Chromkomplex

worin $R_4$ die gleiche Bedeutung hat wie $R_1$ in Formel (1), und $R_5$ Wasserstoff, Acetylamino, Methoxycarbonylamino oder Methylsulfonylamino ist ;

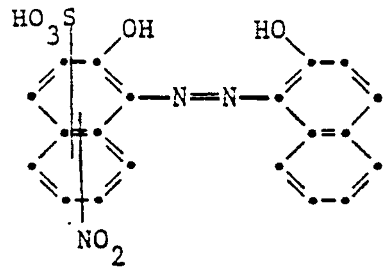

(4),

1 : 2-Chromkomplex

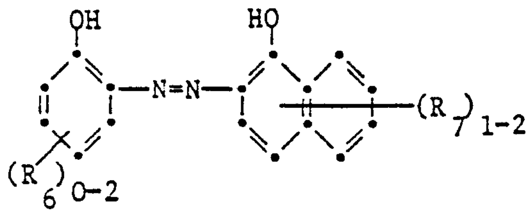

(5),

1 : 2-Chrom- oder 1 : 2-Kobaltkomplex

worin $R_6$ die gleiche Bedeutung hat wie $R_1$ in Formel (1), und $(R_7)_{1-2}$ für 1 bis 2 Substituenten $R_7$ steht, die unabhängig voneinander Halogen, Methyl, Methoxy oder Sulfo sein können, oder worin 2 benachbarte Substituenten $R_7$ ein geschlossenes Brückenglied $-SO_2-CH_2-O-$ bilden können ;

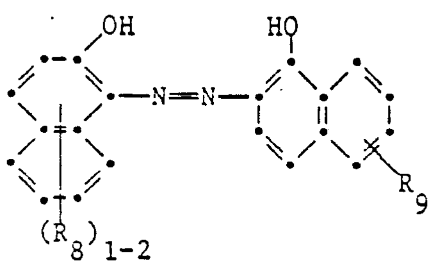

(6),

1 : 2-Kobalt- oder 1 : 2-Chromkomplex

worin $(R_8)_{1-2}$ für 1 bis 2 Substituenten $R_8$ steht, die unabhängig voneinander Sulfo oder Nitro sein können und $R_9$ Wasserstoff oder Hydroxy ist ;

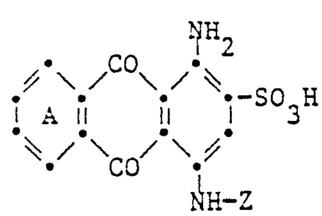

(7),

worin Z den Rest der Formel

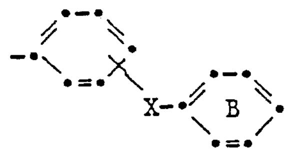

bedeutet, worin X die Gruppe —O—$SO_2$—, —NH—$SO_2$— oder —NH—CO— ist, der Benzolring A durch Halogen substituiert sein kann, und der Benzolring B durch Halogen, $C_{1-4}$-Alkyl, $C_{1-4}$-Alkoxy, β-Hydroxyäthoxy, β-Methoxyäthoxy, β-(β'-Methoxy-äthoxy)-äthoxy oder β-(β'-Aethoxy-äthoxy)-äthoxy substituiert sein kann ;

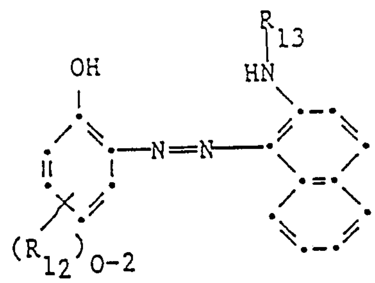

(8),

1 : 2-Kobaltkomplex

worin $R_{12}$ die gleiche Bedeutung hat wie $R_1$ in Formel (1), und $R_{13}$ Wasserstoff oder Phenyl ist ;

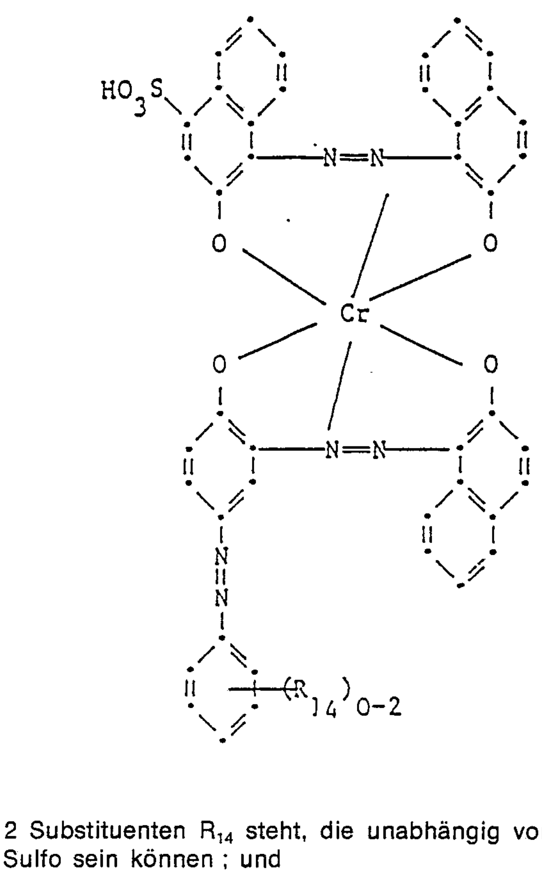

(9),

worin $(R_{14})_{0-2}$ für 0 bis 2 Substituenten $R_{14}$ steht, die unabhängig voneinander $C_{1-4}$-Alkyl, $C_{1-4}$-Alkoxy, Halogen, Carboxy oder Sulfo sein können ; und

(Siehe Figur Seite 5 f.)

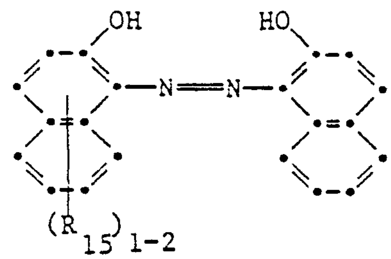

+

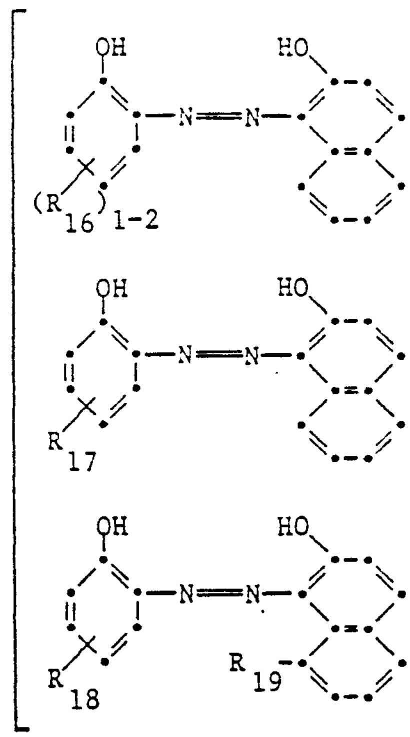

(10),

1 : 1-Chromkomplex

1 : 2-Chrommischkomplex

worin $(R_{15})_{1-2}$ für 1 bis 2 Substituenten $R_{15}$ steht, die unabhängig voneinander Sulfo oder Nitro sein können, $(R_{16})_{1-2}$ für 1 bis 2 Substituenten $R_{16}$ steht, die unabhängig voneinander Nitro, Halogen, Methyl oder Acetylamino sein können, $R_{17}$ die gleiche Bedeutung hat wie $R_{16}$, unabhängig von diesem, $R_{18}$ die gleiche Bedeutung hat wie $R_{16}$, unabhängig von diesem, und $R_{19}$ Acetylamino, Methoxycarbonylamino, Aethoxycarbonylamino, Methylsulfonylamino oder N,N-Dimethylaminosulfonyl ist ; 1 : 2-Kobaltmischkomplexe der Farbstoffe der Formeln (2) und (3) oder (4) und (8) ; im Kontinuefärbeverfahren oder Druckverfahren verwendet, und die Färbungen oder Drucke durch Dämpfen von weniger als 3 Minuten Dauer fixiert, wobei die Farbstoffe zu mindestens 95 % fixiert werden.

Für die Substituenten $R_1$, $R_2$, $R_3$, $R_4$, $R_6$, $R_7$, $R_{12}$ und $R_{14}$ in den Formeln (1) bis (10) kommen, soweit nach den jeweils unter den betreffenden Formeln gegebenen Definitionen zutreffend, und unabhängig voneinander, die folgenden Reste in Betracht.

Als $C_{1-4}$-Alkyl : Methyl, Aethyl, Propyl, Isopropyl, Butyl, Isobutyl, sec.-Butyl oder tert.-Butyl ; als $C_{1-4}$-Alkoxy : Methoxy, Aethoxy, Propyloxy, Isopropyloxy, Butyloxy, Isobutyloxy, sec.-Butyloxy oder tert.-Butyloxy ; als Halogen : Fluor, Chlor oder Brom ; als N-$C_{1-4}$-Alkylsulfamoyl : N-Methylsulfamoyl, N-Aethylsulfamoyl, N-Propylsulfamoyl, N-Isopropylsulfamoyl, N-Butylsulfamoyl, N-Isobutylsulfamoyl, N-sec.-Butylsulfamoyl ; oder N-tert.-Butylsulfamoyl als N-$C_{1-2}$-Alkoxy-$C_{1-2}$-alkylsulfamoyl : N-Methoxy-methylsulfamoyl, N-β-Methoxyäthylsulfamoyl, N-Aethoxymethylsulfamoyl oder N-β-Aethoxy-äthylsulfamoyl ; und als $C_{1-4}$-Alkylsulfonyl : Methylsulfonyl, Aethylsulfonyl, Propylsulfonyl, Isopropylsulfonyl, Butylsulfonyl, Isobutylsulfonyl, sec.-Butylsulfonyl oder tert.-Butylsulfonyl.

Falls 2 benachbarte Substituenten $R_7$ ein geschlossenes Brückenglied $—SO_2—CH_2—O—$ bilden, ist dieses in o,m-Stellung zur Azogruppe gebunden.

Als Halogensubstituent am Benzolring A kommt Fluor, Chlor oder Brom in Betracht, dieser befindet sich vorzugsweise in 6- oder 7-Stellung.

Mögliche Substituenten an dem Benzolring B sind : Fluor, Chlor, Brom, Methyl, Aethyl, Propyl, Isopropyl, Butyl, Isobutyl, sec.-Butyl, tert.-Butyl, Methoxy, Aethoxy, Propyloxy, Isopropyloxy, Butyloxy, Isobutyloxy, sec.-Butyloxy, tert.-Butyloxy, β-Hydroxyäthoxy, β-Methoxy-äthoxy, β-(β'-Methoxy-äthoxy)-äthoxy und β-(β'-Aethoxy-äthoxy)-äthoxy.

Eine bevorzugte Ausführungsform des erfindungsgemässen Verfahrens besteht darin, dass man Farbstoffe oder Mischungen aus Farbstoffen der Formeln

(1), 1 : 2-Kobaltkomplex, worin $R_1$ Nitro, Sulfamoyl, N-Methylsulfamoyl, Methylsulfonyl, Carboxyphenylaminosulfonyl oder N-(β-Methoxyäthyl)-sulfamoyl ist ;

(2), 1 : 2-Chromkomplex, worin $R_2$ Chlor, Nitro, Sulfamoyl oder N-Methylsulfamoyl und $R_3$ Chlor, Methyl oder Sulfamoyl ist ;

(2), 1 : 2-Kobaltkomplex, worin $R_2$ Chlor, Nitro, Sulfamoyl oder N-Methylsulfamoyl und $R_3$ Chlor, Cyan oder Sulfamoyl ist ;

(3), 1 : 2-Kobalt- oder 1 : 2-Chromkomplex, worin $R_4$ Methyl, Methoxy, Chlor, Nitro, Sulfamoyl, N—$C_{1-3}$—Alkylsulfamoyl, N-β-Methoxyäthylsulfamoyl, Phenylaminosulfonyl, Methylsulfonyl oder Acetylamino, und $R_5$ Wasserstoff, Acetylamino, Methoxycarbonylamino oder Methylsulfonylamino ist ;

(4), 1 : 2-Chromkomplex ;

(5), 1 : 2-Chrom- oder 1 : 2-Kobaltkomplex, worin $R_6$ Nitro, Chlor, Sulfamoyl, N-Methyl- oder N-Aethylsulfamoyl, und $R_7$ Chlor, Methyl, Methoxy oder Sulfo ist, oder worin 2 benachbarte Substituenten $R_7$ ein geschlossenes Brückenglied —$SO_2$—$CH_2$—O— bilden können ;

(6), 1 : 2-Kobalt- oder 1 : 2-Chromkomplex, worin $R_8$ die unter Formel (6) angegebene Bedeutung hat, und $R_9$ Wasserstoff ist ;

(7), worin X die unter Formel (7) angegebene Bedeutung hat, der Benzolring A unsubstituiert ist und der Benzolring B durch Methyl oder Methoxy substituiert sein kann ;

(8), 1 : 2-Kobaltkomplex, worin $R_{12}$ Methoxy, Chlor, Nitro oder Sulfamoyl ist ;

(9), worin $R_{14}$ Methyl, Methoxy, Aethoxy, Chlor, Carboxy oder Sulfo ist ;

(10), 1 : 2-Chrommischkomplex, worin $R_{15}$ die unter Formel (10) angegebene Bedeutung hat, $R_{16}$, $R_{17}$ und $R_{18}$ unabhängig voneinander Nitro, Chlor, Methyl oder Acetylamino sind, und $R_{19}$ die unter Formel (10) angegebene Bedeutung hat ; oder 1 : 2-Kobaltmischkomplexe der Farbstoffe der Formeln (2) und (3) oder (4) und (8) ; verwendet.

Eine besonders bevorzugte Ausführungsform des erfindungsgemässen Verfahrens ist dadurch gekennzeichnet, dass man Farbstoffe oder Mischungen aus Farbstoffen der Formeln

(Siehe Formeln Seite 7 ff.)

oder den 1 : 2-Kobaltmischkomplex der Farbstoffe der Formeln (31), (32) und (33) verwendet.

Insbesondere verwendet man die 1 : 2-Kobaltkomplexe der Formeln (11), (13), (20), (32), (33), (34) und (35), die 1 : 2-Chromkomplexe der Formeln (19), (49) und (50) und den 1 : 2-Kobaltkomplex der Farbstoffe der Formeln (31), (32) und (33) oder deren Mischungen.

Die Farbstoffe der Formeln (1) bis (39) und (41) bis (50) sind bekannt oder können nach den gleichen Verfahren wie für bekannte Farbstoffe hergestellt werden.

Die Farbstoffe der Formeln (1) bis (39) und (41) bis (50) eignen sich auch zum Färben und Bedrucken in Mischungen zur Herstellung von Kombinationsfärbungen. Eine bevorzugte Ausführungsform des erfindungsgemässen Verfahrens zur Herstellung von Kombinationsfärbungen ist dadurch gekennzeichnet, dass man Farbstoffmischungen verwendet, die 3 oder 4 Farbstoffe aus der Gruppe bestehend aus den Farbstoffen der Formeln (1) bis (10) bzw. der Formeln (11) bis (39) und (41) bis (50) enthalten.

Farbstoffe der Formeln (1) bis (39) und (41) bis (50) eignen sich insbesondere zum Färben oder Bedrucken nach dem Trichromie-Prinzip.

Unter Trichromie ist die additive Farbmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse der Farbstoffe eingestellt werden kann.

Vorzugsweise verwendet man zum Trichromie-Färben oder -Bedrucken eine Mischung von 3 oder 4 passend gewählten gelb- bzw. orange-, rot- und blaufärbenden Farbstoffen, aus der Gruppe bestehend aus den Farbstoffen der Formeln (1) bis (10), bzw. der Formeln (11) bis (39) und (41) bis (50).

Insbesondere enthält eine derartige Farbstoffmischung zum Trichromie-Färben oder -Bedrucken einen Farbstoff der Formel (7) bzw. (41) bis (47).

Die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten sowie insbesondere durch sehr gute Kombinierbarkeit aus.

Werden in dem erfindungsgemässen Verfahren Mischungen aus Farbstoffen der Formeln (1) bis (10), bzw. der Formeln (11) bis (39) und (41) bis (50) verwendet, so können diese durch Mischung der Einzelfarbstoffe hergestellt werden. Dieser Mischprozess erfolgt beispielsweise in geeigneten Mühlen, z. B. Kugel- und Stiftmühlen, sowie in Knetern oder Mixern.

Ferner können die Farbstoffmischungen durch Zerstäubungstrocknung der wässrigen Farbstoffmischungen hergestellt werden.

Die erfindungsgemässen Farbstoffmischungen zeichnen sich durch allgemein gute Eigenschaften wie z. B. gute Löslichkeit, Kaltlösungsbeständigkeit, gutes Aufziehverhalten und insbesondere durch gute Kombinierbarkeit mit anderen Farbstoffen aus.

Falls es sich bei den erfindungsgemäss verwendeten Farbstoffen um sulfogruppenhaltige Farbstoffe handelt, liegen diese entweder in Form ihrer freien Sulfonsäure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die in dem erfindungsgemässen Verfahren verwendeten Farbstoffe enthalten in der Regel weitere Zusätze wie z. B. Kochsalz oder Dextrin.

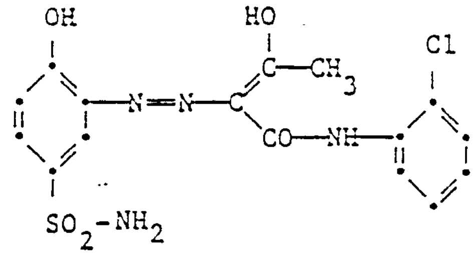

(11),

1 : 2-Kobaltkomplex

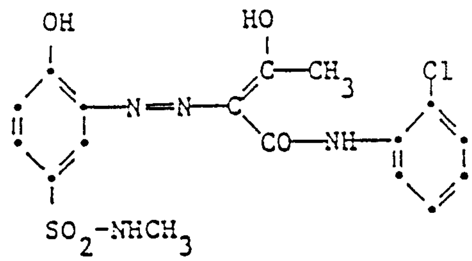

(12),

1 : 2-Kobaltkomplex

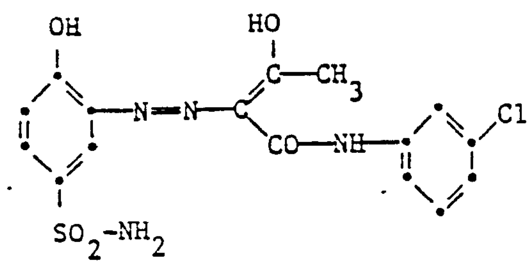

(13),

1 : 2-Kobaltkomplex

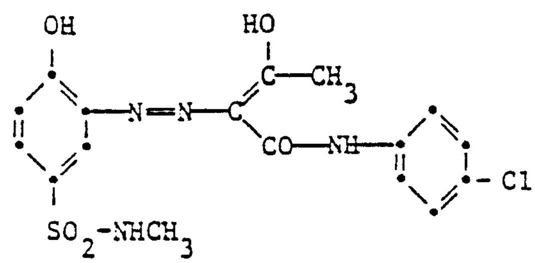

(14),

1 : 2-Kobaltkomplex

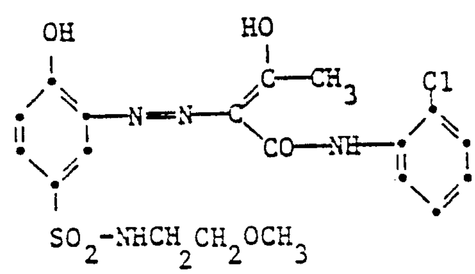

(15),

1 : 2-Kobaltkomplex

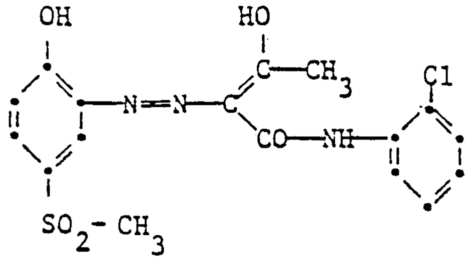

(16),

1 : 2-Kobaltkomplex

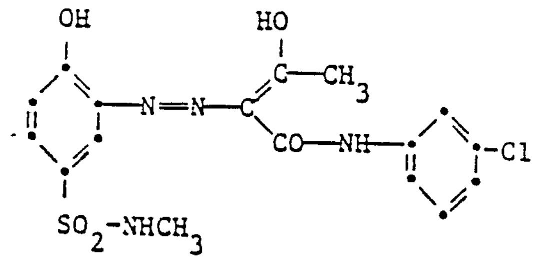

(17),

1 : 2-Kobaltkomplex

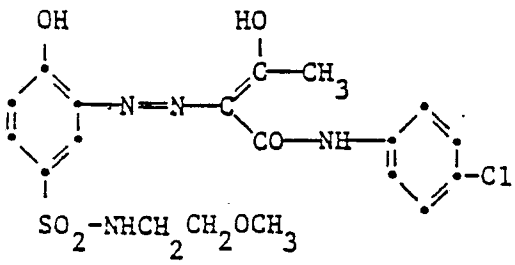

(18),

1 : 2-Kobaltkomplex

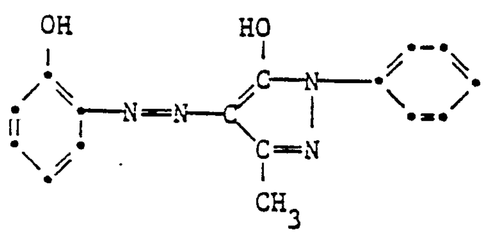

(19),

1 : 2-Chromkomplex

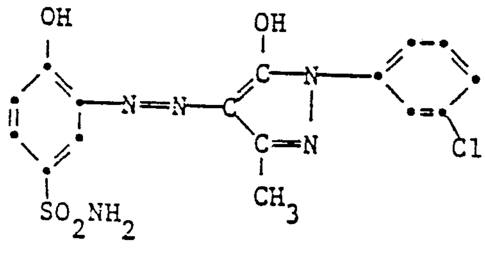

(20),

1 : 2-Kobaltkomplex

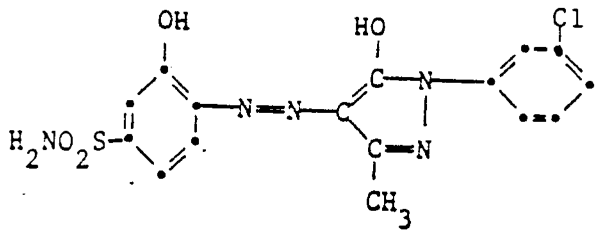

(21),

1 : 2-Chromkomplex

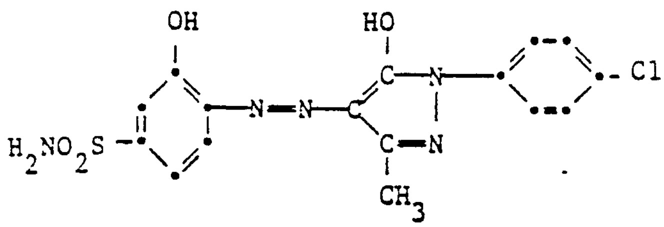

(22),

1 : 2-Chromkomplex

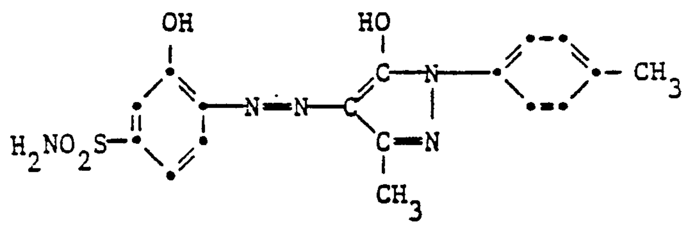

(23),

1 : 2-Chromkomplex

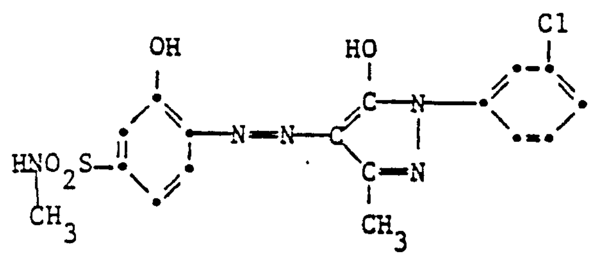

(24),

1 : 2-Chromkomplex

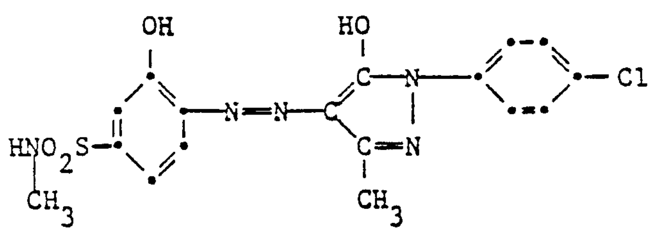

(25),

1 : 2-Chromkomplex

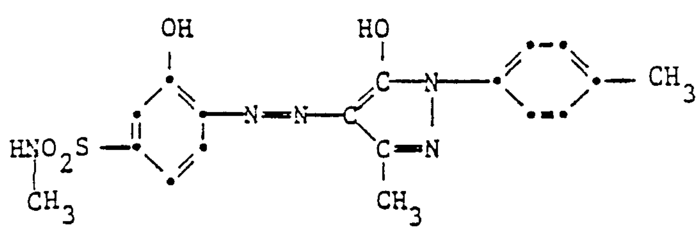

(26),

1 : 2-Chromkomplex

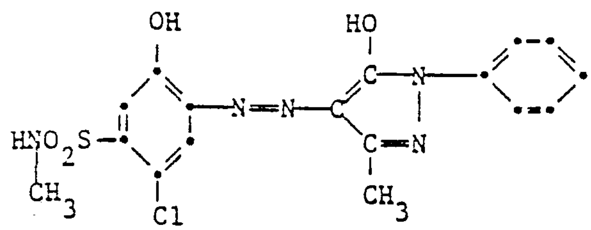

(27),

1 : 2-Chromkomplex

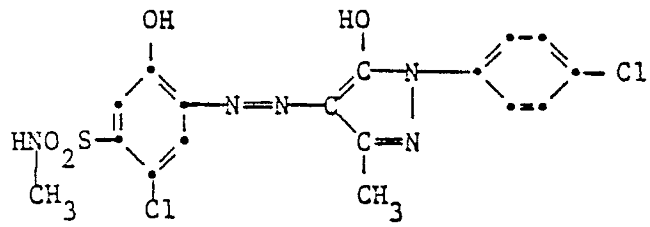

(28),

1 : 2-Chromkomplex

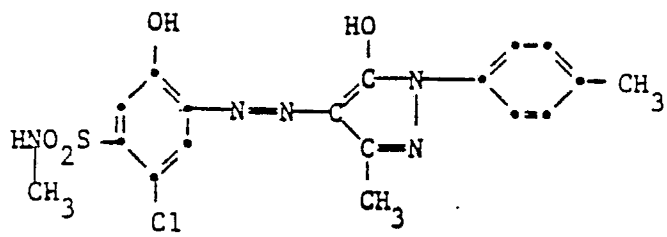

(29),

1 : 2-Chromkomplex

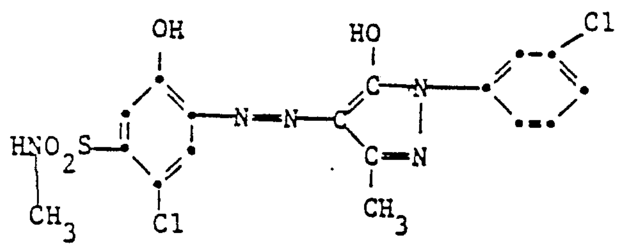

(30),

1 : 2-Chromkomplex

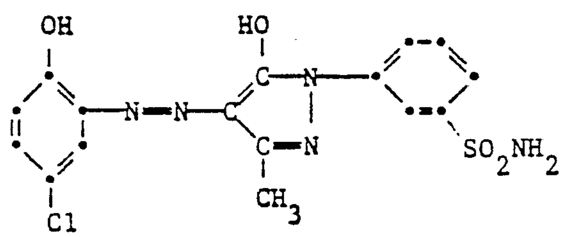

(31),

1 : 2-Chromkomplex

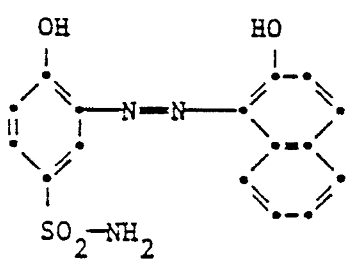

(32),

1 : 2-Kobaltkomplex

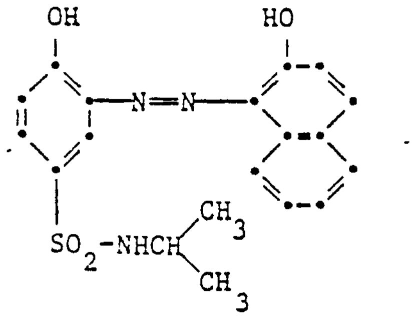

(33),

1 : 2-Kobaltkomplex

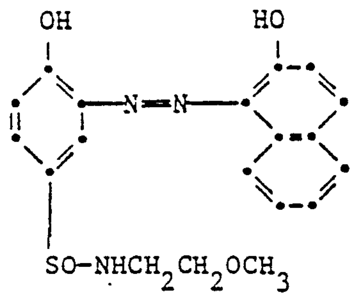

(34),

1 : 2-Kobaltkomplex

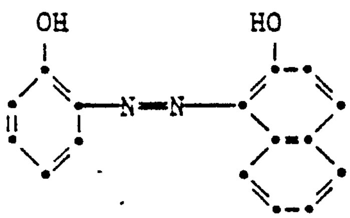

(35),

1 : 2-Kobaltkomplex

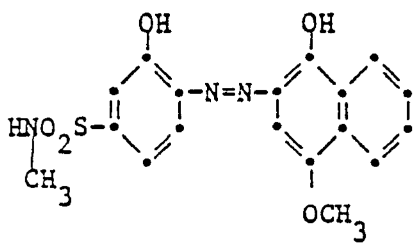

(36),

1 : 2-Chromkomplex

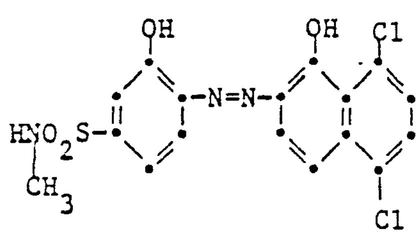

(37),

1 : 2-Chromkomplex

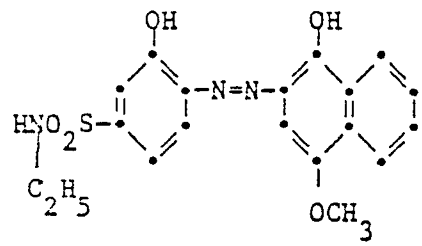

(38),

1 : 2-Chromkomplex

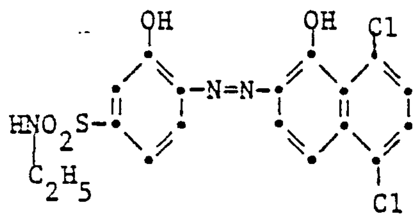

(39),

1 : 2-Chromkomplex

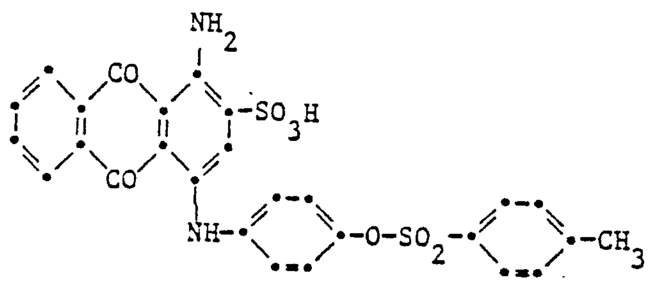

(41),

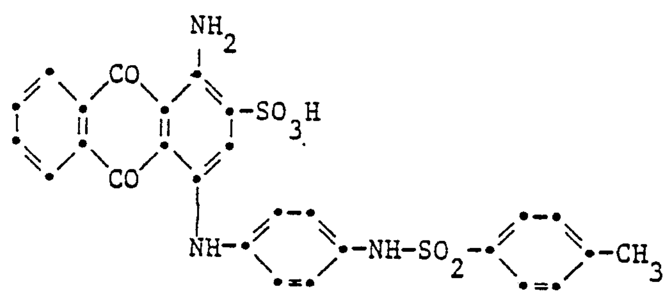

(42),

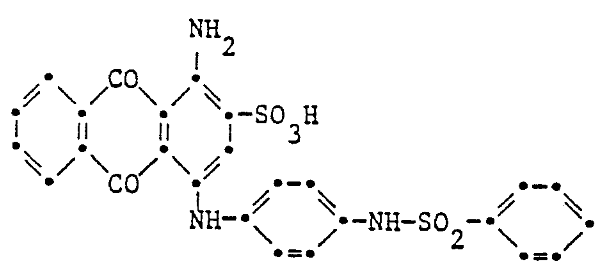

(43),

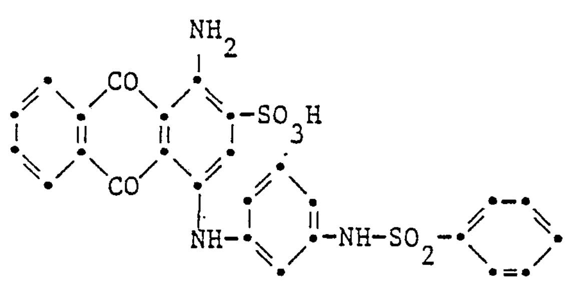

(44),

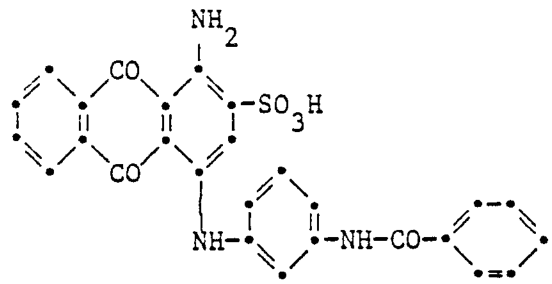

(45),

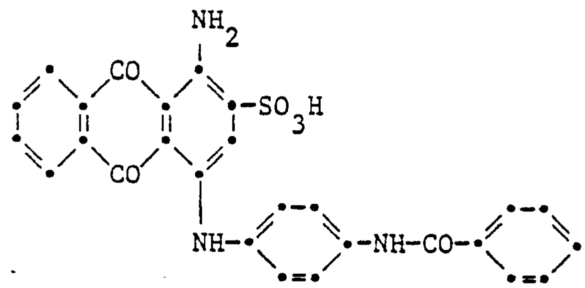

(46),

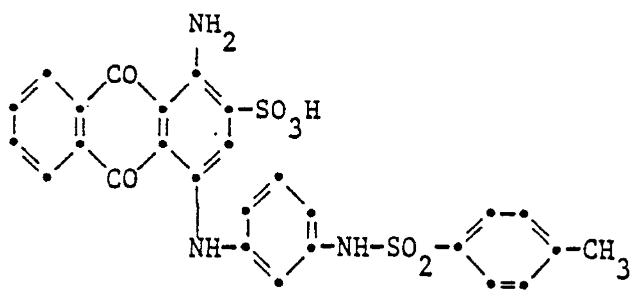

(47),

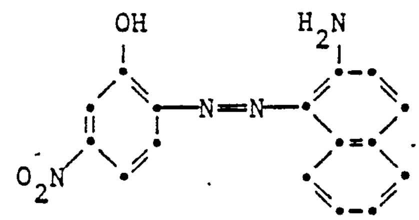

(48),

1 : 2-Kobaltkomplex

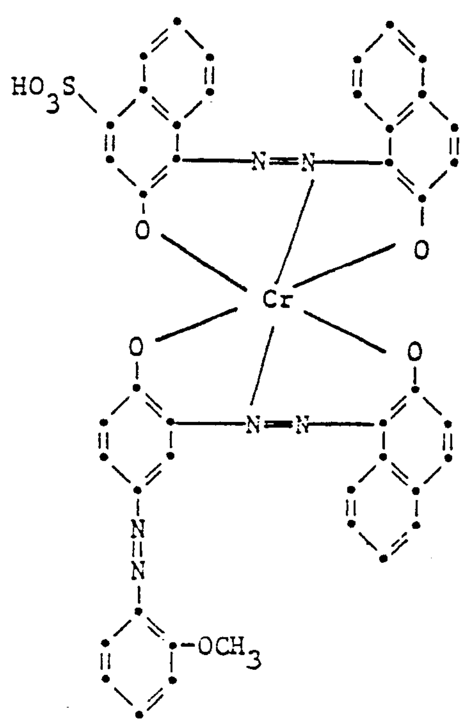

(49),

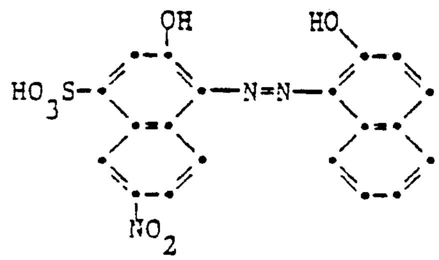

1 : 1-Chromkomplex

+

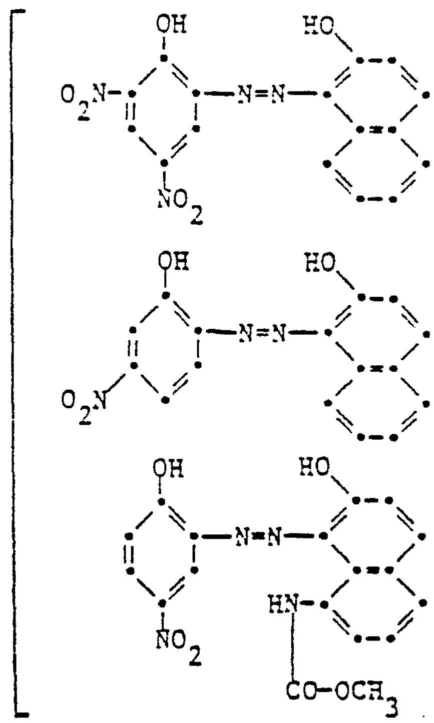

(50).

1 : 2-Chrommischkomplex

Die Farbstoffe oder Farbstoffmischungen werden in wässrigen Färbeflotten oder Druckpasten eingesetzt.

Die Färbeflotten oder Druckpasten können ebenfalls weitere Zusätze, beispielsweise Netzmittel, Antischaummittel, Egalisiermittel oder die Eigenschaft des Textilmaterials beeinflussende Mittel wie z. B. Weichmachungsmittel, Zusätze zum Flammfestausrüsten oder schmutz-, wasser- und öl-abweisende Mittel sowie wasserenthärtende Mittel und natürliche oder synthetische Verdicker wie z. B. Alginate und Celluloseäther, enthalten.

Als weiteren Zusatz können die Färbebäder Mineralsäuren, wie Schwefelsäure oder Phosphorsäure, organische Säuren, zweckmässig niedere, aliphatische Carbonsäuren, wie Ameisen-, Essig- Zitronen- oder Oxalsäure enthalten. Die Säuren dienen vor allem der Einstellung des pH-Wertes der erfindungsgemäss verwendeten Flotten.

Ferner kann die Färbeflotte Salze, insbesondere ein Ammonium- oder Alkalisalz wie z. B. Ammoniumsulfat, Ammonium- oder Natriumacetat oder vorzugsweise Natriumsulfat enthalten. Vorzugsweise werden 0,1 bis 10 Gewichtsprozent Ammonium- oder Alkalisulfat bezogen auf das Fasermaterial verwendet.

Die Mengen, in denen die Farbstoffe in den Färbebädern verwendet werden, können je nach der gewünschten Farbtiefe in weiten Grenzen schwanken, im allgemeinen haben sich Mengen von 0,001 bis 10 Gewichtsprozent, bezogen auf das Färbegut, eines oder mehrerer Farbstoffe als vorteilhaft erwiesen.

Das erfindungsgemässe Verfahren kann auf die üblichen kontinuierlichen Färbe- oder Druckmethoden angewendet werden, wobei alle in der Praxis gebräuchlichen Farbauftragswerke, z. B. solche mit Quetschwalzen oder Foulard, bzw. Druckaggregate eingesetzt werden können.

Das Fixieren erfolgt in Dämpfern mit durchlaufender Warenführung, mit Sattdampf von etwa 100 °C, oder gegebenenfalls mit überhitztem Dampf von 105 bis 110 °C.

Erfindungsgemäss werden Dämpfzeiten unter 3 Minuten angewendet. Insbesondere erfolgt die Fixierung durch Dämpfen von 1 bis 2 Minuten Dauer. Falls überhitzter Dampf angewendet wird, kann die Dämpfzeit in manchen Fällen noch weiter verkürzt werden.

Die erfindungsgemäss verwendbaren Farbstoffe weisen unter den angegebenen Verfahrensbedingungen einen Fixiergrad von mindestens 95 % auf.

Das erfindungsgemässe Verfahren ist insbesondere zum Färben aus Kurzflotten im Kontinuefärbeverfahren oder kontinuierlichen Schaumfärbeverfahren, geeignet.

Das erfindungsgemässe Verfahren eignet sich zum Färben oder Bedrucken von synthetischen Polyamidmaterialien, wie z. B. Perlon oder Nylon, und es ist geeignet zum Färben oder Bedrucken von synthetischem Polyamid-Mischgeweben oder -Garnen.

Das genannte Textilmaterial kann dabei in den verschiedensten Verarbeitungsformen vorliegen, wie z. B. als Faser, Garn, Gewebe oder Gewirke, und insbesondere in Form von Teppichen.

Ferner kann das erfindungsgemässe Verfahren auch zum kontinuierlichen Färben oder Bedrucken nach der Space-dyeing-Methode verwendet werden.

Das erfindungsgemässe Verfahren weist gegenüber den bekannten Verfahren zum Färben oder

Bedrucken von Fasermaterial aus natürlichen oder synthetischen Polyamiden neben den bereits genannten die folgenden Vorteile auf. Es bietet eine begrenzte Farbstoffauswahl mit guter Kombinierbarkeit und kurzen Fixierzeiten von vorzugsweise 1 bis 2 Minuten. Die erzeugten Färbungen bzw. Drucke haben gute Egalitäten und hohe Licht- und Nassechtheiten sowie gute Reibechtheit, und zeigen bei Farbüberfällen schärfere Konturen. Es ist überraschend, dass die ausgewählten Farbstoffe der Formeln (1) bis (10), bzw. (11) bis (39) und (41) bis (50) bei weniger als 3 Minuten Dämpfzeit, vorzugsweise sogar nur bei 1 bis 2 Minuten Dämpfzeit, so vollständig und gleichmässig fixiert werden, dass die dem heutigen Stand der Technik entsprechenden hohen Ansprüche an Egalität und Nassechtheit von Polyamidfärbungen erfüllt werden. Als technischer Fortschritt besonders hervorzuheben ist, dass durch die kürzeren Fixierzeiten höhere Produktionsgeschwindigkeiten als bisher möglich sind.

Aus der DE-A-1 619 393 ist ein ähnliches Verfahren bekannt, dass jedoch nicht alle guten Eigenschaften des erfindungsgemässen Verfahrens aufweist. Aus der EP-A-0 058 139 ist ein Verfahren bekannt, dass sich durch längere Dämpfzeiten von dem erfindungsgemässen Verfahren unterscheidet.

Die nachfolgenden Beispiele dienen der Veranschaulichung der Erfindung. Darin sind die Teile Gewichtsteile und die Prozente Gewichtsprozente. Die Temperaturen sind in Celsiusgraden angegeben. Die Beziehung zwischen Gewichtsteilen und Volumenteilen ist diesselbe wie diejenige zwischen Gramm und Kubikzentimeter. In den folgenden Beispielen bedeuten die Anforderungen der Automobilindustrie z. B. gute Licht- und Nassechtheiten der gefärbten Materialien.

## Beispiel 1

Ein Velours- oder Schlingen-Teppichboden aus Polyamid 6 oder 6.6 von 350 bis 1 200 g/m$^2$ Gewicht wird mit einer Paste bedruckt, die

a) 0,5 Teile eines Farbstoffes der Formel (12), 1 : 2-Kobaltkomplex,

b) 1 Teil eines Farbstoffes der Formel (32), 1 : 2-Kobaltkomplex,

c) 0,1 Teile einer Mischung erhalten aus 1-Amino-6-nitro-2-naphthol-4-sulfonsäure→β-Naphthol, zum 1 : 1-Chromkomplex umgesetzt, und dieser mit gleichen Teilen 2-Amino-5-nitrophenol→β-Naphthol, 2-Amino-4-nitrophenol→8-Methoxycarbonylamino-2-naphthol und 2-Amino-4,6-dinitrophenol→β-Naphthol zum 1 : 2-Chrommischkomplex umgesetzt.

d) 494,4 Teile Wasser,

e) 500 Teile Guarmehlderivat, 4 %-ig,

f) 3 Teile eines Koazervierungsmittels, und

g) 1 Teil eines Entschäumungsmittels

enthält, und die mit Zitronensäure auf pH 3,5 gestellt wird.

Die bedruckte Ware wird 2 Minuten mit Sattdampf von 101 °C gedämpft, dann gespült und getrocknet.

Man erhält einen gleichmässig und vollständig fixierten Druck in Bordeaux-Nuance, mit scharfen Konturen und guten Echtheiten.

Gleich gute Resultate werden mit den folgenden Farbstoffen oder mit Mischungen aus diesen erhalten :

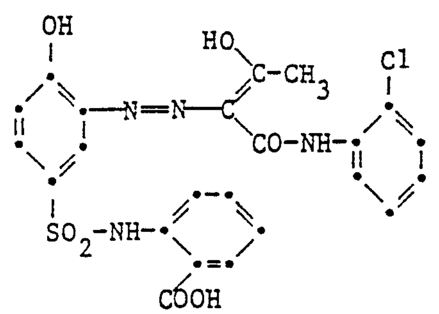

1 : 2-Kobaltkomplex

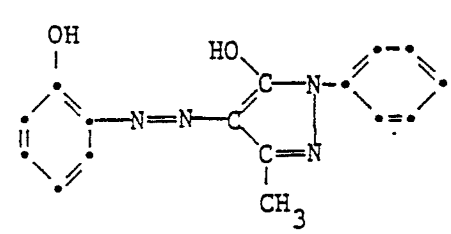

1 : 2-Chromkomplex

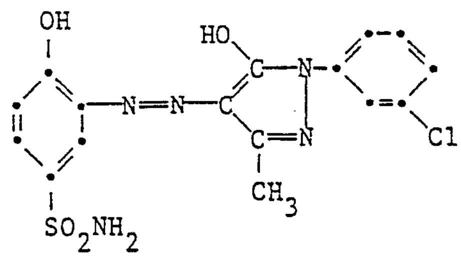

1 : 2-Chromkomplex

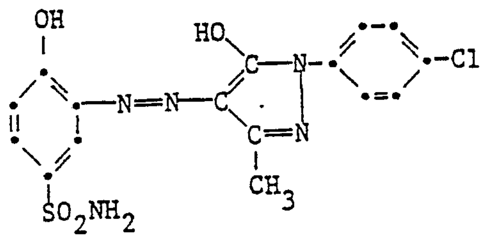

1 : 2-Chromkomplex

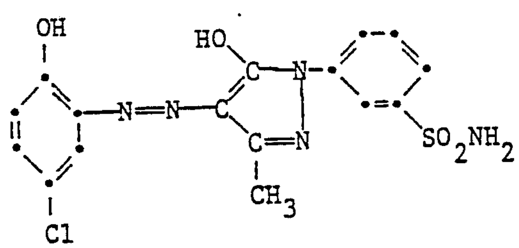

1 : 2-Chromkomplex

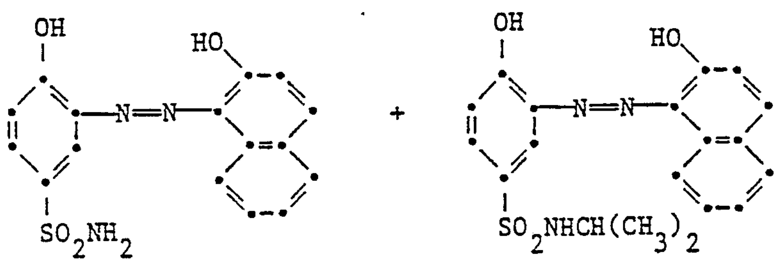

1 : 2-Kobaltmischkomplex

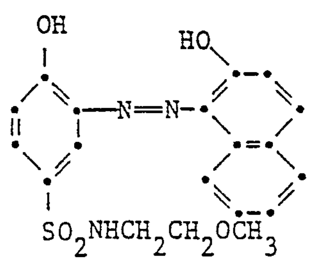

1 : 2-Kobaltkomplex

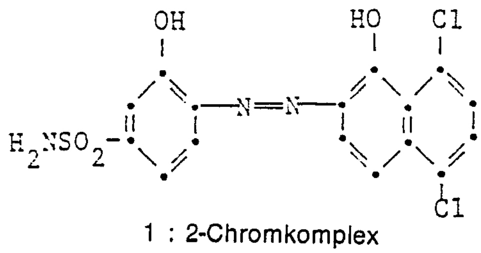

1 : 2-Chromkomplex

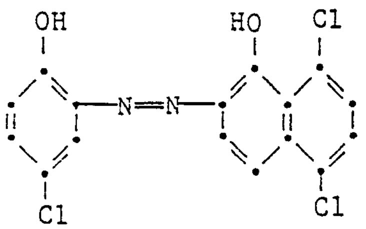

+

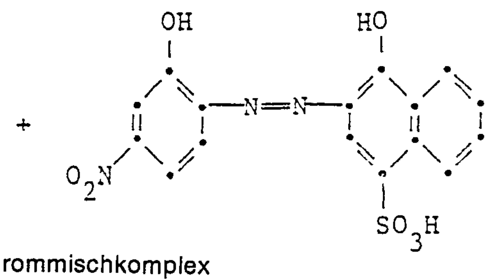

1 : 2-Chrommischkomplex

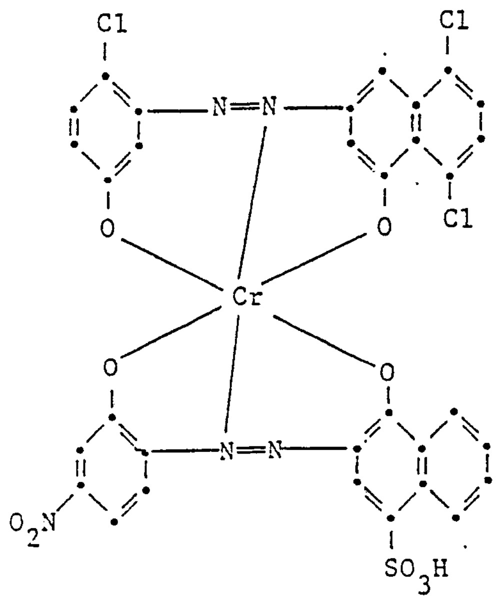

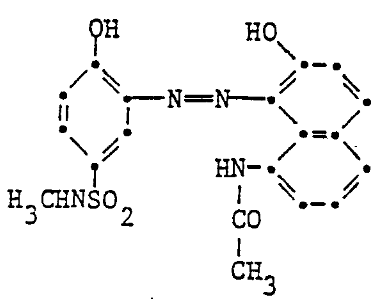

+

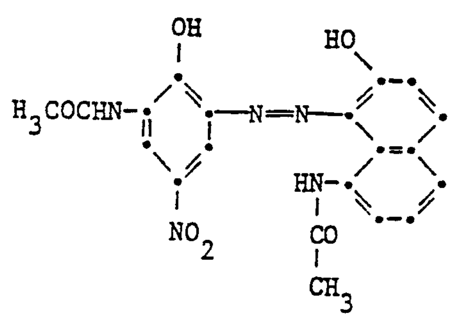

1 : 2-Chrommischkomplex

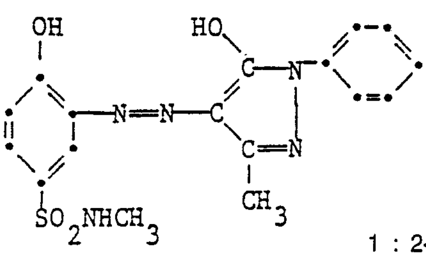

1 : 2-Kobaltkomplex

Farbstoff der Formel (48).
Farbstoff der Formel (49).

Beispiel 2

Ein Velours- oder Schlingen-Teppichboden aus Polyamid 6 oder 6.6 von 350 bis 1 200 $g/m^2$ Gewicht wird mit einer Klotzflotte, bestehend aus

a) 0,7 Teilen eines Farbstoffs der Formel (12), 1 : 2-Kobaltkomplex,
b) 0,7 Teilen einer Mischung bestehend aus 15 Teilen eines Farbstoffs der Formel (48), 1 : 2-Kobaltkomplex und 85 Teilen eines Farbstoffs der Formel (49),
c) 972,6 Teilen Wasser,
d) 25 Teilen Guarmehlderivat, 4 %-ig,
e) 0,5 Teilen eines Koazervierungsmittels, und
f) 0,5 Teilen eines Entschäumungsmittels,

die mit Essigsäure auf pH 7 gestellt ist, auf einem Foulard imprägniert und auf eine Flottenaufnahme von etwa 100 % abgequetscht.

Auf die so vorbehandelte Teppichware wird eine Druckpaste der folgenden Zusammensetzung aufgetragen.

g) 2 Teile eines Farbstoffs der Formel

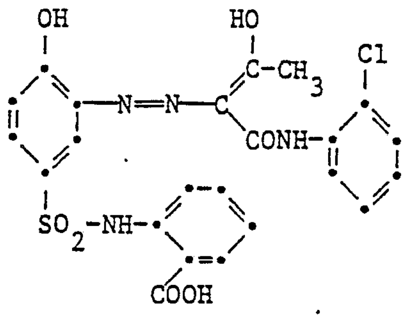

1 : 2-Kobaltkomplex

h) 2 Teile einer Mischung wie oben unter b),
i) 492 Teile Wasser,
j) 500 Teile Guarmehlderivat, 4 %-ig,
k) 3 Teile eines Koazervierungsmittels, und
l) 1 Teil eines Entschäumungsmittels,

welche mit Zitronensäure auf pH 3,5 gestellt wird.

Die Ware wird 2 Minuten mit Sattdampf von 101 °C gedämpft, dann gespült und getrocknet. Man erhält ein gleichmässig und vollständig fixiertes grünes Druckmuster auf einem gleichmässig und vollständig fixierten olive-farbigen Fond.

Gleich gute Resultate nach dem oben beschriebenen Verfahren von Foulardfärbung und Druck werden mit allen in Beispiel 1 aufgeführten Farbstoffen oder deren Mischungen erzielt.

Beispiel 3

Ein Velours-Teppichboden aus Polyamid 6 oder 6.6 wird auf einem Jetbulker oder Foulard mit einer Flotte bestehend aus

a) 1 Teil eines synthetischen Waschmittels, und
b) 999 Teilen Wasser,

vorgenetzt, so dass eine Restfeuchtigkeit von 100 % bleibt.

Die so vorbehandelte Ware wird auf einem Farbauftraggerät imprägniert, mit einer Farbflotte, bestehend aus

c) 2 Teilen eines Farbstoffs der Formel (11),
d) 0,5 Teilen eines Farbstoffs der Formel (32),
e) 0,3 Teilen einer Mischung wie in Beispiel 2, unter b),
f) 3 Teilen Guarmehlderivat,
g) 1,5 Teilen eines Koazervierungsmittels,

h) 1,5 Teilen eines Egalisiermittels,
i) 1,5 Teilen Ammoniumacetat,
j) X Teilen Essigsäure von 80 %, bis ein pH 5,5 erreicht ist, und
k) 989,7-X Teilen Wasser.

Der Farbauftrag beträgt 400 bis 500 %.

Nach dem Farbauftrag wird der Teppich 2 Minuten mit Sattdampf von 101 °C gedämpft, anschliessend gespült und getrocknet.

Man erhält einen mittelbraunen Teppichboden mit gleichmässiger, egaler Färbung, und mit Echtheiten, die den von der Automobilindustrie gestellten Anforderungen entsprechen.

Beispiel 4

Ein Velours-Teppichboden aus Polyamid 6 oder 6.6 wird auf einem Jetbulker oder Foulard mit einer Flotte bestehend aus

a) 1 Teil eines Netzmittels, und
b) 999 Teilen Wasser,

vorgenetzt, so dass eine Restfeuchtigkeit von 60 % bleibt.

Die so vorbehandelte Teppichware wird mit einer verschäumten Farbflotte, bestehend aus

c) 1 Teil eines Farbstoffs der Formel (12),
d) 0,25 Teilen eines Farbstoffs der Formel (32),
e) 0,15 Teilen einer Mischung wie in Beispiel 2, unter b),
f) 1 Teil eines Verschäumungsmittels,
g) 1 Teil eines Schaumreglers,
h) X Teilen Mono-/Dinatriumphosphat, bis pH 7 erreicht ist, und
i) 996,9-X Teilen Wasser,

mit einem Verschäumungsgrad 1 : 8 und einem Auftrag von 180 % imprägniert und anschliessend 2 Minuten in Sattdampf von 101 °C gedämpft ; zuletzt wird gespült und getrocknet.

Man erhält einen Teppich mit einer gleichmässigen und egalen Färbung in einem Beige-Ton, deren Echtheiten den von der Automobilindustrie gestellten Anforderungen entsprechen.

Beispiel 5

Ein Velours- oder Schlingen-Teppichboden aus Polyamid 6 oder 6.6 von 350 bis 1 200 g/m$^2$ Gewicht wird mit einer Paste bedruckt, die

a) 0,3 Teile des Farbstoffes der Formel

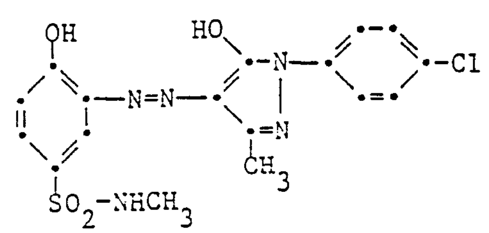

1 : 2-Chromkomplex

b) 0,2 Teile des Farbstoffes der Formel

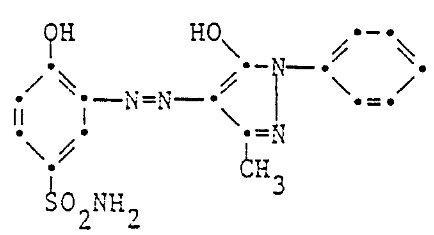

1 : 2-Chromkomplex

c) 1,0 Teil des Farbstoffes der Formel

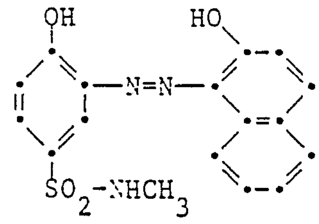

1 : 2-Kobaltkomplex

d) 0,1 Teile eines Farbstoffs, erhalten durch Kobaltierung der nachstehenden Farbstoffe zum 1 : 2-Kobaltkomplex

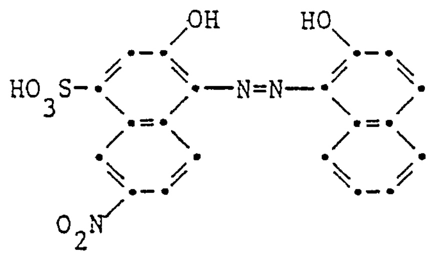

und

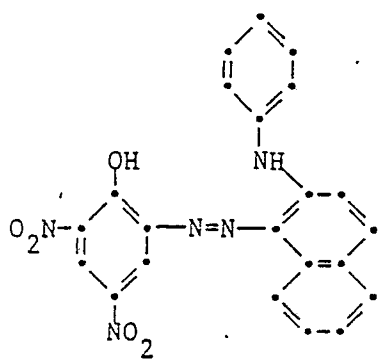

e) 494,4 Teile Wasser
f) 500 Teile Guarmehlderivat, 4 %-ig,
g) 3 Teile eines Koazervierungsmittels, und
h) 1 Teil eines Entschäumungsmittels

enthält, und die mit Ameisensäure auf pH 3,5 gestellt wird.

Die bedruckte Ware wird 2 Minuten mit Sattdampf von 101 °C gedämpft, dann gespült und getrocknet.

Man erhält einen gleichmässig und vollständig fixierten Druck in Bordeaux-Nuance, mit scharfen Konturen und guten Echtheiten.

Gleich gute Resultate werden mit den folgenden Farbstoffen oder mit Mischungen aus diesen erhalten :

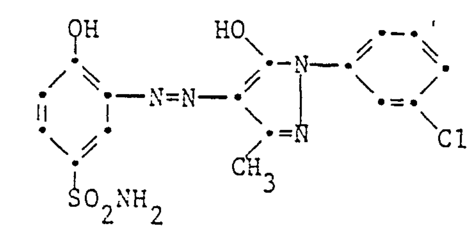

1 : 2-Kobaltkomplex

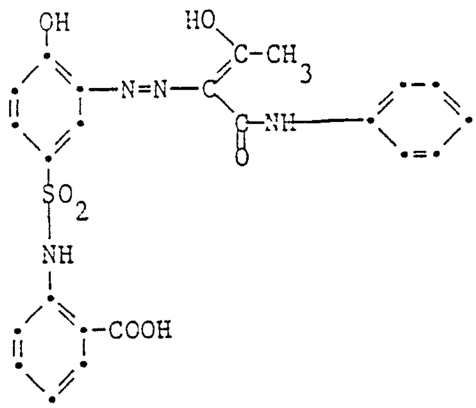

1 : 2-Kobaltkomplex

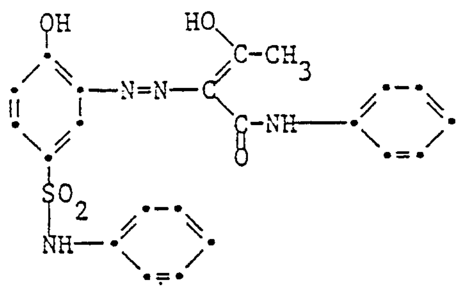

1 : 2-Kobaltkomplex

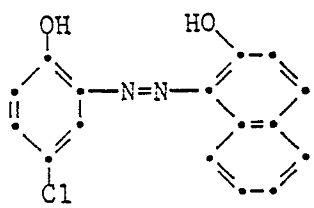

1 : 2-Kobaltkomplex

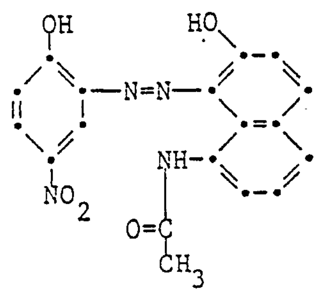

1 : 2-Chromkomplex

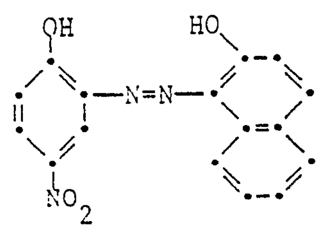

1 : 2-Chromkomplex

Beispiel 6

Ein Velours- oder Schlingen-Teppichboden aus Polyamid 6 oder 6.6 von 350 bis 1 200 $g/m^2$ Gewicht wird mit einer Klotzflotte, bestehend aus

a) 0,7 Teilen des Farbstoffes der Formel

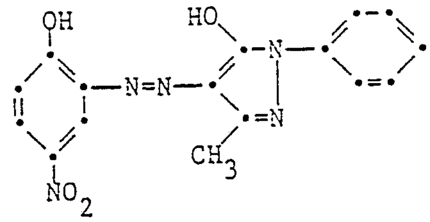

1 : 2-Chromkomplex

b) 0,7 Teilen einer Mischung bestehend aus 15 Teilen eines Farbstoffs der Formel (48), 1 : 2-Kobaltkomplex und 85 Teilen eines Farbstoffs der Formel (49),

c) 972,6 Teilen Wasser,

d) 25 Teilen Guarmehlderivat, 4 %-ig,

e) 0,5 Teilen eines Koazervierungsmittels, und

f) 0,5 Teilen eines Entschäumungsmittels,

die mit Essigsäure auf pH 7 gestellt ist, auf einem Foulard imprägniert und auf eine Flottenaufnahme von etwa 100 % abgequetscht.

Auf die so vorbehandelte Teppichware wird eine Druckpaste der folgenden Zusammensetzung aufgetragen

g) 2 Teile eines Farbstoffs der Formel

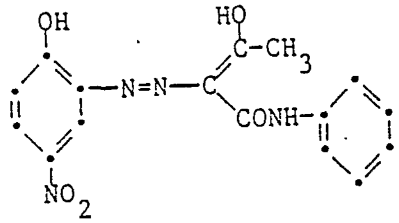

1 : 2-Kobaltkomplex

h) 2 Teile einer Mischung wie oben unter b),

i) 492 Teile Wasser,

j) 500 Teile Guarmehlderivat, 4%-ig,

k) 3 Teile eines Koazervierungsmittels, und

l) 1 Teil eines Entschäumungsmittels,

welche mit Zitronensäure auf pH 3,5 gestellt wird.

Die Ware wird 2 Minuten mit Sattdampf von 101 °C gedämpft, dann gespült und getrocknet. Man erhält ein gleichmässig und vollständig fixiertes grünes Druckmuster auf einem gleichmässig und vollständig fixierten bordeaux-farbigen Fond.

Gleich gute Resultate nach dem oben beschriebenen Verfahren von Foulardfärbung und Druck werden mit den folgenden Farbstoffen oder deren Mischungen erhalten.

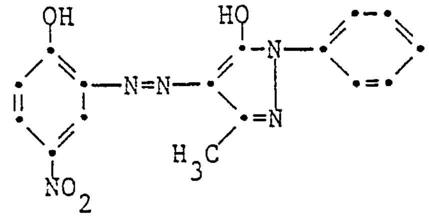

1 : 2-Kobaltkomplex

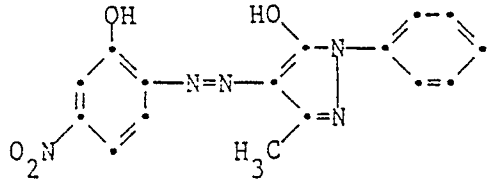

1 : 2-Kobaltkomplex

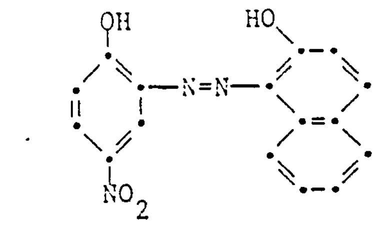

1 : 2-Kobaltkomplex

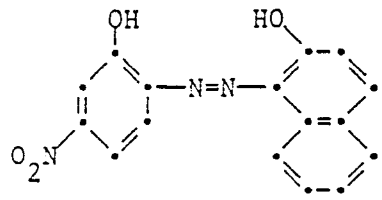

1 : 2-Kobaltkomplex

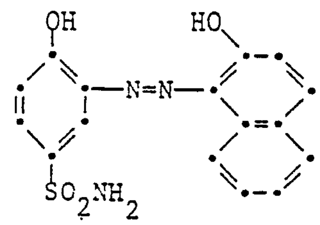

1 : 2-Chromkomplex

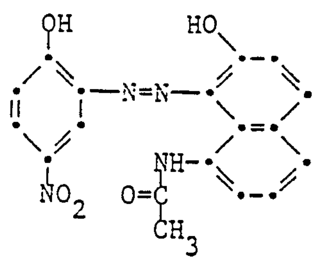

1 : 2-Chromkomplex

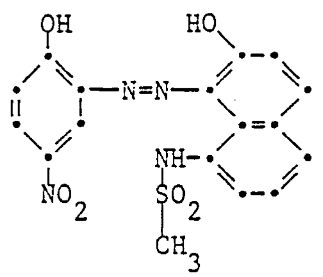

1 : 2-Chromkomplex

Beispiel 7

Ein Velours-Teppichboden aus Polyamid 6 oder 6.6 wird auf einem Jetbulker oder Foulard mit einer Flotte bestehend aus

a) 1 Teil eines synthetischen Waschmittels, und
b) 999 Teilen Wasser,

vorgenetzt, so dass eine Restfeuchtigkeit von 100 % bleibt.

Die so vorbehandelte Ware wird auf einem Farbauftraggerät imprägniert, mit einer Farbflotte, bestehend aus

c) 2 Teilen des Farbstoffes der Formel (12)
d) 0,5 Teilen des Farbstoffes der Formel

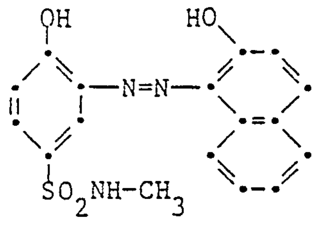

1 : 2-Kobaltkomplex

e) 0,3 Teilen einer Mischung wie in Beispiel 2, unter b),
f) 3 Teilen Guarmehlderivat,
g) 1,5 Teilen eines Koazervierungsmittels,
h) 1,5 Teilen eines Egalisiermittels,
i) 1,5 Teilen Ammoniumacetat,
j) X Teilen Essigsäure von 80 %, bis ein pH 5,5 erreicht ist, und
k) 989,7-X Teilen Wasser.

Der Farbauftrag beträgt 400 bis 500 %.

Nach dem Farbauftrag wird der Teppich 2 Minuten mit Sattdampf von 101 °C gedämpft, anschliessend gespült und getrocknet.

Man erhält einen mittelbraunen Teppichboden mit gleichmässiger, egaler Färbung, und mit Echtheiten, die den von der Automobilindustrie gestellten Anforderungen entsprechen.

Gleich gute Resultate nach dem oben beschriebenen Kontinue-Verfahren werden erhalten, wenn man die folgenden Farbstoffe oder deren Mischungen verwendet.

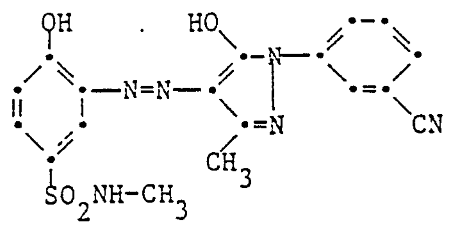

1 : 2-Chromkomplex

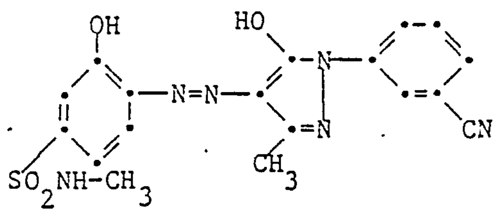

1 : 2-Chromkomplex

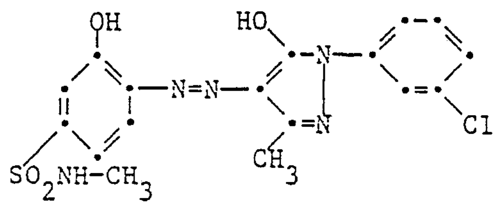

1 : 2-Chromkomplex

Beispiel 8

Ein Velours-Teppichboden aus Polyamid 6 oder 6.6 wird auf einem Jetbulker oder Foulard mit einer Flotte bestehend aus

a) 1 Teil eines synthetischen Waschmittels, und
b) 999 Teilen Wasser,

vorgenetzt, so dass eine Restfeuchtigkeit von 100 % bleibt.

Die so verbehandelte Ware wird auf einem Farbauftraggerät imprägniert, mit einer Farbflotte, bestehend aus

c) 1,5 Teilen eines Farbstoffs der Formel (12),
d) 1 Teil eines Farbstoffes der Formel (19),
e) 0,5 Teilen einer Mischung gleicher Teile der Farbstoffe

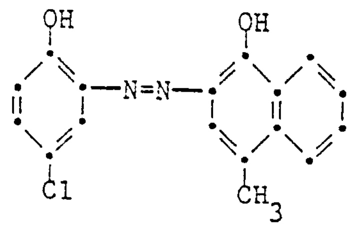

1 : 2-Chromkomplex

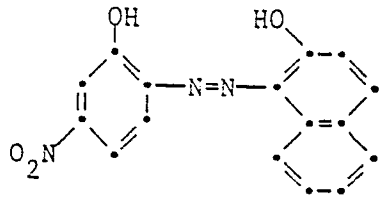

1 : 2-Chromkomplex

f) 3 Teilen Guarmehlderivat,
g) 1,5 Teilen eines Koazervierungsmittels,
h) 1,5 Teilen eines Egalisiermittels,
i) 1,5 Teilen Ammoniumacetat,
j) X Teilen Essigsäure von 80 %, bis ein pH 5,5 erreicht ist, und
k) 989,7-X Teilen Wasser.

Der Farbauftrag beträgt 400 bis 500 %.

Nach dem Farbauftrag wird der Teppich 2 Minuten mit Sattdampf von 101 °C gedämpft, anschliessend gespült und getrocknet.

Man erhält einen braunen Teppichboden mit gleichmässiger, egaler Färbung, und mit Echtheiten, die den von der Automobilindustrie gestellten Anforderungen entsprechen.

Beispiel 9

Ein Velours-Teppichboden aus Polyamid 6 oder 6.6 wird auf einem Jetbulker oder Foulard mit einer Flotte bestehend aus

a) 1 Teil eines Netzmittels, und
b) 999 Teilen Wasser,

vorgenetzt, so dass eine Restfeuchtigkeit von 60 % bleibt.

Die so vorbehandelte Teppichware wird mit einer verschäumten Farbflotte, bestehend aus

c) 1 Teil eines Farbstoffs der Formel (11),
d) 0,3 Teilen eines Farbstoffes der Formel (19),
e) 0,15 Teilen einer Mischung wie in Beispiel 2 unter b),
f) 1 Teil eines Verschäumungsmittels,
g) 1 Teil eines Schaumreglers,
h) X Teilen Mono-/Dinatriumphosphat, bis pH 7 erreicht ist, und
i) 996,9-X Teilen Wasser,

mit einem Verschäumungsgrad 1 : 8 und einem Auftrag von 180 % imprägniert und anschliessend 2 Minuten in Sattdampf von 101 °C gedämpft ; zuletzt wird gespült und getrocknet.

Man erhält einen Teppich mit einer gleichmässigen und egalen Färbung in einem Beige-Ton, deren Echtheiten den von der Automobilindustrie gestellten Anforderungen entsprechen.

Beispiel 10

Ein Velours-Teppichboden aus Polyamid 6 oder 6.6 wird auf einem Jetbulker oder Foulard mit einer Flotte bestehend aus

a) 1 Teil eines Netzmittels, und
b) 999 Teilen Wasser,

vorgenetzt, so dass eine Restfeuchtigkeit von 60 % bleibt.

Die so vorbehandelte Teppichware wird mit einer verschäumten Farbflotte, bestehend aus

c) 1 Teil eines Farbstoffs der Formel (12),

d) 0,25 Teilen eines Farbstoffes der Formel

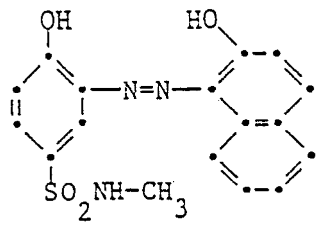

1 : 2-Kobaltkomplex

e) 0,15 Teilen einer Mischung der Farbstoffe der Formeln

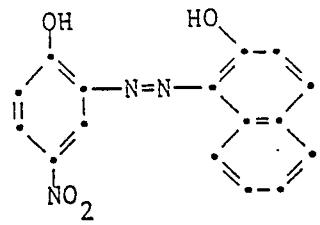

1 : 2-Chromkomplex

und

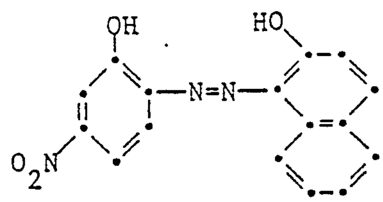

1 : 2-Chromkomplex

f) 1 Teil eines Verschäumungsmittels,
g) 1 Teil eines Schaumreglers,
h) X Teilen Mono-/Dinatriumphosphat, bis pH 7 erreicht ist, und
i) 996,9-X Teilen Wasser,

mit einem Verschäumungsgrad 1 : 8 und einem Auftrag von 180 % imprägniert und anschliessend 2 Minuten in Sattdampft von 101 °C gedämpft ; zuletzt wird gespült und getrocknet.

Man erhält einen Teppich mit einer gleichmässigen und egalen Färbung in einem Beige-Ton, deren Echtheiten den von der Automobilindustrie gestellten Anforderungen entsprechen.

Beispiel 11

Ein Velours-Teppichboden aus Polyamid 6 oder 6.6 wird ohne vorzunetzen mit einer verschäumten Farbflotte, bestehend aus

a) 2 Teilen eines Farbstoffs der Formel (12),
b) 0,5 Teilen eines Farbstoffs der Formel (32),
c) 0,3 Teilen einer Mischung wie in Beispiel 2, unter b),
d) 6 Teilen eines Verschäumungsmittels,
e) 4 Teilen eines Schaumstabilisators,
f) 1 Teil eines Schaumreglers,
g) X Teilen Mono-/Dinatriumphosphat, bis pH 7 erreicht ist, und
h) 986,2-X Teilen Wasser,

mit einem Verschäumungsgrad 1 : 20 und einem Auftrag von 80 % imprägniert und anschliessend 2 Minuten in Sattdampf von 101 °C gedämpft ; zuletzt wird gespült und getrocknet.

Man erhält einen Teppich mit einer gleichmässigen und egalen Färbung in einem Beige-Ton, deren Echtheiten den von der Automobilindustrie gestellten Anforderungen entsprechen.

Beispiel 12

Ein Velours- oder Schlingen-Teppichboden aus Polyamid 6 oder 6.6 von 350 bis 1 200 g/m² Gewicht

wird mit einer Paste bedruckt, die

a) 0,5 Teile eines Farbstoffes der Formel (13)
b) 1 Teil eines Farbstoffes der Formel (33)
c) 0,1 Teil Farbstoff der Formel (49)
d) 0,03 Teile des Farbstoffes, der Formel (48)
e) 494,4 Teile Wasser,
f) 500 Teile Guarmehlderivat, 4 %-ig,
g) 3 Teile eines Koazervierungsmittels, und
h) 1 Teil eines Entschäumungsmittels

enthält, und die mit Zitronensäure pH 3,5 gestellt wird.

Die bedruckte Ware wird 2 Minuten mit Sattdampf von 101 °C gedämpft, dann gespült und getrocknet.

Man erhält einen gleichmässig und vollständig fixierten Druck in Bordeaux-Nuance, mit scharfen Konturen und guten Echtheiten.

Beispiel 13

Ein Velours- oder Schlingen-Teppichboden aus Polyamid 6 oder 6.6 von 350 bis 1 200 g/m$^2$ Gewicht wird mit einer Klotzflotte, bestehend aus

a) 0,7 Teilen eines Farbstoffs der Formel (14), 1 : 2-Kobaltkomplex,
b) 0,7 Teilen einer Mischung bestehend aus 15 Teilen eines Farbstoffs der Formel (48), 1 : 2-Kobaltkomplex und 85 Teilen eines Farbstoffs der Formel (49),
c) 972,6 Teilen Wasser,
d) 25 Teilen Guarmehlderivat, 4 %-ig,
e) 0,5 Teilen eines Koazervierungsmittels, und
f) 0,5 Teilen eines Entschäumungsmittels,

die mit Essigsäure auf pH 7 gestellt ist, auf einem Foulard imprägniert und auf eine Flottenaufnahme von etwa 100 % abgequetscht.

Auf die so vorbehandelte Teppichware wird eine Druckpaste der folgenden Zusammensetzung aufgetragen

g) 2 Teile eines Farbstoffs der Formel

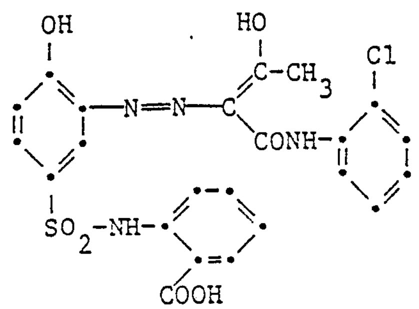

1 : 2-Kobaltkomplex

h) 2 Teile einer Mischung wie oben unter b),
i) 492 Teile Wasser,
j) 500 Teile Guarmehlderivat, 4 %-ig,
k) 3 Teile eines Koazervierungsmittels, und
l) 1 Teil eines Entschäumungsmittels,

welche mit Zitronensäure auf pH 3,5 gestellt wird.

Die Ware wird 2 Minuten mit Sattdampf von 101 °C gedämpft, dann gespült und getrocknet. Man erhält ein gleichmässig und vollständig fixiertes grünes Druckmuster auf einem gleichmässig und vollständig fixierten olive-farbigen Fond.

Beispiel 14

Ein flach- oder rund-gestricktes Teppichgarn aus Polyamid 6 oder 6.6 wird mit einer Klotzflotte folgender Zusammensetzung

a) 0,7 Teile des Farbstoffs der Formel (42),
b) 0,7 Teile Farbstoff der Formel (49),
c) 931,1 Teile Wasser,
d) 75 Teile Guarmehlderivat, 4 %-ig,
e) 1,5 Teile eines Koazervierungsmittels, und
f) 1 Teil eines Entschäumungsmittels,

die mit Essigsäure auf pH 7 gestellt ist, auf einem Foulard imprägniert und auf eine Flottenaufnahme von etwa 100 % abgequetscht. Das so vorbehandelte Gestrick wird mit einem Space-dye-Aggregat beidseitig überdruckt, mit einer Druckpaste bestehend aus

g) 2 Teilen eines Farbstoffs der Formel (42),
h) 2 Teilen Farbstoff der Formel (49),
i) 845 Teilen Wasser,
j) 150 Teilen Guarmehlderivat, 4 %-ig, und
k) 1 Teil eines Entschäumungsmittels,

die mit Zitronensäure auf pH 3,5 gestellt ist.

Das so vorgefärbte und anschliessend überdruckte Garngestrick wird 2 Minuten in Sattdampf von 101 °C gedämpft, und anschliessend gespült, getrocknet und entstrickt. Man erhält ein Teppichgarn mit Space-dye-Effekt, wobei das Garn einen gleichmässigen hellblauen Fond und gleichmässig und vollständig fixierte dunkelblaue Druckstellen aufweist.

Beispiel 15

Ein Velours-Teppichboden aus Polyamid 6 oder 6.6 wird auf einem Jetbulker oder Foulard mit einer Flotte bestehend aus

a) 1 Teil eines synthetischen Waschmittels, und
b) 999 Teilen Wasser,

vorgenetzt, so dass eine Restfeuchtigkeit von 100 % bleibt.

Die so vorbehandelte Ware wird auf einem Farbauftraggerät imprägniert, mit einer Farbflotte, bestehend aus

c) 2 Teilen eines Farbstoffs der Formel (15),
d) 0,5 Teilen eines Farbstoffs der Formel (34),
e) 0,3 Teilen einer Mischung wie in Beispiel 2, unter b),
f) 3 Teilen Guarmehlderivat,
g) 1,5 Teilen eines Koazervierungsmittels,
h) 1,5 Teilen eines Egalisierungsmittels,
i) 1,5 Teilen Ammoniumacetat,
j) X Teilen Essigsäure von 80 %, bis ein pH 5,5 erreicht ist, und
k) 989,7-X Teilen Wasser.

Der Farbauftrag beträgt 400 bis 500 %.

Nach dem Farbauftrag wird der Teppich 2 Minuten mit Sattdampf von 101 °C gedämpft, anschliessend gespült und getrocknet.

Man erhält einen mittelbraunen Teppichboden mit gleichmässiger, egaler Färbung, und mit Echtheiten, die den von der Automobilindustrie gestellten Anforderungen entsprechen.

Beispiel 16

Ein Velours-Teppichboden aus Polyamid 6 oder 6.6 wird auf einem Jetbulker oder Foulard mit einer Flotte bestehend aus

a) 1 Teil eines Netzmittels, und
b) 999 Teilen Wasser,

vorgenetzt, so dass eine Restfeuchtigkeit von 60 % bleibt.

Die so vorbehandelte Teppichware wird mit einer verschäumten Farbflotte, bestehend aus

c) 1 Teil eines Farbstoffs der Formel (16),
d) 0,25 Teilen eines Farbstoffs der Formel (33),
e) 0,15 Teilen einer Mischung wie in Beispiel 2, unter b),

f) 1 Teil eines Verschäumungsmittels,
g) 1 Teil eines Schaumreglers,
h) X Teilen Mono-/Dinatriumphosphat, bis pH 7 erreicht ist, und
i) 996,9-X Teilen Wasser,

mit einem Verschäumungsgrad 1 : 8 und einem Auftrag von 180 % imprägniert und anschliessend 2 Minuten in Sattdampf von 101 °C gedämpft ; zuletzt wird gespült und getrocknet.

Man erhält einen Teppich mit einer gleichmässigen und egalen Färbung in einem Beige-Ton, deren Echtheiten den von der Automobilindustrie gestellten Anforderungen entsprechen.

Beispiel 17

Ein Velours- oder Schlingen-Teppichboden aus Polyamid 6 oder 6.6 von 350 bis 1 200 g/m² Gewicht wird mit einer Paste bedruckt, die

a) 0,3 Teile des Farbstoffes der Formel (22),
b) 0,2 Teile des Farbstoffes der Formel

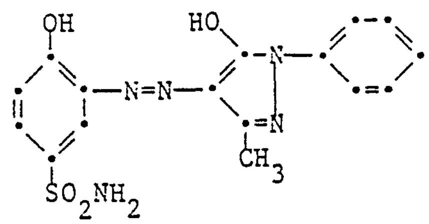

1 : 2-Chromkomplex

c) 1,0 Teil des Farbstoffes der Formel (34),

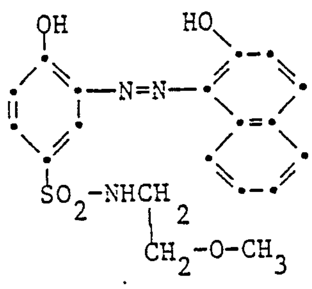

1 : 2-Kobaltkomplex

d) 0,1 Teile eines Farbstoffs, erhalten durch Kobaltierung der nachstehenden Farbstoffe zum 1 : 2-Kobaltkomplex

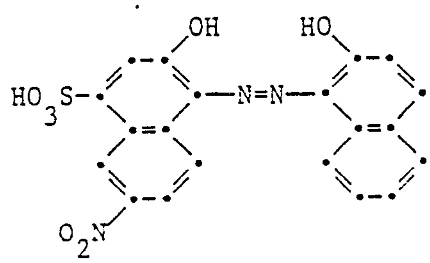

und

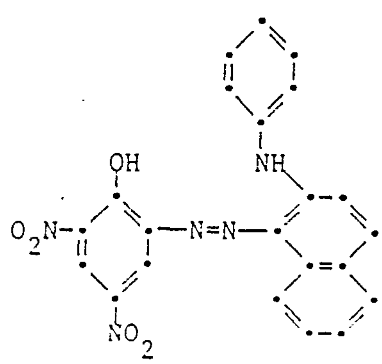

e) 494,4 Teile Wasser
f) 500 Teile Guarmehlderivat, 4 %-ig,
g) 3 Teile eines Koazervierungsmittels, und
h) 1 Teil eines Entschäumungsmittels

enthält, und die mit Ameisensäure auf pH 3,5 gestellt wird.

Die bedruckte Ware wird 2 Minuten mit Sattdampf von 101 °C gedämpft, dann gespült und getrocknet.

Man erhält einen gleichmässig und vollständig fixierten Druck in Bordeaux-Nuance, mit scharfen Konturen und guten Echtheiten.

Beispiel 18

Ein Velours- oder Schlingen-Teppichboden aus Polyamid 6 oder 6.6 von 350 bis 1 200 g/m² Gewicht wird mit einer Klotzflotte, bestehend aus

a) 0,7 Teilen des Farbstoffes der Formel (24)

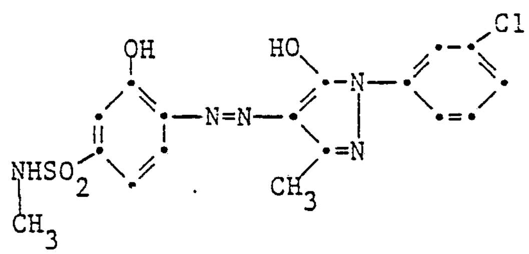

1 : 2-Chromkomplex

b) 0,7 Teilen einer Mischung bestehend aus 15 Teilen eines Farbstoffs der Formel (48), 1 : 2-Kobaltkomplex und 85 Teilen eines Farbstoffs der Formel (49),
c) 972,6 Teilen Wasser,
d) 25 Teilen Guarmehlderivat, 4 %-ig,
e) 0,5 Teilen eines Koazervierungsmittels, und
f) 0,5 Teilen eines Entschäumungsmittels,

die mit Essigsäure auf pH 7 gestellt ist, auf einem Foulard imprägniert und auf eine Flottenaufnahme von etwa 100 % abgequetscht.

Auf die so vorbehandelte Teppichware wird eine Druckpaste der folgenden Zusammensetzung aufgetragen

g) 2 Teile eines Farbstoffs der Formel (15)

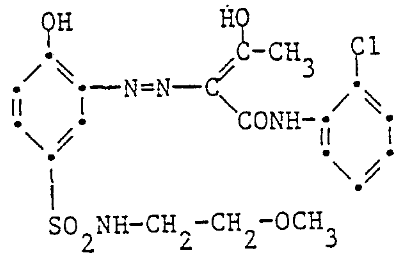

1 : 2-Kobaltkomplex

h) 2 Teile des Farbstoffes der Formel (38),
i) 492 Teile Wasser,
j) 500 Teile Guarmehlderivat, 4 %-ig,
k) 3 Teile eines Koazervierungsmittels, und
l) 1 Teil eines Entschäumungsmittels,

welche mit Zitronensäure auf pH 3,5 gestellt wird.

Die Ware wird 2 Minuten mit Sattdampf von 101 °C gedämpft, dann gespült und getrocknet. Man

erhält ein gleichmässig und vollständig fixiertes grünes Druckmuster auf einem gleichmässig und vollständig fixierten bordeaux-farbigen Fond.

Beispiel 19

Ein flach- oder rund-gestricktes Teppichgarn aus Polyamid 6 oder 6.6 wird mit einer Klotzflotte folgender Zusammensetzung

a) 0,7 Teile des Farbstoffs der Formel (43),
b) 0,7 Teile des Farbstoffes der Formel (37)

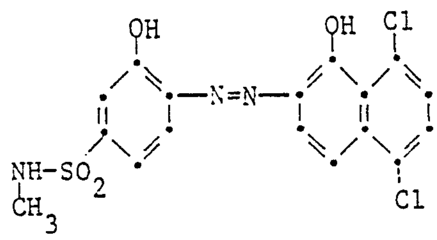

1 : 2-Chromkomplex

c) 931,1 Teile Wasser,
d) 75 Teile Guarmehlderivat, 4 %-ig,
e) 1,5 Teil eines Koazervierungsmittels, und
f) 1 Teil eines Entschäumungsmittels,

die mit Essigsäure auf pH 7 gestellt ist, auf einem Foulard imprägniert und auf eine Flottenaufnahme von etwa 100 % abgequetscht. Das so vorbehandelte Gestrick wird mit einem Space-dye-Aggregat beidseitig überdruckt, mit einer Druckpaste bestehend aus

g) 2 Teilen eines Farbstoffs der Formel (41),
h) 2 Teilen des Farbstoffes (36),
i) 845 Teilen Wasser,
j) 150 Teilen Guarmehlderivat, 4 %-ig, und
k) 1 Teil eines Entschäumungsmittels,

die mit Zitronensäure auf pH 3,5 gestellt ist.

Das so vorgefärbte und anschliessend überdruckte Garngestrick wird 2 Minuten in Sattdampf von 101 °C gedämpft, und anschliessend gespült, getrocknet und entstrickt. Man erhält ein Teppichgarn mit Space-dye-Effekt, wobei das Garn einen gleichmässigen hellblauen Fond und gleichmässig und vollständig fixierte dunkelblaue Druckstellen aufweist.

Beispiel 20

Ein Velours-Teppichboden aus Polyamid 6 oder 6.6 wird auf einem Jetbulker oder Foulard mit einer Flotte bestehend aus

a) 1 Teil eines synthetischen Waschmittels, und
b) 999 Teilen Wasser,

vorgenetzt, so dass eine Restfeuchtigkeit von 100 % bleibt.

Die so vorbehandelte Ware wird auf einem Farbauftraggerät imprägniert, mit einer Farbflotte, bestehend aus

c) 2 Teilen des Farbstoffes der Formel (16)
d) 0,5 Teilen des Farbstoffes der Formel (26),
e) 0,3 Teilen einer Mischung wie in Beispiel 2, unter b),
f) 3 Teilen Guarmehlderivat,
g) 1,5 Teilen eines Koazervierungsmittels,
h) 1,5 Teilen eines Egalisiermittels,
i) 1,5 Teilen Ammoniumacetat,
j) X Teilen Essigsäure von 80 %, bis ein pH 5,5 erreicht ist, und
k) 989,7-X Teilen Wasser.

Der Farbauftrag beträgt 400 bis 500 %.

Nach dem Farbauftrag wird der Teppich 2 Minuten mit Sattdampf von 101 °C gedämpft, anschliessend gespült und getrocknet.

Man erhält einen mittelbraunen Teppichboden mit gleichmässiger, egaler Färbung, und mit Echtheiten, die den von der Automobilindustrie gestellten Anforderungen entsprechen.

Beispiel 21

Ein Velours-Teppichboden aus Polyamid 6 oder 6.6 wird auf einem Jetbulker oder Foulard mit einer Flotte bestehend aus

a) 1 Teil eines synthetischen Waschmittels, und
b) 999 Teilen Wasser,

vorgenetzt, so dass eine Restfeuchtigkeit von 100 % bleibt.

Die so vorbehandelte Ware wird auf einem Farbauftraggerät imprägniert, mit einer Farbflotte, bestehend aus

c) 1,5 Teilen eines Farbstoffs der Formel (13),
d) 1 Teil eines Farbstoffes der Formel (23),
e) 0,5 Teileneines Farbstoffs der Formel (42),
f) 3 Teilen Guarmehlderivat,
g) 1,5 Teilen eines Koazervierungsmittels,
h) 1,5 Teilen eines Egalisiermittels,
i) 1,5 Teilen Ammoniumacetat,
j) X Teilen Essigsäure von 80 %, bis ein pH 5,5 erreicht ist, und
k) 989,7-X Teilen Wasser.

Der Farbauftrag beträgt 400 bis 500 %.

Nach dem Farbauftrag wird der Teppich 2 Minuten mit Sattdampf von 101 °C gedämpft, anschliessend gespült und getrocknet.

Man erhält einen mittelbraunen Teppichboden mit gleichmässiger, egaler Färbung, und mit Echtheiten, die den von der Automobilindustrie gestellten Anforderungen entsprechen.

Beispiel 22

Ein Velours-Teppichboden aus Polyamid 6 oder 6.6 wird auf einem Jetbulker oder Foulard mit einer Flotte bestehend aus

a) 1 Teil eines synthetischen Waschmittels, und
b) 999 Teilen Wasser,

vorgenetzt, so dass eine Restfeuchtigkeit von 100 % bleibt.

Die so vorbehandelte Ware wird auf einem Farbauftraggerät imprägniert, mit einer Farbflotte, bestehend aus

c) 1,5 Teilen eines Farbstoffs der Formel (18),
d) 1 Teil eines Farbstoffes der Formel (30),
e) 0,5 Teilen einer Mischung gleicher Teile des Farbstoffes

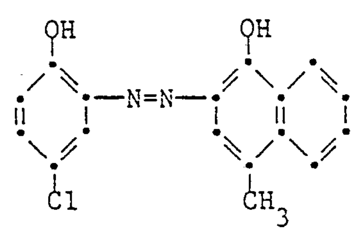

1 : 2-Chromkomplex

und des Farbstoffes der Formel (38),

f) 3 Teilen Guarmehlderivat,
g) 1,5 Teilen eines Koazervierungsmittels,
h) 1,5 Teilen eines Egalisiermittels,
i) 1,5 Teilen Ammoniumacetat,
j) X Teilen Essigsäure von 80 %, bis ein pH 5,5 erreicht ist, und
k) 989,7-X Teilen Wasser.

Der Farbauftrag beträgt 400 bis 500 %.

Nach dem Farbauftrag wird der Teppich 2 Minuten mit Sattdampf von 101 °C gedämpft, anschliessend gespült und getrocknet.

Man erhält einen braunen Teppichboden mit gleichmässiger, egaler Färbung, und mit Echtheiten, die den von der Automobilindustrie gestellten Anforderungen entsprechen.

Beispiel 23

Ein Velours-Teppichboden aus Polyamid 6 oder 6.6 wird auf einem Jetbulker oder Foulard mit einer Flotte bestehend aus

a) 1 Teil eines Netzmittels, und
b) 999Teilen Wasser,

vorgenetzt, so dass eine Restfeuchtigkeit von 60 % bleibt.

Die so vorbehandelte Teppichware wird mit einer verschäumten Farbflotte, bestehend aus

c) 1 Teil eines Farbstoffs der Formel (18),
d) 0,3 Teilen eines Farbstoffes der Formel (19),
e) 0,15 Teilen einer Mischung wie in Beispiel 2 unter b),
f) 1 Teil eines Verschäumgsmittels,
g) 1 Teil eines Schaumreglers,
h) X Teilen Mono-/Dinatriumphosphat, bis pH 7 erreicht ist, und
i) 996,9-X Teilen Wasser,

mit einem Verschäumungsgrad 1 : 8 und einem Auftrag von 180 % imprägniert und anschliessend 2 Minuten in Sattdampf von 101 °C gedämpft ; zuletzt wird gespült und getrocknet.

Man erhält einen Teppich mit einer gleichmässigen und egalen Färbung in einem Beige-Ton, deren Echtheiten den von der Automobilindustrie gestellten Anforderungen entsprechen.

Beispiel 24

Ein Velours-Teppichboden aus Polyamid 6 oder 6.6 wird auf einem Jetbulker oder Foulard mit einer Flotte bestehend aus

a) 1 Teil eines Netzmittels, und
b) 999 Teilen Wasser,

vorgenetzt, so dass eine Restfeuchtigkeit von 60 % bleibt.

Die so vorbehandelte Teppichware wird mit einer verschäumten Farbflotte, bestehend aus

c) 1 Teil eines Farbstoffs der Formel (31),
d) 0,25 Teilen eines Farbstoffes der Formel (33),
e) 0,15 Teilen einer Mischung gleicher Teile der Farbstoffe der Formeln

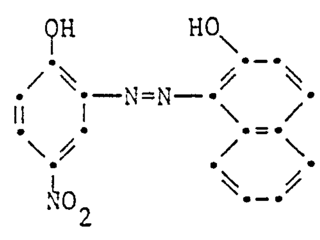

1 : 2-Chromkomplex

und

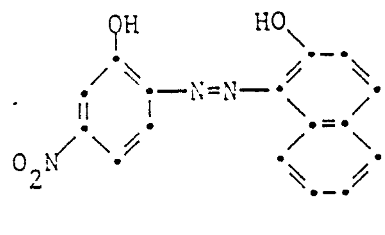

1 : 2-Chromkomplex

f) 1 Teil eines Verschäumungsmittels,

g) 1 Teil eines Schaumreglers,
h) X Teilen Mono-/Dinatriumphosphat, bis pH 7 erreicht ist, und
i) 996,9-X Teilen Wasser,

mit einem Verschäumungsgrad 1 : 8 und einem Auftrag von 180 % imprägniert und anschliessend 2 Minuten in Sattdampft von 101 °C gedämpft ; zuletzt wird gespült und getrocknet.

Man erhält einen Teppich mit einer gleichmässigen und egalen Färbung in einem Beige-Ton, deren Echtheiten den von der Automobilindustrie gestellten Anforderungen entsprechen.

Beispiel 25

Ein Velours-Teppichboden aus Polyamid 6 oder 6.6 wird ohne vorzunetzen mit einer verschäumten Farbflotte, bestehend aus

a) 2 Teilen eines Farbstoffs der Formel (13),
b) 0,25 Teilen eines Farbstoffs der Formel (33),
c) 0,25 Teilen eines Farbstoffs der Formel (34),
d) 0,3 Teilen einer Mischung wie in Beispiel 2, unter b),
e) 6 Teilen eines Verschäumungsmittels,
f) 4 Teilen eines Schaumstabilisators,
g) 1 Teil eines Schaumreglers,
h) X Teilen Mono-/Dinatriumphosphat, bis pH 7 erreicht ist, und
i) 986,2-X Teilen Wasser,

mit einem Verschäumungsgrad 1 : 20 und einem Auftrag von 80 % imprägniert und anschliessend 2 Minuten in Sattdampf von 101 °C gedämpft ; zuletzt wird gespült und getrocknet.

Man erhält einen Teppich mit einer gleichmässigen und egalen Färbung in einem Beige-Ton, deren Echtheiten den von der Automobilindustrie gestellten Anforderungen entsprechen.

**Patentansprüche**

1. Verfahren zum Färben oder Bedrucken von synthetischen Polyamidfasern nach einem Schnellfixierverfahren, dadurch gekennzeichnet, dass man Farbstoffe oder Mischungen aus Farbstoffen der Formeln

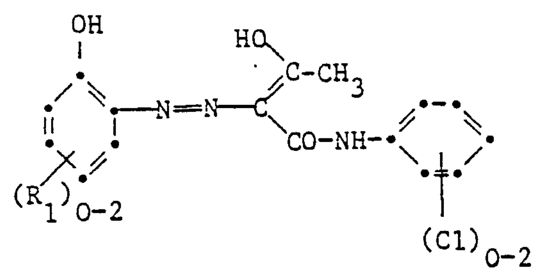

(1),

1 : 2-Kobaltkomplex

worin $(R_1)_{0-2}$ für 0 bis 2 Substituenten $R_1$ steht, die unabhängig voneinander $C_1$-$C_4$-Alkyl, $C_1$-$C_4$-Alkoxy, Halogen, Nitro, Sulfamoyl, N-$C_{1-4}$-Alkylsulfamoyl, N-$C_{1-2}$-Alkoxy-$C_{1-2}$-alkylsulfamoyl, Phenylaminosulfonyl, Carboxyphenylaminosulfonyl, $C_{1-4}$-Alkylsulfonyl oder Acetylamino sein können ;

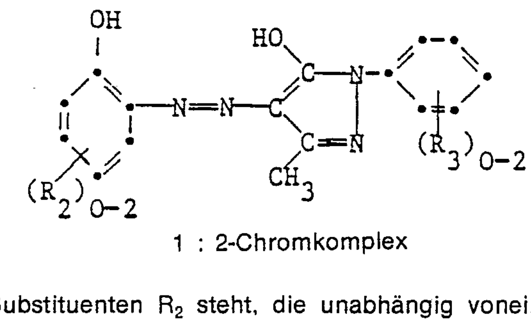

(2),

1 : 2-Chromkomplex

worin $(R_2)_{0-2}$ für 0 bis 2 Substituenten $R_2$ steht, die unabhängig voneinander $C_{1-4}$-Alkyl, $C_{1-4}$-Alkoxy, Halogen, Nitro, Sulfamoyl, N-$C_{1-4}$-Alkylsulfamoyl, N-$C_{1-2}$-Alkoxy-$C_{1-3}$-alkylsulfamoyl, Phenylaminosulfo-

nyl, Carboxyphenylaminosulfonyl, $C_{1-4}$-Alkylsulfonyl oder Acetylamino sein können, und $(R_3)_{0-2}$ für 0- bis 2 Substituenten $R_3$ steht, die unabhängig voneinander Halogen, $C_{1-4}$-Alkyl, Cyan oder Sulfamoyl sein können ; 1 : 2-Kobaltkomplexe der Farbstoffe der Formel (2), worin $R_2$ die gleiche Bedeutung hat wie in den 1 : 2-Chromkomplexen und $(R_3)_{0-2}$ für 0 bis 2 Substituenten $R_3$ steht, die unabhängig voneinander Halogen, Cyan oder Sulfamoyl sein können ;

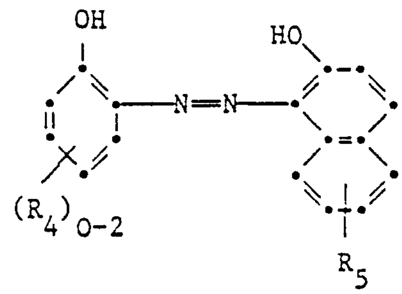

(3),

1 : 2-Kobalt- oder 1 : 2-Chromkomplex

worin $R_4$ die gleiche Bedeutung hat wie $R_1$ in Formel (1), und $R_5$ Wasserstoff, Acetylamino, Methoxycarbonylamino oder Methylsulfonylamino ist ;

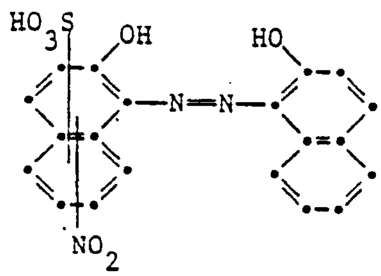

(4),

1 : 2-Chromkomplex

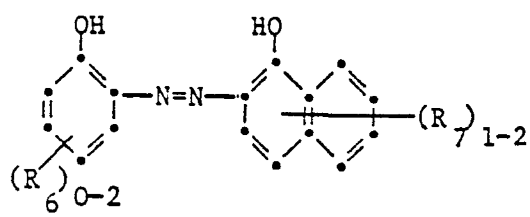

(5),

1 : 2-Chrom- oder 1 : 2-Kobaltkomplex

worin $R_6$ die gleiche Bedeutung hat wie $R_1$ in Formel (1), und $(R_7)_{1-2}$ für 1 bis 2 Substituenten $R_7$ steht, die unabhängig voneinander Halogen, Methyl, Methoxy oder Sulfo sein können, oder worin 2 benachbarte Substituenten $R_7$ ein geschlossenes Brückenglied $-SO_2-CH_2-O-$ bilden können ;

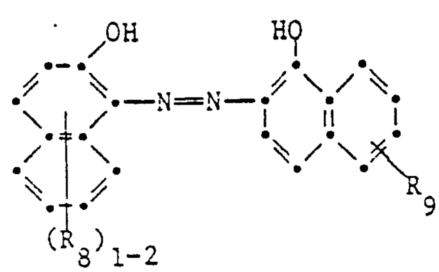

(6),

1 : 2-Kobalt- oder 1 : 2-Chromkomplex

worin $(R_8)_{1-2}$ für 1 bis 2 Substituenten $R_8$ steht, die unabhängig voneinander Sulfo oder Nitro sein

können und $R_9$ Wasserstoff oder Hydroxy ist ;

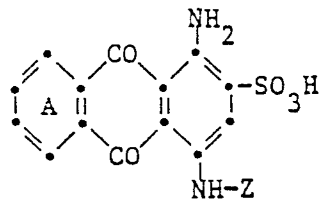

(7),

worin Z den Rest der Formel

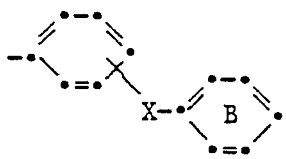

bedeutet, worin X die Gruppe $—O—SO_2—$, $—NH—SO_2—$ oder —NH—CO— ist, der Benzolring A durch Halogen substituiert sein kann, und der Benzolring B durch Halogen, $C_{1-4}$-Alkyl, $C_{1-4}$-Alkoxy, β-Hydroxyäthoxy, β-Methoxyäthoxy, β-(β'-Methoxy-äthoxy)-äthoxy oder β-(β'-Aethoxy-äthoxy)-äthoxy substituiert sein kann ;

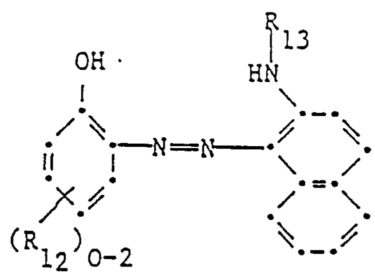

(8),

1 : 2-Kobaltkomplex

worin $R_{12}$ die gleiche Bedeutung hat wie $R_1$ in Formel (1), und $R_{13}$ Wasserstoff oder Phenyl ist ;

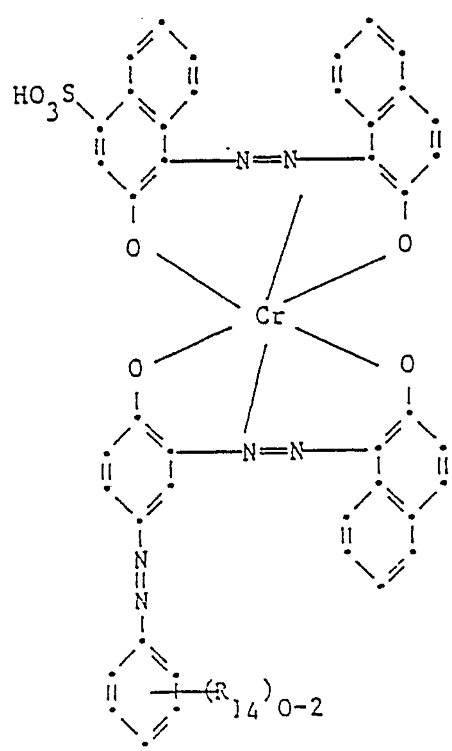

(9),

worin $(R_{14})_{0-2}$ für 0 bis 2 Substituenten $R_{14}$ steht, die unabhängig voneinander $C_{1-4}$-Alkyl, $C_{1-4}$-Alkoxy, Halogen, Carboxy oder Sulfo sein können ; und

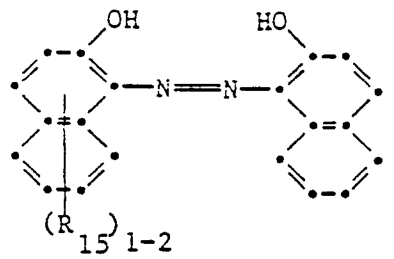

1 : 1-Chromkomplex

+

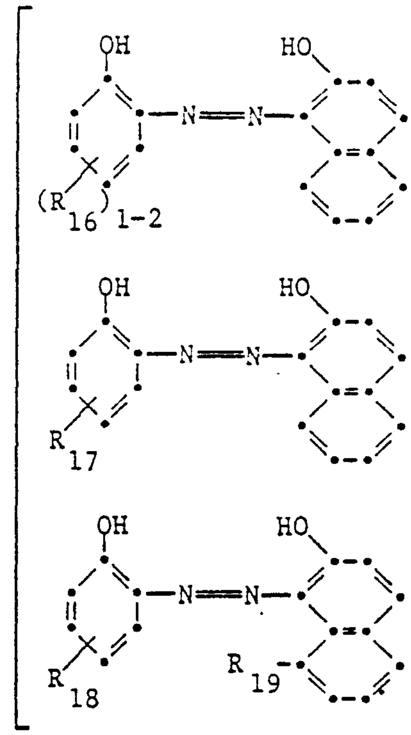

(10),

1 : 2-Chrommischkomplex

worin $(R_{15})_{1-2}$ für 1 bis 2 Substituenten $R_{15}$ steht, die unabhängig voneinander Sulfo oder Nitro sein können, $(R_{16})_{1-2}$ für 1 bis 2 Substituenten $R_{16}$ steht, die unabhängig voneinander Nitro, Halogen, Methyl oder Acetylamino sein können, $R_{17}$ die gleiche Bedeutung hat wie $R_{16}$, unabhängig von diesem, $R_{18}$ die gleiche Bedeutung hat wie $R_{16}$, unabhängig von diesem, und $R_{19}$ Acetylamino, Methoxycarbonylamino, Aethoxycarbonylamino, Methylsulfonylamino oder N,N-Dimethylaminosulfonyl ist ; 1 : 2-Kobaltmischkomplexe der Farbstoffe der Formeln (2) und (3) oder (4) und (8) ; im Kontinuefärbeverfahren oder Druckverfahren verwendet, und die Färbungen oder Drucke durch Dämpfen von weniger als 3 Minuten Dauer fixiert, wobei die Farbstoffe zu mindestens 95 % fixiert werden.

2. Verfahren gemäss Anspruch 1, dadurch gekennzeichnet, dass man Farbstoffe oder Mischungen aus Farbstoffen der Formeln

(1), 1 : 2 Kobaltkomplex, worin $R_1$ Nitro, Sulfamoyl, N-Methylsulfamoyl, Methylsulfonyl, Carboxyphenylaminosulfonyl oder N-β-Methoxyäthylsulfamoyl ist ;

(2), 1 : 2-Chromkomplex, worin $R_2$ Chlor, Nitro, Sulfamoyl oder N-Methylsulfamoyl, und $R_3$ Chlor, Methyl oder Sulfamoyl ist ;

(2), 1 : 2-Kobaltkomplex, worin $R_2$ Chlor, Nitro, Sulfamoyl oder N-Methylsulfamoyl und $R_3$ Chlor, Cyan oder Sulfamoyl ist ;

(3), 1 : 2-Kobalt- oder 1 : 2-Chromkomplex, worin $R_4$ Methyl, Methoxy, Chlor, Nitro, Sulfamoyl, N-$C_{1-3}$-Alkylsulfamoyl, N-β-Methoxyäthylsulfamoyl, Phenylaminosulfonyl, Methylsulfonyl oder Acetylamino, und $R_5$ Wasserstoff, Acetylamino, Methoxycarbonylamino oder Methylsulfonylamino ist ;

(4), 1 : 2-Chromkomplex ;

(5), 1 : 2-Chrom- oder 1 : 2-Kobaltkomplex, worin $R_6$ Nitro, Chlor, Sulfamoyl, N-Methyl- oder N-Aethylsulfamoyl, und $R_7$ Chlor, Methyl, Methoxy oder Sulfo ist, oder worin 2 benachbarte Substituenten $R_7$ ein geschlossenes Brückenglied $-SO_2-CH_2-O-$ bilden können ;

(6), 1 : 2-Kobalt- oder 1 : 2-Chromkomplex, worin $R_8$ die in Anspruch 1 angegebene Bedeutung hat, und $R_9$ Wasserstoff ist ;

(7), worin X die unter Formel (7) angegebene Bedeutung hat, der Benzolring A unsubstituiert ist, und der Benzolring B durch Methyl oder Methoxy substituiert sein kann ;

(8), 1 : 2-Kobaltkomplex, worin $R_{12}$ Methoxy, Chlor, Nitro oder Sulfamoyl ist ;

(9), worin $R_{14}$ Methyl, Methoxy, Aethoxy, Chlor, Carboxy oder Sulfo ist ;

(10), 1 : 2-Chrommischkomplex, worin $R_{15}$ die in Anspruch 1 angegebene Bedeutung hat, $R_{16}$, $R_{17}$ und $R_{18}$ unabhängig voneinander Nitro, Chlor, Methyl oder Acetylamino sind, und $R_{19}$ die in Anspruch 1

angegebene Bedeutung hat ; oder 1 : 2-Kobaltmischkomplexe der Farbstoffe der Formeln (2) und (3) oder (4) und (8) ; verwendet.

3. Verfahren gemäss Anspruch 2, dadurch gekennzeichnet, dass man Farbstoffe oder Mischungen aus Farbstoffen der Formeln

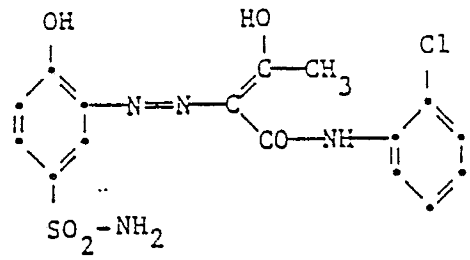

(11),

1 : 2-Kobaltkomplex

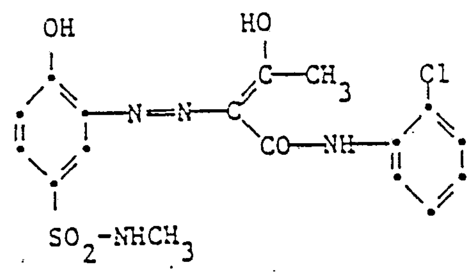

(12),

1 : 2-Kobaltkomplex

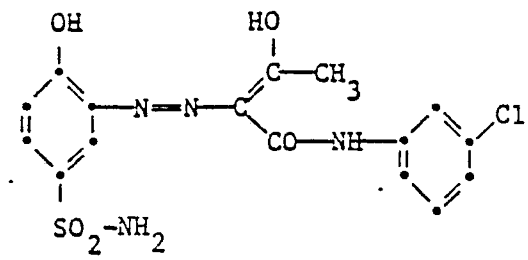

(13),

1 : 2-Kobaltkomplex

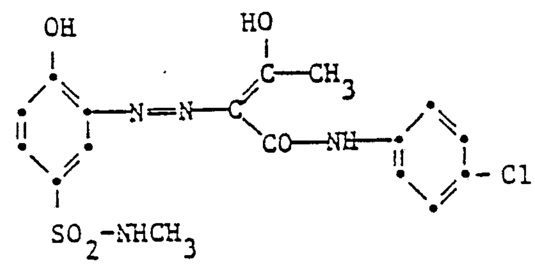

(14),

1 : 2-Kobaltkomplex

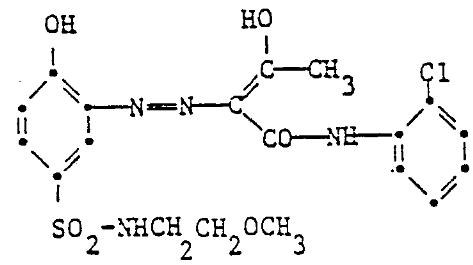

(15),

1 : 2-Kobaltkomplex

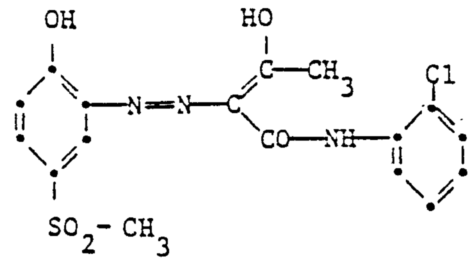

(16),

1 : 2-Kobaltkomplex

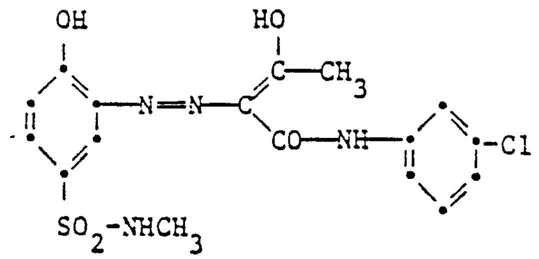

(17),

1 : 2-Kobaltkomplex

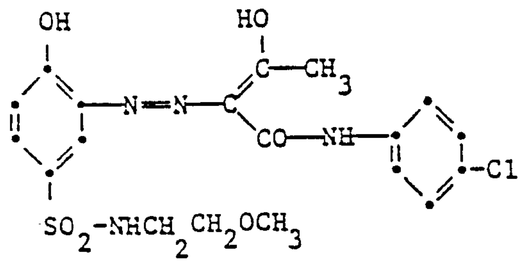

(18),

1 : 2-Kobaltkomplex

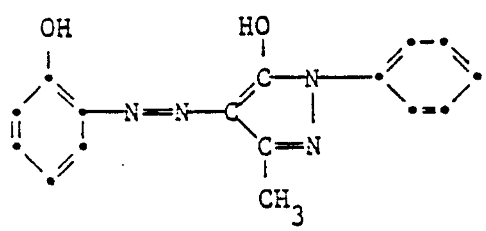

(19),

1 : 2-Chromkomplex

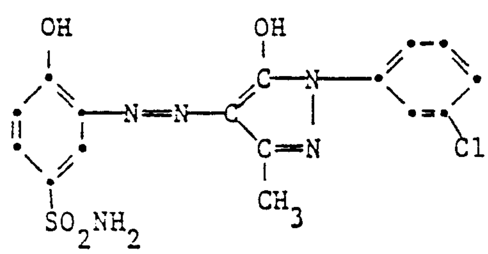

(20),

1 : 2-Kobaltkomplex

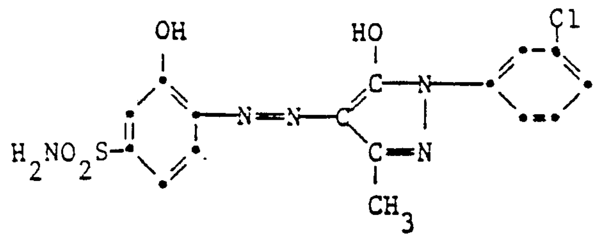

(21),

1 : 2-Chromkomplex

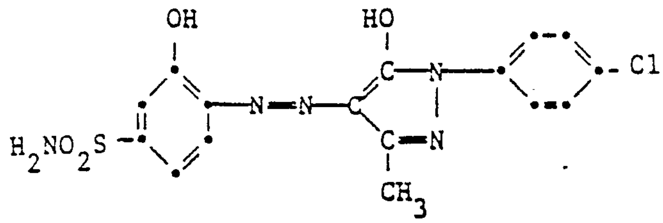

(22),

1 : 2-Chromkomplex

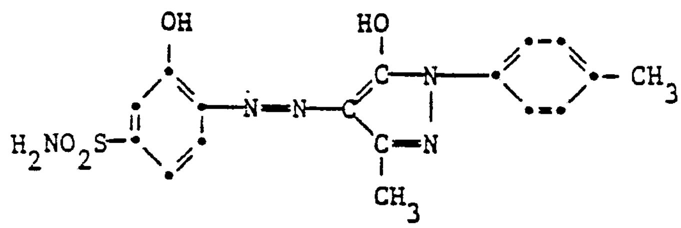

(23),

1 : 2-Chromkomplex

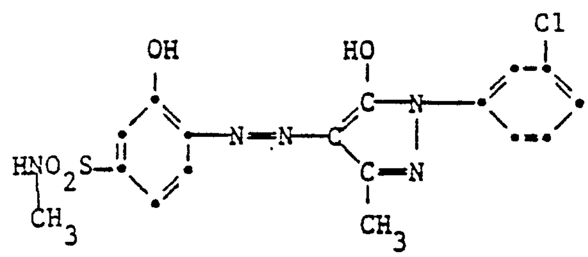

(24),

1 : 2-Chromkomplex

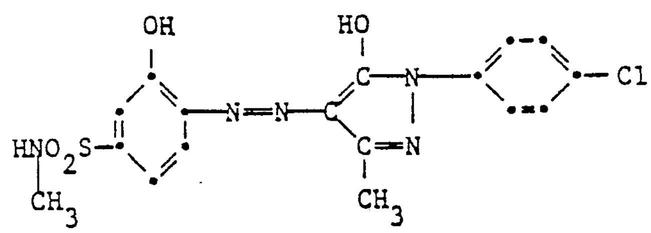

(25),

1 : 2-Chromkomplex

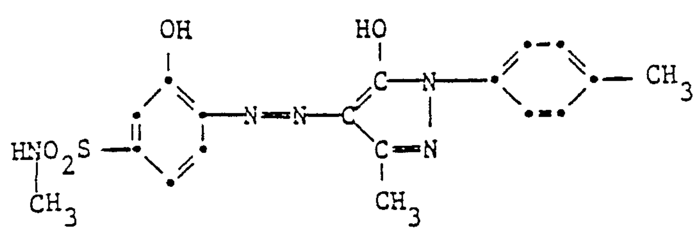

(26),

1 : 2-Chromkomplex

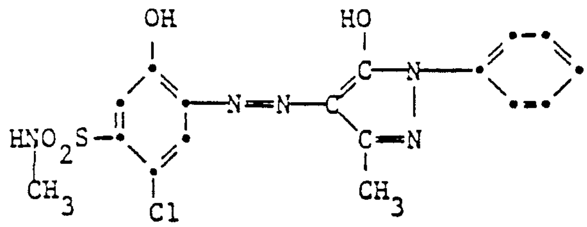

(27),

1 : 2-Chromkomplex

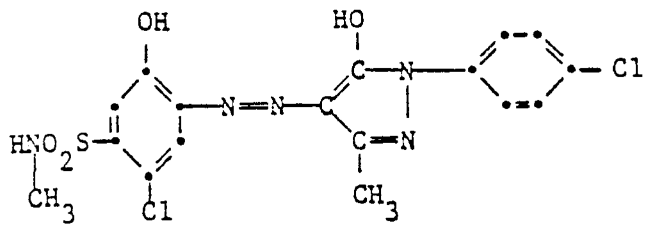

(28),

1 : 2-Chromkomplex

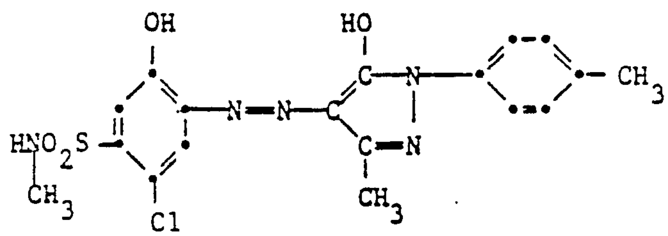

(29),

1 : 2-Chromkomplex

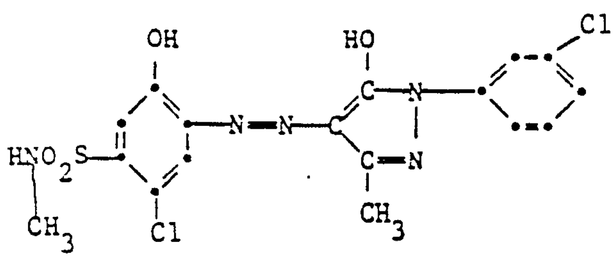

(30),

1 : 2-Chromkomplex

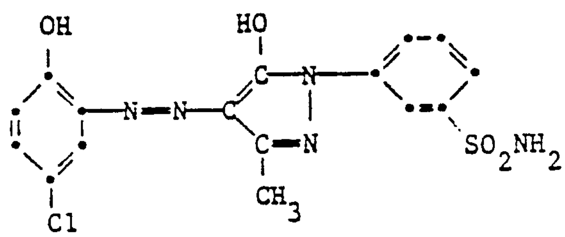

(31),

1 : 2-Chromkomplex

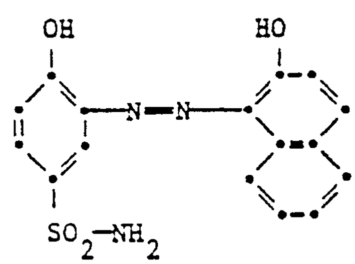

(32),

1 : 2-Kobaltkomplex

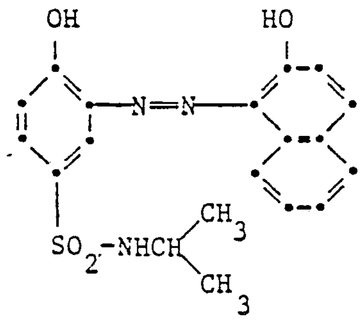

(33),

1 : 2-Kobaltkomplex

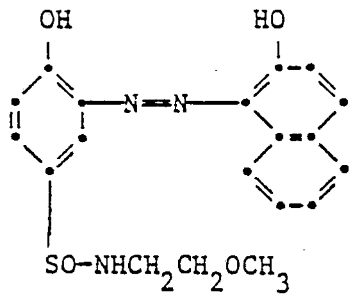

(34),

1 : 2-Kobaltkomplex

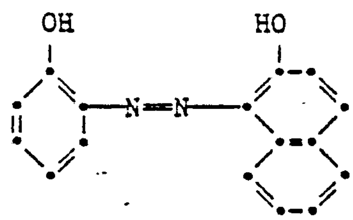

(35),

1 : 2-Kobaltkomplex

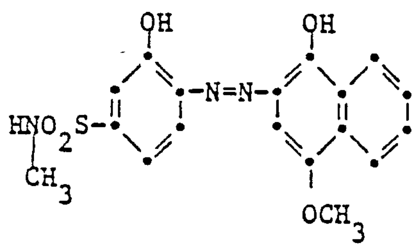

(36),

1 : 2-Chromkomplex

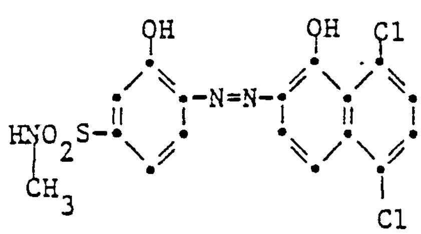

(37),

1 : 2-Chromkomplex

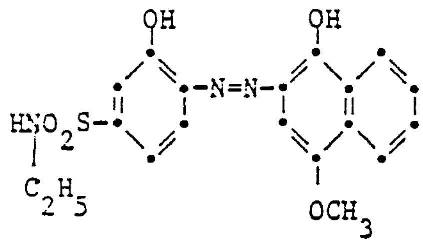

(38),

1 : 2-Chromkomplex

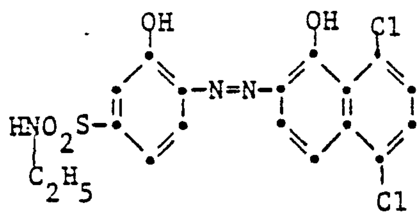

(39),

1 : 2-Chromkomplex

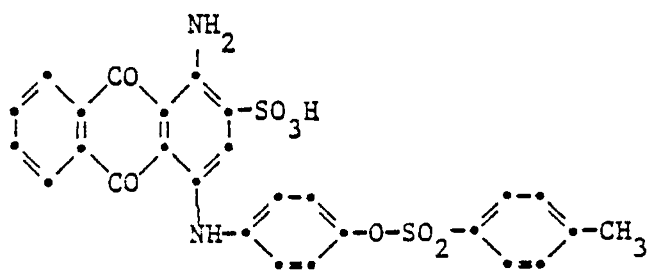

(41),

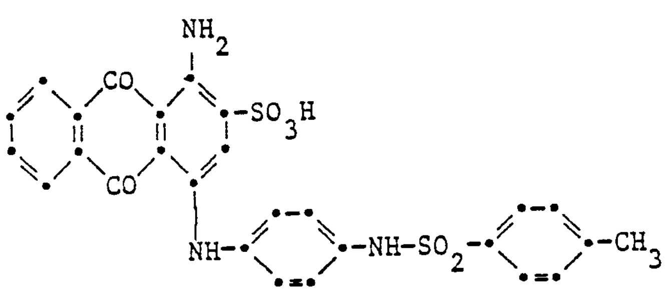

(42),

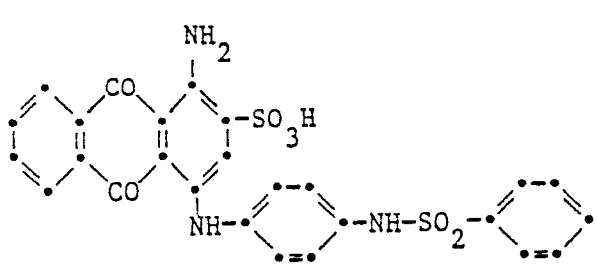

(43),

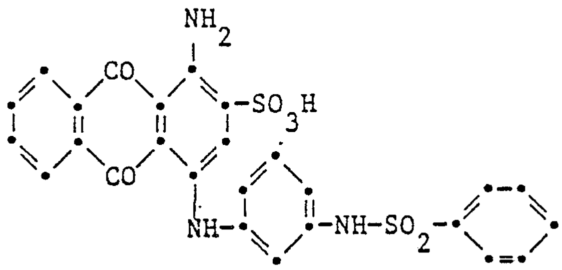

(44),

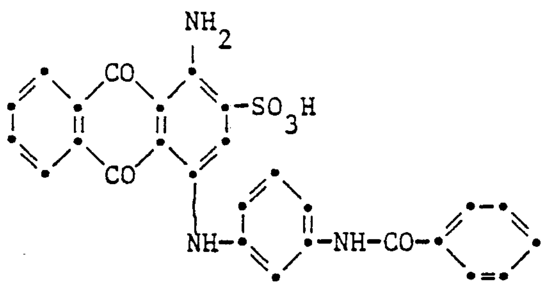

(45),

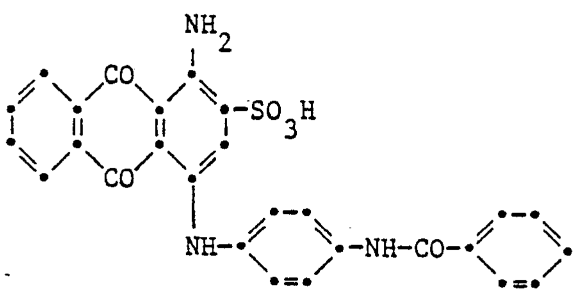

(46),

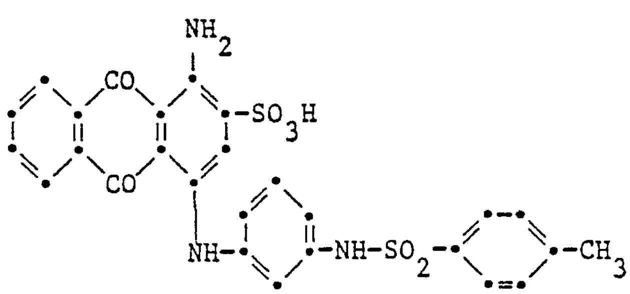

(47),

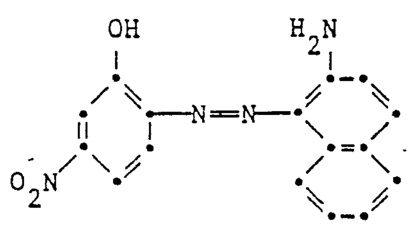

(48),

1 : 2-Kobaltkomplex

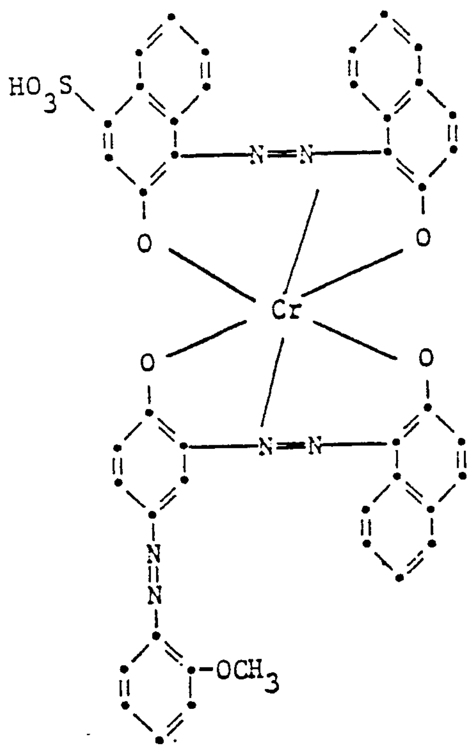

(49),

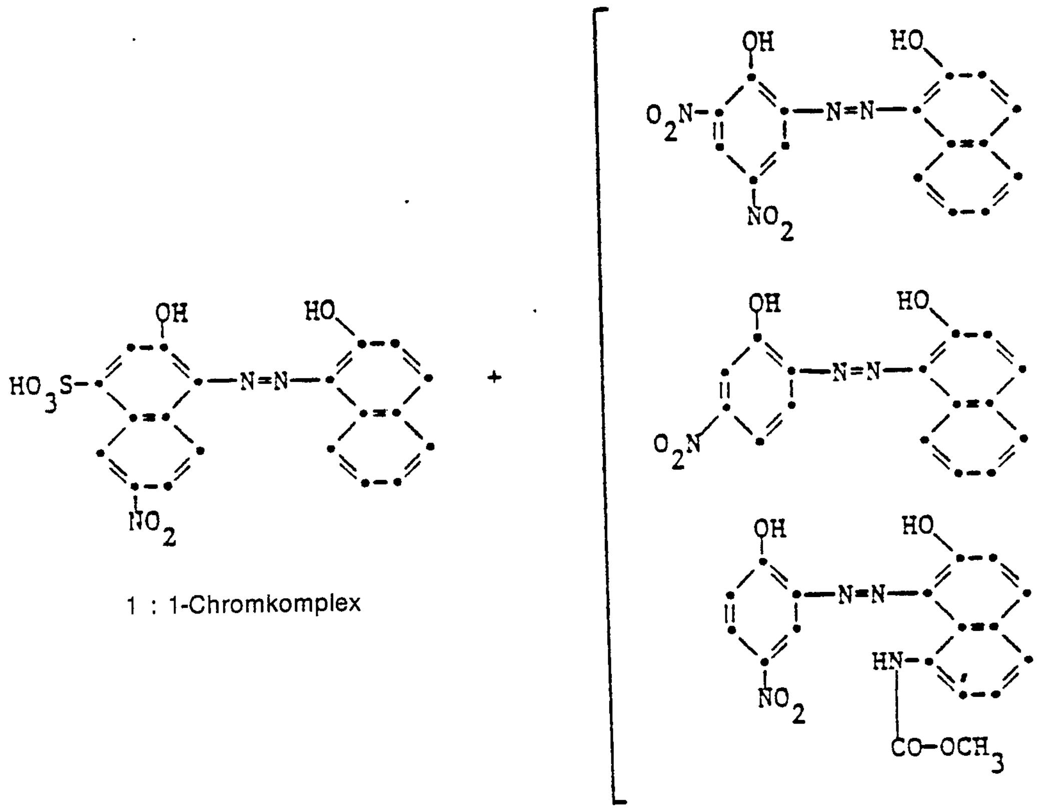

1 : 1-Chromkomplex

+

(50).

1 : 2-Chrommischkomplex

oder den 1 : 2-Kobaltmischkomplex der Farbstoffe der Formeln (31), (32) und (33) verwendet.

4. Verfahren gemäss einem der Ansprüche 1 bis 3, zur Herstellung von Kombinationsfärbungen, dadurch gekennzeichnet, dass man Farbstoffmischungen verwendet, die 3 oder 4 Farbstoffe aus der Gruppe bestehend aus den Farbstoffen der Formeln (1) bis (10), bzw. der Formeln (11) bis (39) und (41) bis (50) enthalten.

5. Verfahren gemäss einem der Ansprüche 1 bis 4, zum Trichromie-Färben oder -Bedrucken, dadurch gekennzeichnet, dass man eine Mischung von 3 oder 4 passend gewählten gelb- bzw. orange-, rot- und blaufärbenden Farbstoffen, aus der Gruppe bestehend aus den Farbstoffen der Formeln (1) bis (10) bzw. der Formeln (11) bis (39) und (41) bis (50) verwendet.

6. Verfahren gemäss Anspruch 5, dadurch gekennzeichnet, dass man eine Farbstoffmischung verwendet, die einen Farbstoff der Formel (7) bzw. (41) bis (47) enthält.

7. Verfahren gemäss einem der Ansprüche 1 bis 6, dadurch gekennzeichnet, dass man die Farbstoffe oder Farbstoffmischungen in wässrigen Färbeflotten oder Druckpasten, die gegebenenfalls weitere Zusätze enthalten, einsetzt.

8. Verfahren gemäss Anspruch 7, dadurch gekennzeichnet, dass man die Farbstoffe oder Farbstoffmischungen in Kurzflotten einsetzt.

9. Verfahren gemäss einem der Ansprüche 1 bis 8, dadurch gekennzeichnet, dass man die Farbstoffe oder Farbstoffmischungen im kontinuierlichen Schaumfärbeverfahren einsetzt.

10. Verfahren gemäss einem der Ansprüche 1 bis 9, dadurch gekennzeichnet, dass man durch Dämpfen von 1 bis 2 Minuten Dauer fixiert.

11. Verfahren gemäss Anspruch 3, dadurch gekennzeichnet, dass man 1 : 2-Kobaltkomplexe der Formeln (11), (13), (20), (32), (33), (34) oder (35), 1 : 2-Chromkomplexe der Formeln (19), (49) oder (50) oder 1 : 2-Kobaltmischkomplexe der Formeln (31), (32) und (33) oder Mischungen dieser Komplexe verwendet.

12. Verfahren gemäss Anspruch 1, dadurch gekennzeichnet, dass man synthetisches Polyamid-Teppich-Material verwendet.

13. Mischungen von 3 oder 4 Farbstoffen aus der Gruppe bestehend aus den Farbstoffen der Formeln (11) bis (39) und (41) bis (50), welche gebebenenfalls weitere Zusätze enthalten.

14. Wässrige Färbeflotten oder Druckpasten, dadurch gekennzeichnet, dass sie Mischungen von Farbstoffen gemäss Anspruch 13 enthalten.

**Claims**

1. A process for dyeing or printing synthetic polyamide fibres by a rapid fixation method, which process comprises the use of dyes or mixtures of dyes of the formulae

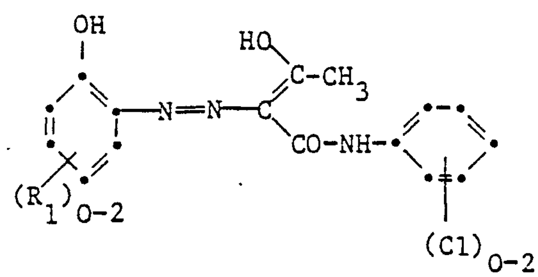

(1),

1 : 2 cobalt complex

wherein $(R_1)_{0-2}$ represents 0 to 2 substituents $R_1$ which may each independently be $C_1$-$C_4$-alkyl, $C_1$-$C_4$-alkoxy, halogen, nitro, sulfamoyl, N-$C_1$-$C_4$-alkylsulfamoyl, N-$C_1$-$C_2$-alkoxy-$C_1$-$C_2$-alkylsulfamoyl, phenylaminosulfonyl, carboxyphenylaminosulfonyl, $C_1$-$C_4$-alkylsulfonyl or acetylamino ;

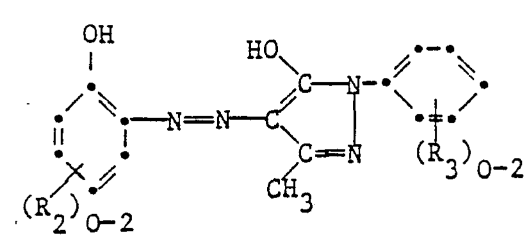

(2),

1 : 2 chromium complex

wherein $(R_2)_{0-2}$ represents 0 to 2 substituents $R_2$ which may each independently be $C_1$-$C_4$-alkyl, $C_1$-$C_4$-alkoxy, halogen, nitro, sulfamoyl, N-$C_1$-$C_4$-alkylsulfamoyl, N-$C_1$-$C_2$-alkoxy-$C_1$-$C_3$-alkylsulfamoyl, phenylaminosulfonyl, carboxyphenylaminosulfonyl, $C_1$-$C_4$-alkylsulfonyl or acetylamino, and $(R_3)_{0-2}$ represents 0 to 2 substituents $R_3$ which may each independently be halogen, $C_1$-$C_4$-alkyl, cyano or sulfamoyl ; 1 : 2 cobalt complexes of the dyes of the formula (2) wherein $R_2$ has the same meaning as in

the 1 : 2 chromium complexes and $(R_3)_{0-2}$ represents 0 to 2 substituents $R_3$ which may each independently be halogen, cyano or sulfamoyl ;

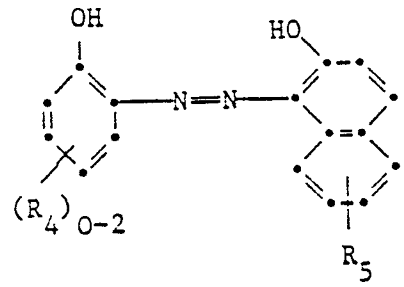

(3),

1 : 2 cobalt or 1 : 2 chromium complex

wherein $R_4$ has the same meaning as $R_1$ in formula (1) and $R_5$ is hydrogen, acetylamino, methoxycarbonylamino or methylsulfonylamino ;

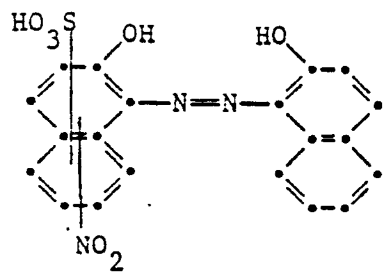

(4),

1 : 2 chromium complex

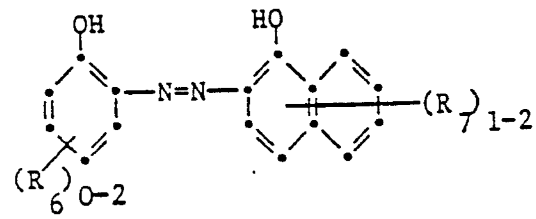

(5),

1 : 2 chromium or 1 : 2 cobalt complex

wherein $R_6$ has the same meaning as $R_1$ in formula (1) and $(R_7)_{1-2}$ represents 1 to 2 substituents $R_7$ which may each independently be halogen, methyl, methoxy or sulfo, or wherein 2 adjacent substituents $R_7$ are able to form a closed bridge member $—SO_2—CH_2—O—$ ;

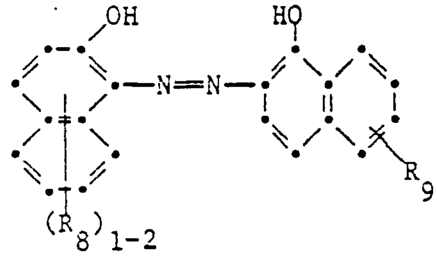

(6),

1 : 2 cobalt or 1 : 2 chromium complex

wherein $(R_8)_{1-2}$ represents 1 to 2 substituents $R_8$ which may each independently be sulfo or nitro and $R_9$ is hydrogen or hydroxyl ;

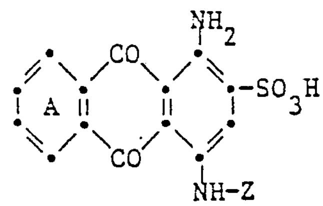

(7),

wherein Z is the radical of the formula

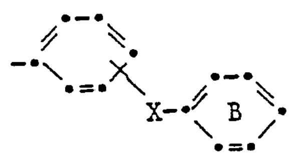

wherein X is the —O—$SO_2$—, —NH—$SO_2$— or —NH—CO— group, the benzene ring A may be substituted by halogen and the benzene ring B may be substituted by halogen, $C_1$-$C_4$-alkyl, $C_1$-$C_4$-alkoxy, β-hydroxyethoxy, β-methoxyethoxy, β-(β'-methoxyethoxy) ethoxy or β-(β'-ethoxyethoxy) ethoxy ;

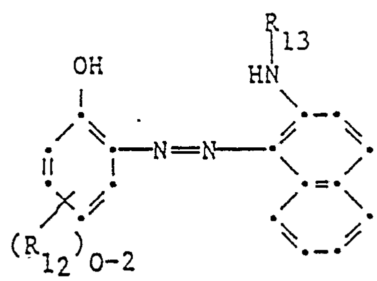

(8),

1 : 2 cobalt complex

wherein $R_{12}$ has the same meaning as $R_1$ in formula (1) and $R_{13}$ is hydrogen or phenyl ;

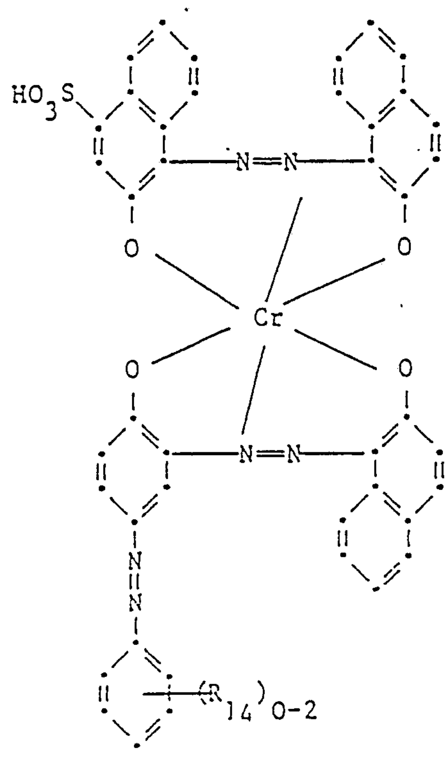

(9),

wherein $(R_{1-4})_{0-2}$ represents 0 to 2 substituents $R_{1-4}$ which may each independently be $C_1$-$C_4$-alkyl, $C_1$-$C_4$-alkoxy, halogen, carboxyl or sulfo ; and

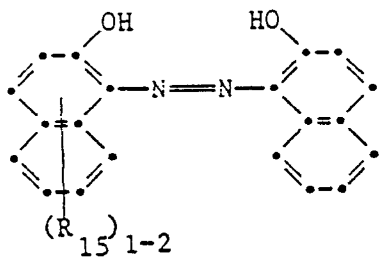

1 : 1 chromium complex

+

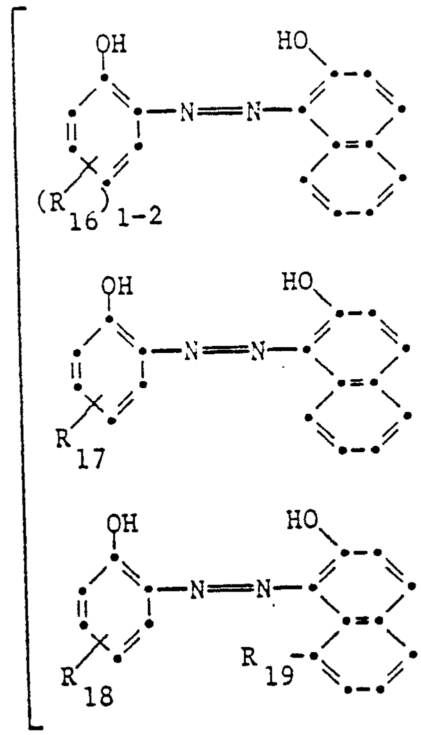

(10),

1 : 2 chromium mixed complex

wherein $(R_{15})_{1-2})$ represents 1 to 2 substituents $R_{15}$ which may each independently be sulfo or nitro, $(R_{16})_{1-2}$ represents 1 to 2 substituents $R_{16}$ which may each independently be nitro, halogen, methyl or acetylamino, $R_{17}$ has the same meaning as $R_{16}$, independently thereof, $R_{18}$ has the same meaning as $R_{16}$, independently thereof, and $R_{19}$ is acetylamino, methoxycarbonylamino, ethoxycarbonylamino, methylsulfonylamino or N,N-dimethylaminosulfonyl ; 1 : 2 cobalt mixed complexes of the dyes of the formulae (2) and (3) or (4) and (8) ; in a continuous dyeing process or printing method, and fixing the dyeings or prints by steaming for less than 3 minutes, during which time at least 95 % fixation of the dyes is achieved.

2. A process according to claim 1, which comprises the use of dyes or mixtures of dyes of the formulae

(1) 1 : 2 cobalt complex wherein $R_1$ is nitro, sulfamoyl, N-methylsulfamoyl, methylsulfonyl, carboxyphenylaminosulfonyl or N-(β-methoxyethyl) sulfamoyl ;

(2) 1 : 2 chromium complex wherein $R_2$ is chlorine, nitro, sulfamoyl or N-methylsulfamoyl and $R_3$ is chlorine, methyl or sulfamoyl ;

(2) 1 : 2 cobalt complex wherein $R_2$ is chlorine, nitro, sulfamoyl or N-methylsulfamoyl and $R_3$ is chlorine, cyano or sulfamoyl ;

(3) 1 : 2 cobalt or 1 : 2 chromium complex wherein $R_4$ is methyl, methoxy, chlorine, nitro, sulfamoyl, N-$C_1$-$C_3$ alkylsulfamoyl, N-β-methoxyethylsulfamoyl, phenylaminosulfonyl, methylsulfonyl or acetylamino and $R_5$ is hydrogen, acetylamino, methoxycarbonylamino or methylsulfonylamino ;

(4) 1 : 2 chromium complex ;

(5) 1 : 2 chromium or 1 : 2 cobalt complex wherein $R_6$ is nitro, chlorine, sulfamoyl, N-methylsulfamoyl or N-ethylsulfamoyl and $R_7$ is chlorine, methyl, methoxy or sulfo, or wherein 2 adjacent substituents $R_7$ are able to form a closed bridge member $—SO_2—CH_2—O—$ ;

(6) 1 : 2 cobalt or 1 : 2 chromium complex wherein $R_8$ is as defined in claim 1 and $R_9$ is hydrogen ;

(7) wherein X is as defined under Formula (7), the benzene ring A is unsubstituted and the benzene ring B can be substituted by methyl or methoxy ;

(8) 1 : 2 cobalt complex wherein $R_{12}$ is methoxy, chlorine, nitro or sulfamoyl ;

(9) wherein $R_{14}$ is methyl, methoxy, ethoxy, chlorine, carboxyl or sulfo ;

(10) 1 : 2 chromium mixed complex wherein $R_{15}$ is as defined in claim 1, $R_{16}$, $R_{17}$ and $R_{18}$ are each independently nitro, chlorine, methyl or acetylamino, and $R_{19}$ is as defined in claim 1 ; or 1 : 2 cobalt mixed complexes of the dyes of the formulae (2) and (3) or (4) and (8).

3. A process according to claim 2, which comprises the use of dyes or mixtures of dyes of the formulae

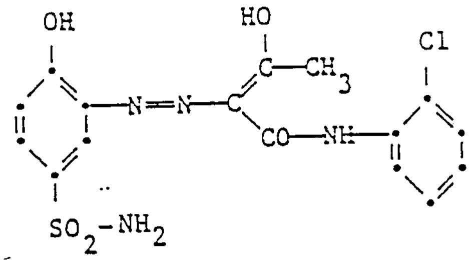

(11),

1 : 2 cobalt complex

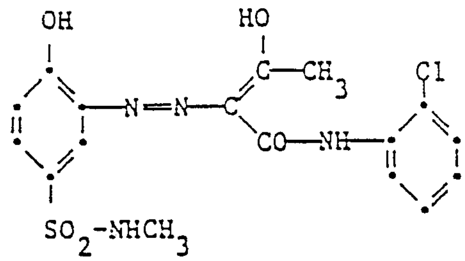

(12),

1 : 2 cobalt complex

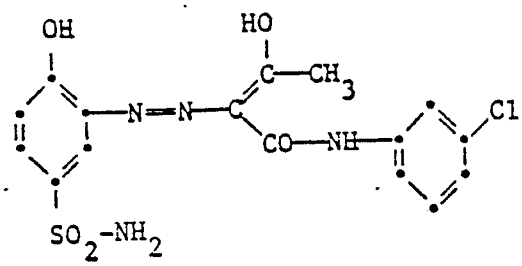

(13),

1 : 2 cobalt complex

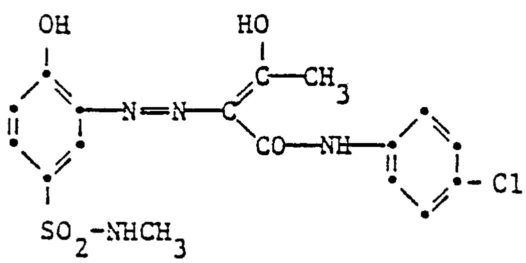

(14),

1 : 2 cobalt complex

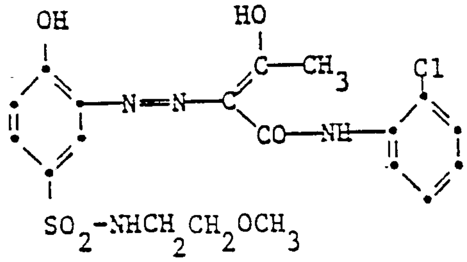

(15),

1 : 2 cobalt complex

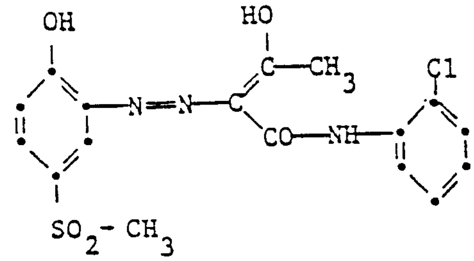

(16),

1 : 2 cobalt complex

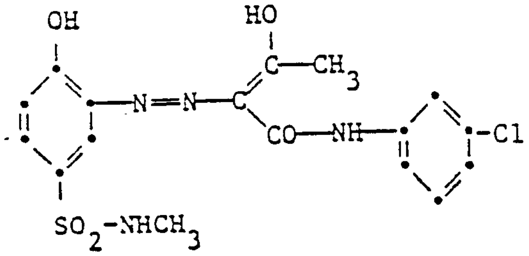

(17),

1 : 2 cobalt complex

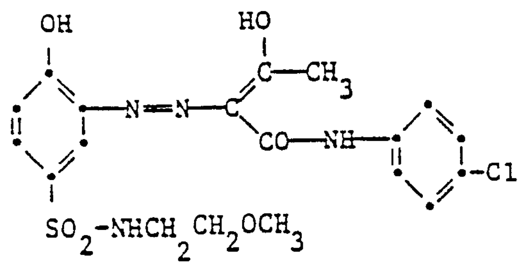

(18),

1 : 2 cobalt complex

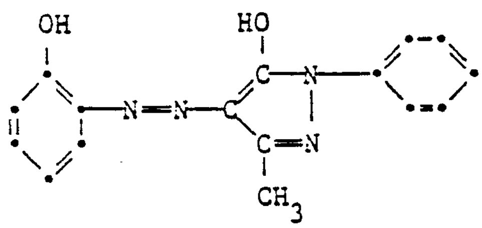

(19),

1 : 2 chromium complex

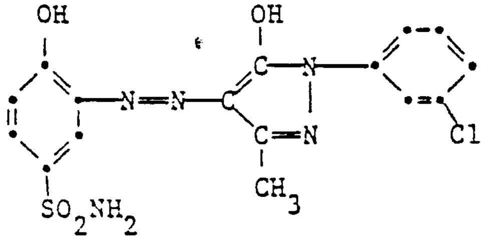

(20),

1 : 2 cobalt complex

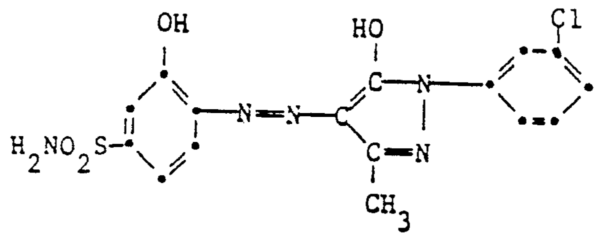

(21),

1 : 2 chromium complex

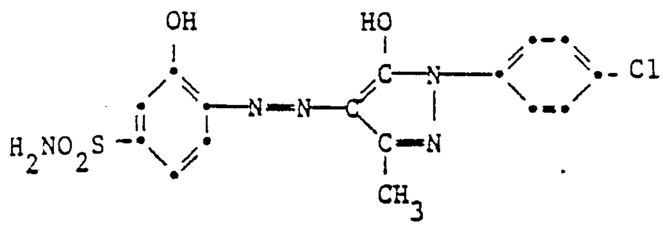

(22),

1 : 2 chromium complex

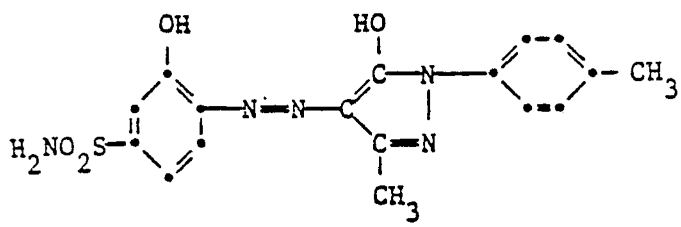

(23),

1 : 2 chromium complex

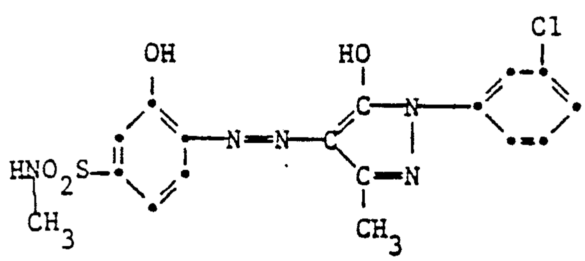

(24),

1 : 2 chromium complex

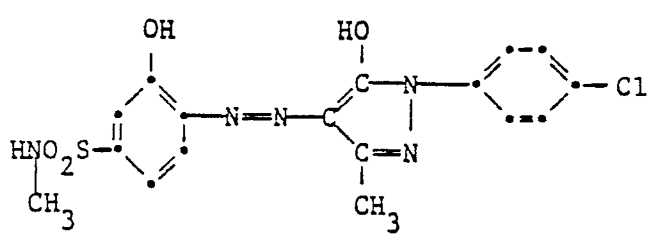

(25),

1 : 2 chromium complex

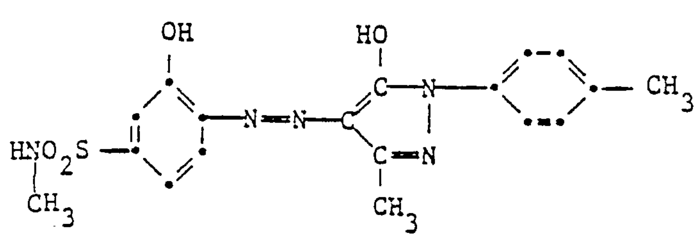

(26),

1 : 2 chromium complex

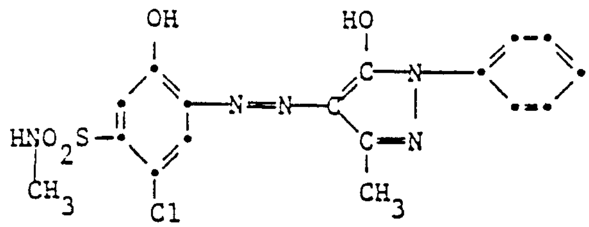

(27),

1 : 2 chromium complex

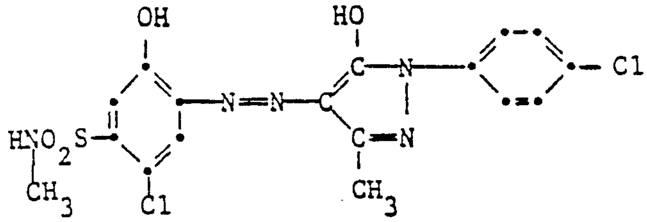

(28),

1 : 2 chromium complex

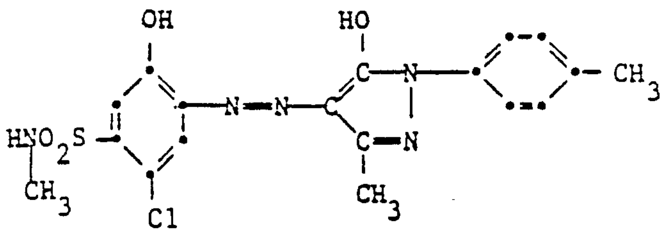

(29),

1 : 2 chromium complex

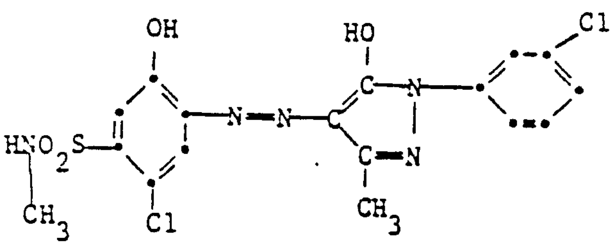

(30),

1 : 2 chromium complex

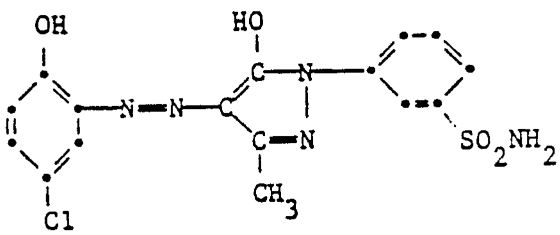

(31),

1 : 2 chromium complex

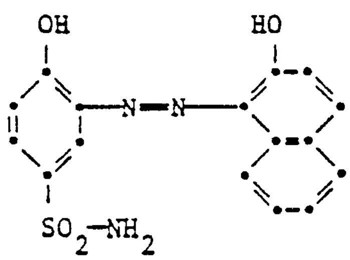

(32),

1 : 2 cobalt complex

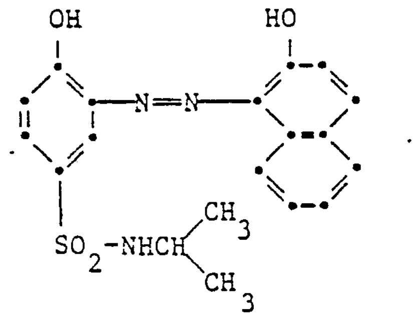

(33),

1 : 2 cobalt complex

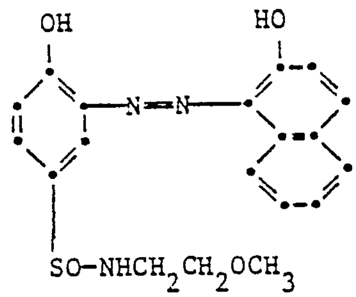

(34),

1 : 2 cobalt complex

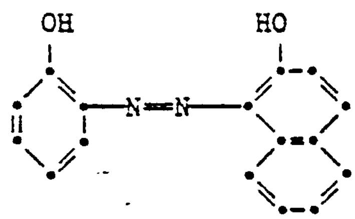

(35),

1 : 2 cobalt complex

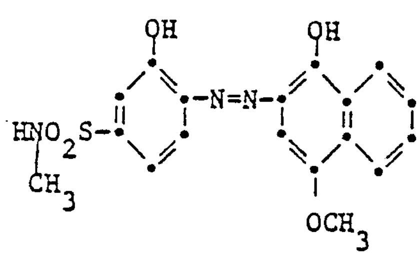

(36),

1 : 2 chromium complex

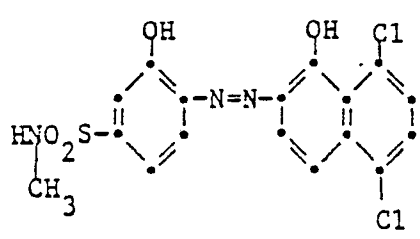

(37),

1 : 2 chromium complex

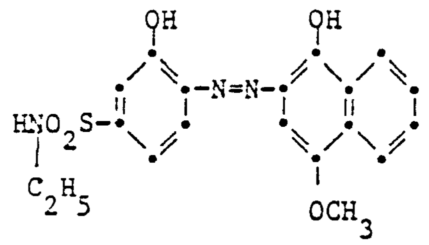

(38),

1 : 2 chromium complex

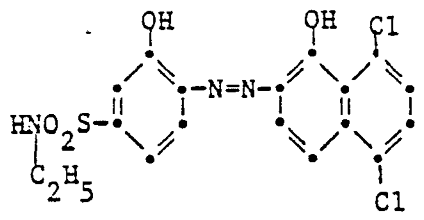

(39),

1 : 2 chromium complex

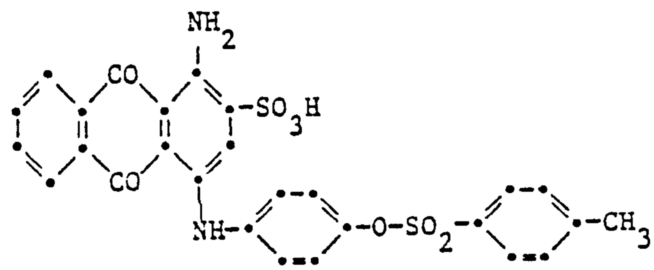

(41),

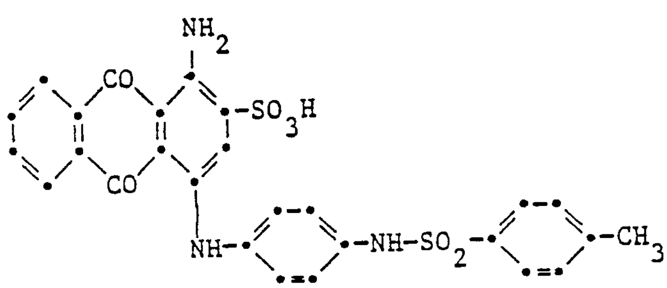

(42),

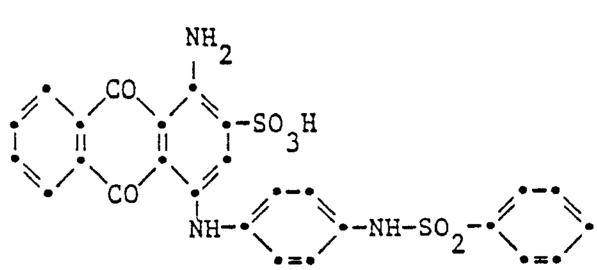

(43),

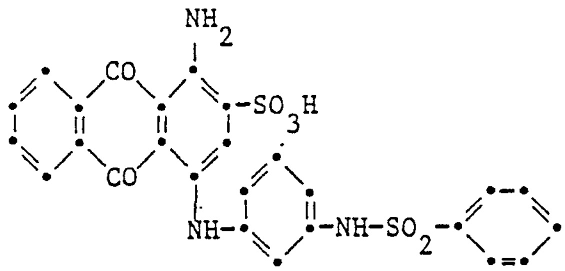

(44),

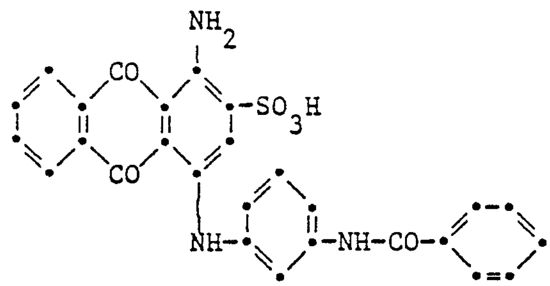

(45),

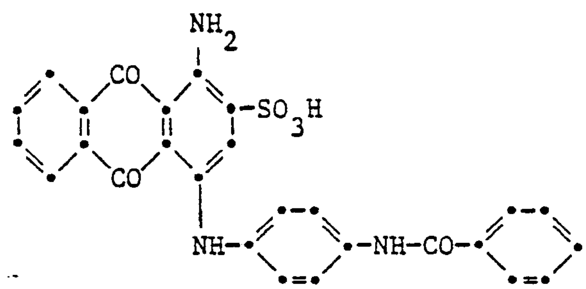

(46),

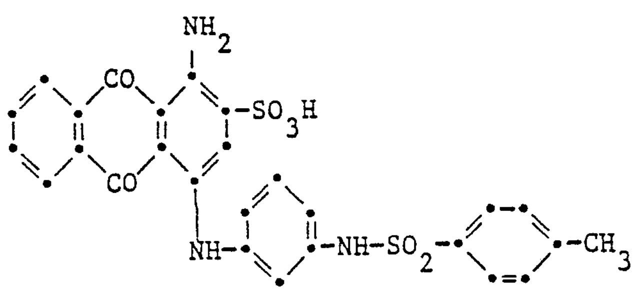

(47),

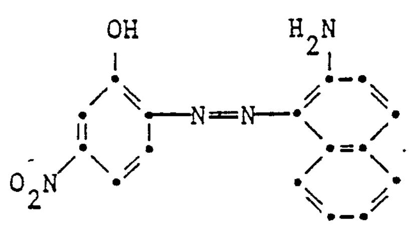

(48),

1 : 2 cobalt complex

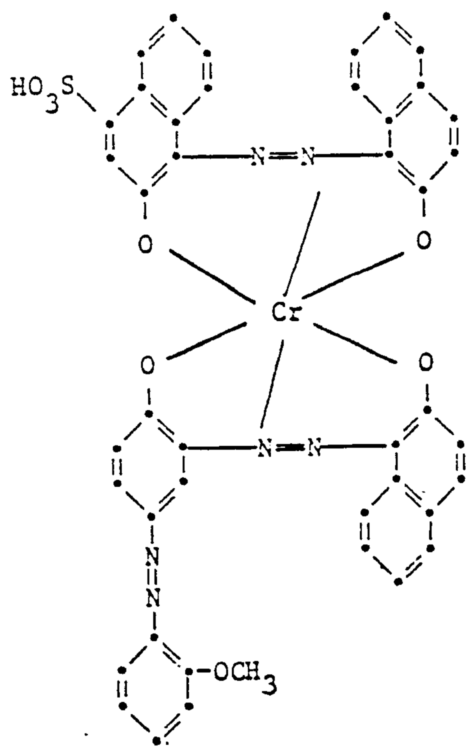

(49),

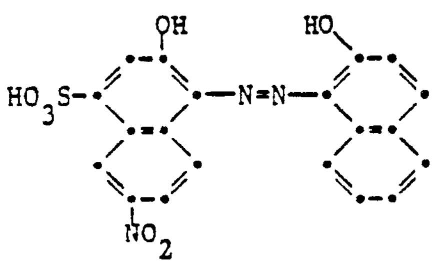

1 : 1 chromium complex

+

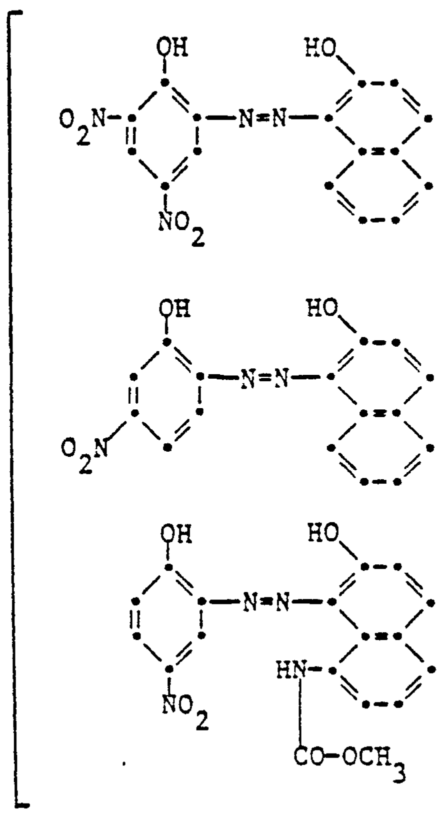

(50).

1 : 2 chromium mixed complex

or the 1 : 2 cobalt mixed complex of the dyes of the formulae (31), (32) and (33).

4. A process according to any one of claims 1 to 3 for producing combination shades, which comprises the use of mixtures of dyes comprising 3 or 4 dyes from the group consisting of the dyes of the formulae (1) to (10) or of the formulae (11) to (39) and (41) to (50).

5. A process according to any one of claims 1 to 4 for trichromatic dyeing or printing, which

comprises the use of a mixture of 3 or 4 suitably selected yellow or orange, red and blue dyes from the group consisting of the dyes of the formulae (1) to (10) or (11) to (39) and (41) to (50).

6. A process according to claim 5, which comprises the use of a mixture of dyes which contains a dye of the formula (7) or (41) to (47).

7. A process according to any one of claims 1 to 6, wherein the dyes or mixtures of dyes are used in aqueous dye liquors or printing pastes which optionally contain further additives.

8. A process according to claim 7, wherein the dyes or mixtures of dyes are used in short liquors.

9. A process according to any one of claims 1 to 8, wherein the dyes or mixtures of dyes are used in the continuous foam dyeing method.

10. A process according to any one of claims 1 to 9, wherein the dyes are fixed by steaming for 1 to 2 minutes.

11. A process according to claim 3, which comprises the use of 1 : 2 cobalt complexes of the formulae (11), (13), (20), (32), (33), (34) or (35), 1 : 2 chromium complexes of the formulae (19), (49) or (50), or 1 : 2 cobalt mixed complexes of the formulae (31), (32) and (33) or mixtures of these complexes.

12. A process according to claim 1, which comprises the use of synthetic polyamide carpet material.

13. Mixtures of 3 or 4 dyes from the group consisting of the dyes of the formulae (11) to (39) and (41) to (50), which mixtures optionally contain further additives.

14. Aqueous dye liquors or printing pastes which contain mixtures of dyes according to claim 13.

**Revendications**

1. Procédé pour la teinture ou l'impression de fibres de polyamide synthétiques selon un procédé de fixage rapide, caractérisé par le fait que l'on utilise, dans le procédé de teinture en continu ou dans le procédé d'impression, des colorants ou mélanges de colorants de formules

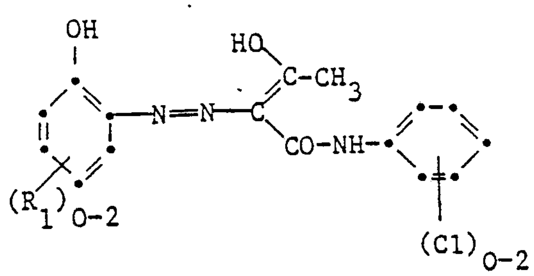

(1),

complexe de cobalt 1 : 2

dans laquelle $(R_1)_{0-2}$ représente 0 à 2 substituants $R_1$ qui peuvent être, indépendamment l'un de l'autre, des atomes d'halogène ou des groupes alkyle en $C_{1-4}$, alcoxy en $C_{1-4}$, nitro, sulfamyle, N-alkyl($C_{1-4}$)-sulfamyle, N-alcoxy($C_{1-2}$)-alkyl($C_{1-2}$)-sulfamyle, phénylaminosulfonyle, carboxyphénylaminosulfonyle, alkyl($C_{1-4}$)-sulfonyle ou acétylamino ;

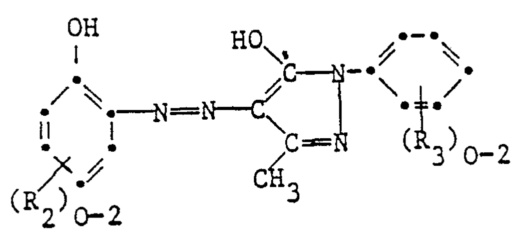

(2),

complexe de chrome 1 : 2

dans laquelle $(R_2)_{0-2}$ représente 0 à 2 substituants $R_2$ qui peuvent être, indépendamment l'un de l'autre, des atomes d'halogène ou des groupes alkyle en $C_{1-4}$, alcoxy en $C_{1-4}$, nitro, sulfamyle, N-alkyl($C_{1-4}$)-sulfamyle, N-alcoxy($C_{1-2}$)-alkyl($C_{1-3}$)-sulfamyle, phénylaminosulfonyle, carboxyphénylaminosulfonyle, alkyl($C_{1-4}$)-sulfonyle ou acétylamino, et $(R_3)_{0-2}$ représente 0 à 2 substituants $R_3$ qui peuvent être, indépendamment l'un de l'autre, des atomes d'halogène ou des groupes alkyle en $C_{1-4}$, cyano ou sulfamyle ; des complexes de cobalt 1 : 2 des colorants de formule (2), dans lesquels $R_2$ a la même signification que dans les complexes de chrome 1 : 2 et $(R_3)_{0-2}$ représente 0 à 2 substituants $R_3$ qui peuvent être, indépendamment l'un de l'autre, des atomes d'halogène ou des groupes cyano ou sulfamyle ;

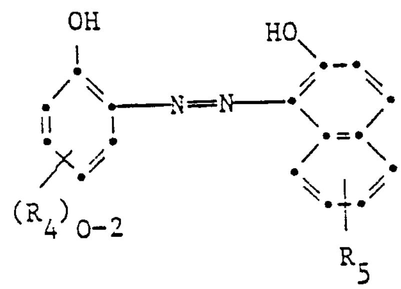

(3),

complexe de cobalt 1 : 2 ou de chrome 1 : 2

dans laquelle $R_4$ a la même signification que $R_1$ dans la formule (1), et $R_5$ est un atome d'hydrogène ou un groupe acétylamino, méthoxycarbonylamino ou méthylsulfonylamino ;

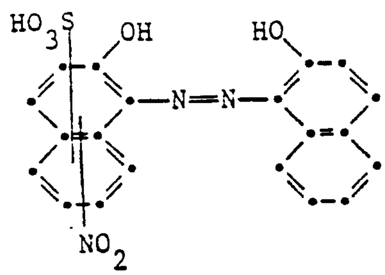

(4),

complexe de chrome 1 : 2

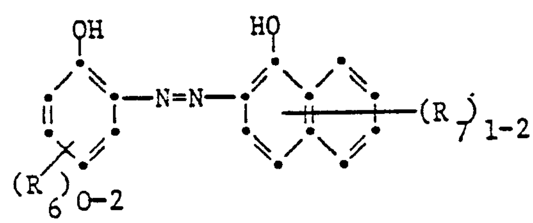

(5),

complexe de chrome 1 : 2 ou de cobalt 1 : 2

dans laquelle $R_6$ a la même signification que $R_1$ dans la formule (1) et $(R_7)_{1-2}$ représente 1 ou 2 substituants $R_7$ qui peuvent être, indépendamment l'un de l'autre, des atomes d'halogène ou des groupes méthyle, méthoxy ou sulfo, ou dans laquelle 2 substituants $R_7$ voisins peuvent former un chaînon pontant fermé $—SO_2—CH_2—O—$ ;

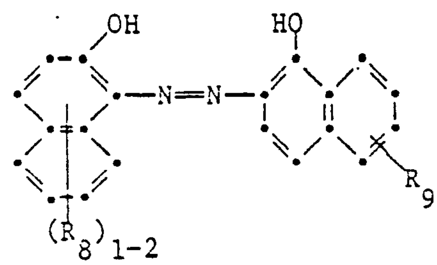

(6),

complexe de cobalt 1 : 2 ou de chrome 1 : 2

dans laquelle $(R_8)_{1-2}$ représente 1 ou 2 substituants $R_8$ qui peuvent être, indépendamment l'un de l'autre, des groupes sulfo ou nitro, et $R_9$ est un atome d'hydrogène ou le groupe hydroxyle :

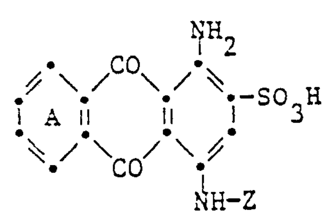

(7),

dans laquelle Z représente le reste de formule

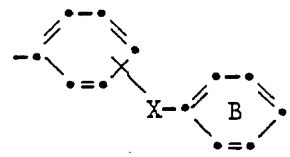

dans lequel X est le groupe —O—$SO_2$—, —NH—$SO_2$— ou —NH—CO—, le noyau benzénique A peut être substitué par des atomes d'halogène, et le noyau benzénique B peut être substitué par des atomes d'halogène ou par des groupes alkyle en $C_{1-4}$, alcoxy en $C_{1-4}$, β-hydroxyéthoxy, β-méthoxyéthoxy, β-(β'-méthoxyéthoxy)-éthoxy ou β-(β'-éthoxyéthoxy)-éthoxy ;

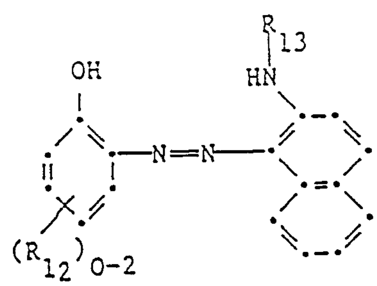

(8),

complexe de cobalt 1 : 2

dans laquelle $R_{12}$ a la même signification que $R_1$ dans la formule (1), et $R_{13}$ est un atome d'hydrogène ou le groupe phényle ;

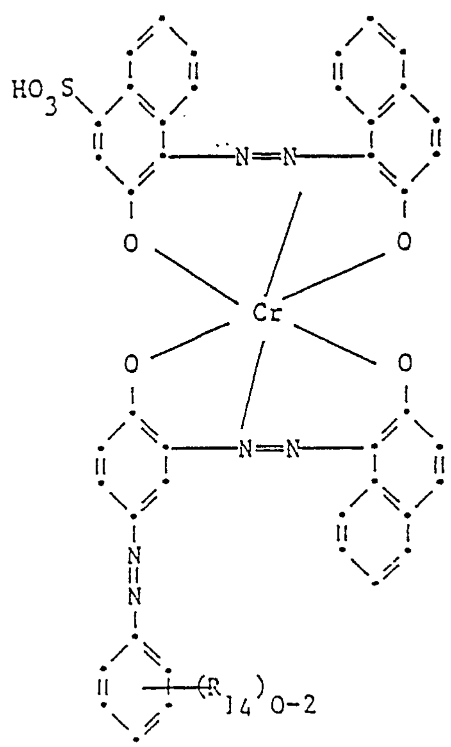

(9),

dans laquelle $(R_{14})_{0-2}$ représente 0 à 2 substituants $R_{14}$ qui peuvent être, indépendamment l'un de l'autre, des atomes d'halogène ou des groupes alkyle en $C_{1-4}$, alcoxy en $C_{1-4}$, carboxyle ou sulfo ; et

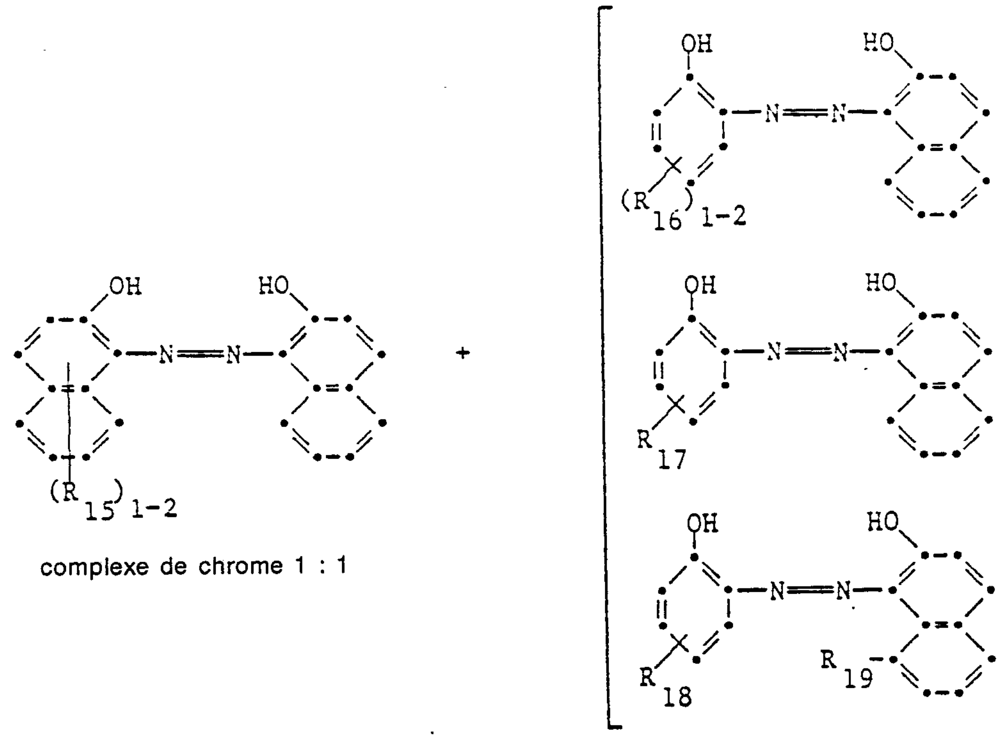

complexe de chrome 1 : 1 + (10),

complexe mixte de chrome 1 : 2

dans laquelle $(R_{15})_{1\text{-}2}$ représente 1 ou 2 substituants $R_{15}$ qui peuvent être, indépendamment l'un de l'autre, des groupes sulfo ou nitro, $(R_{16})_{1\text{-}2}$ représente 1 ou 2 substituants $R_{16}$ qui peuvent être, indépendamment l'un de l'autre, des atomes d'halogène ou des groupes nitro, méthyle ou acétylamino, $R_{17}$ a la même signification que $R_{16}$, indépendamment de celui-ci, $R_{18}$ a la même signification que $R_{16}$, indépendamment de celui-ci, et $R_{19}$ est un groupe acétylamino, méthoxycarbonylamino, éthoxycarbonylamino, méthylsulfonylamino ou N,N-diméthylaminosulfonyle ; des complexes mixtes de cobalt 1 : 2 des colorants de formules (2) et (3) ou (4) et (8) ; et on fixe les teintures ou impressions par un vaporisage de moins de 3 minutes, ce par quoi les colorants sont fixés à au moins 95 %.

2. Procédé selon la revendication 1, caractérisé par le fait que l'on utilise des colorants ou des mélanges de colorants de formules

(1), complexe de cobalt 1 : 2, dans lesquels $R_1$ est un groupe nitro, sulfamyle, N-méthylsulfamyle, méthylsulfonyle, carboxyphénylaminosulfonyle ou N-β-méthoxyéthylsulfamyle ;

(2), complexe de chrome 1 : 2, dans lesquels $R_2$ est un atome de chlore ou un groupe nitro, sulfamyle ou N-méthylsulfamyle, et $R_3$ est un atome de chlore ou un groupe méthyle ou sulfamyle ;

(2), complexe de cobalt 1 : 2, dans lesquels $R_2$ est un atome de chlore ou un groupe nitro, sulfamyle ou N-méthylsulfamyle, et $R_3$ est un atome de chlore ou un groupe cyano ou sulfamyle ;

(3), complexe de cobalt 1 : 2 ou de chrome 1 : 2, dans lesquels $R_4$ est un atome de chlore ou un groupe méthyle, méthoxy, nitro, sulfamyle, N-alkyl $(C_{1\text{-}3})$-sulfamyle, N-β-méthoxyéthylsulfamyle, phénylaminosulfonyle, méthylsulfonyle ou acétylamino, et $R_5$ est un atome d'hydrogène ou un groupe acétylamino, méthoxycarbonylamino ou méthylsulfonylamino ;

(4), complexe de chrome 1 : 2 ;

(5), complexe de chrome 1 : 2 ou de cobalt 1 : 2, dans lesquels $R_6$ est un atome de chlore ou un groupe nitro, sulfamyle, N-méthyl- ou N-éthylsulfamyle, et $R_7$ est un atome de chlore ou un groupe méthyle, méthoxy ou sulfo, ou dans lesquels deux substituants $R_7$ voisins peuvent former un chaînon pontant fermé $—SO_2—CH_2—O—$ ;

(6), complexe de cobalt 1 : 2 ou de chrome 1 : 2, dans lesquels $R_8$ a la signification donnée dans la revendication 1, et $R_9$ est un atome d'hydrogène ;

(7), dans lesquels X a la signification donnée pour la formule (7), le noyau benzénique A n'est pas substitué et le noyau benzénique B peut être substitué par des groupes méthyle ou méthoxy ;

(8), complexe de cobalt 1 : 2, dans lesquels $R_{12}$ est un atome de chlore ou un groupe méthoxy, nitro ou sulfamyle ;

(9), dans lesquels $R_{14}$ est un atome de chlore ou un groupe méthyle, méthoxy, éthoxy, carboxyle ou sulfo ;

(10), complexe mixte de chrome 1 : 2, dans lesquels $R_{15}$ a la signification donnée dans la revendication 1, $R_{16}$, $R_{17}$ et $R_{18}$ sont, indépendamment les uns des autres, des atomes de chlore ou des

groupes nitro, méthyle ou acétylamino, et $R_{19}$ a la signification donnée dans la revendication 1 ; ou des complexes mixtes de cobalt 1 : 2 des colorants de formules (2) et (3) ou (4) et (8).

3. Procédé selon la revendication 2, caractérisé par le fait que l'on utilise des colorants ou des mélanges de colorants de formules

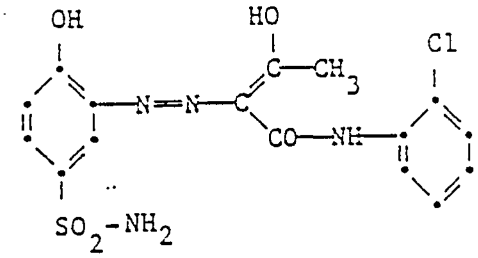

(11),

complexe de cobalt 1 : 2

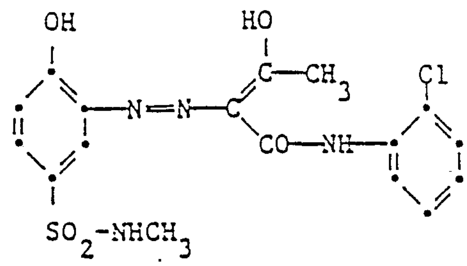

(12),

complexe de cobalt 1 : 2

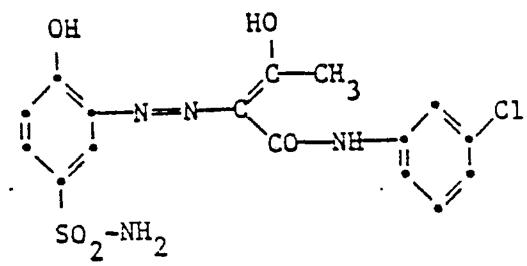

(13),

complexe de cobalt 1 : 2

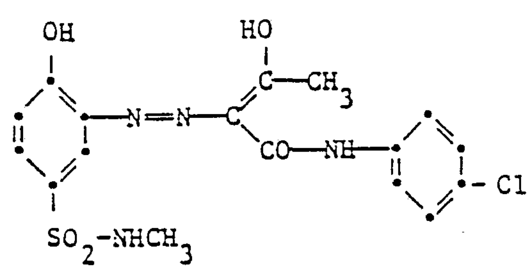

(14),

complexe de cobalt 1 : 2

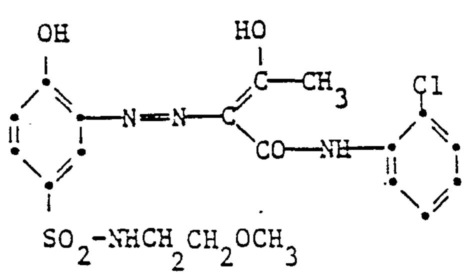

(15),

complexe de cobalt 1 : 2

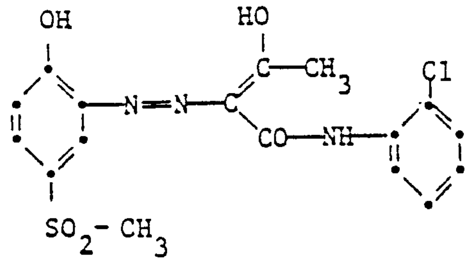

(16),

complexe de cobalt 1 : 2

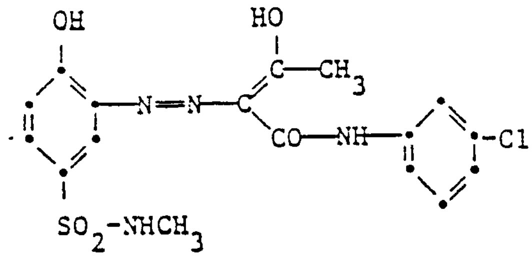

(17),

complexe de cobalt 1 : 2

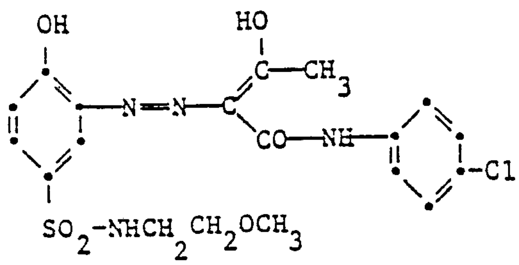

(18),

complexe de cobalt 1 : 2

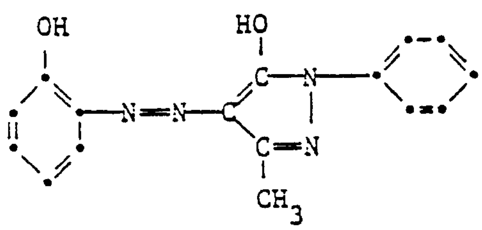

(19),

complexe de chrome 1 : 2

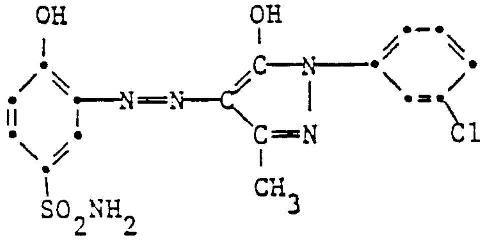

(20),

complexe de cobalt 1 : 2

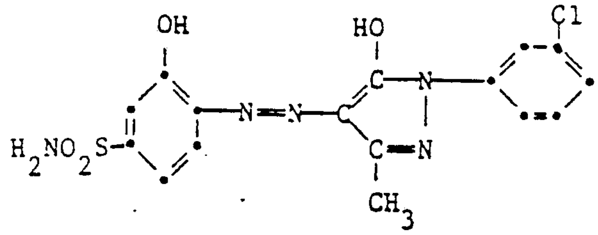

(21),

complexe de chrome 1 : 2

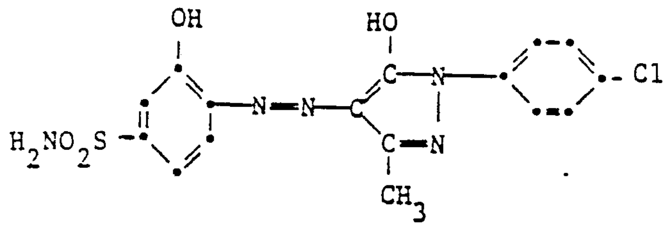

(22),

complexe de chrome 1 : 2

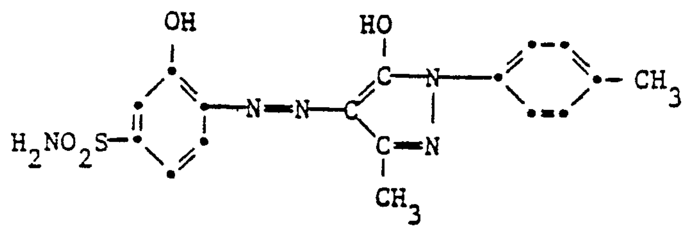

(23),

complexe de chrome 1 : 2

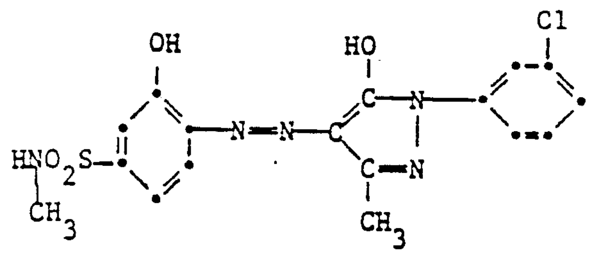

(24),

(30),

complexe de chrome 1 : 2

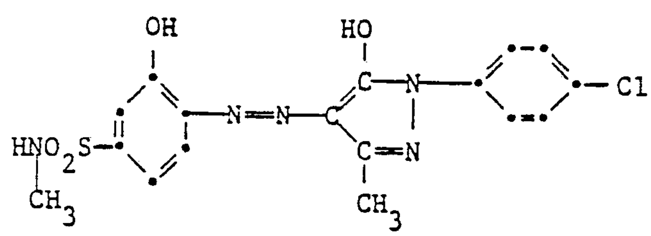

(25),

complexe de chrome 1 : 2

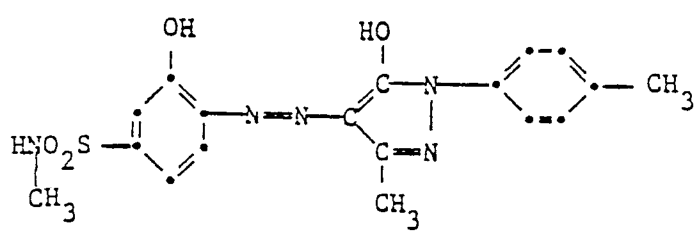

(26),

complexe de chrome 1 : 2

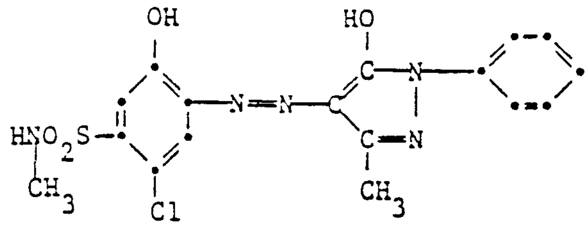 (27),

complexe de chrome 1 : 2

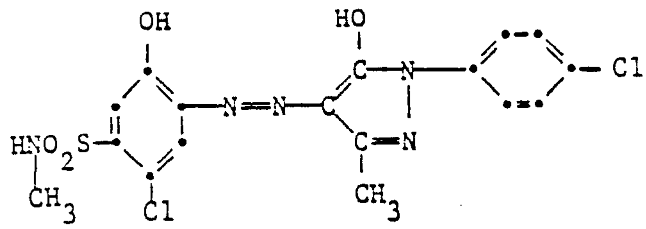 (28),

complexe de chrome 1 : 2

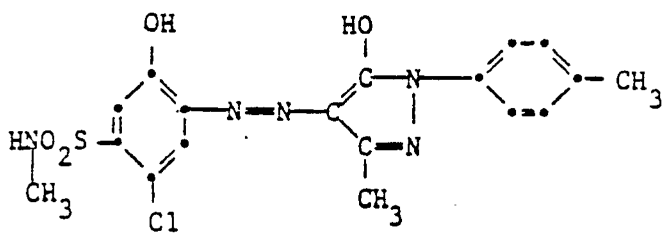 (29),

complexe de chrome 1 : 2

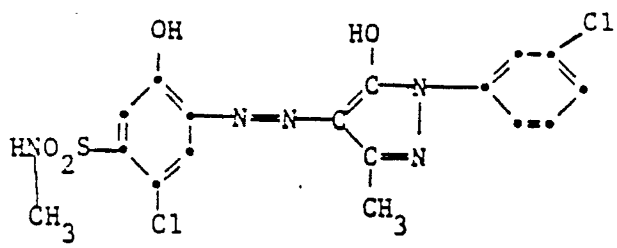

complexe de chrome 1 : 2

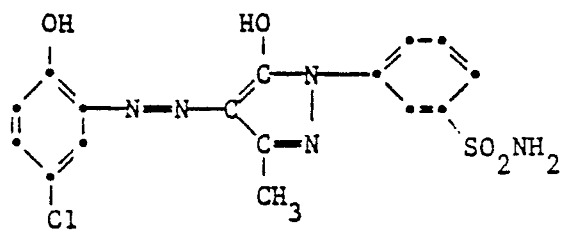 (31),

complexe de chrome 1 : 2

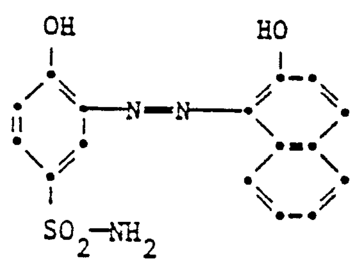 (32),

complexe de cobalt 1 : 2

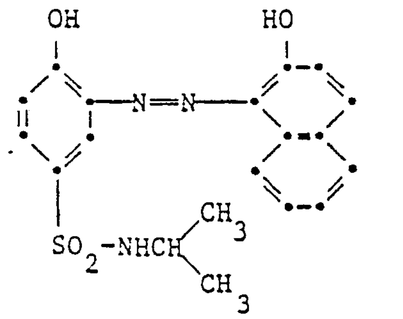

(33),

complexe de cobalt 1 : 2

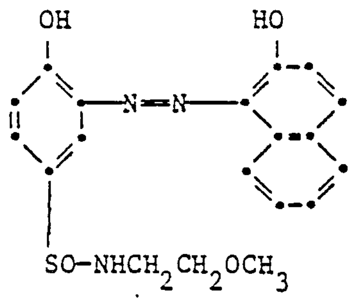

(34),

complexe de cobalt 1 : 2

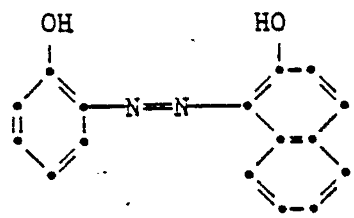

(35),

complexe de cobalt 1 : 2

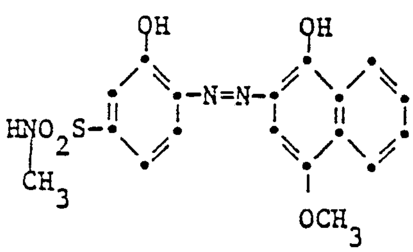

(36),

complexe de chrome 1 : 2

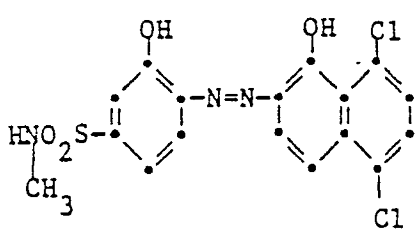

(37),

complexe de chrome 1 : 2

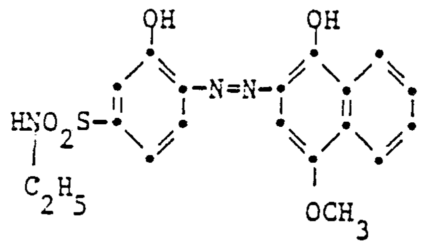

(38),

complexe de chrome 1 : 2

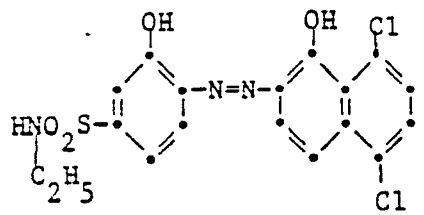

(39),

complexe de chrome 1 : 2

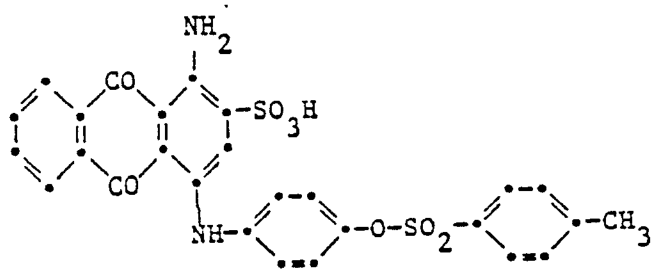

(41),

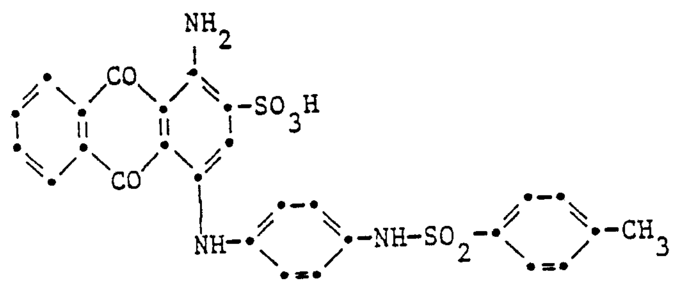

(42),

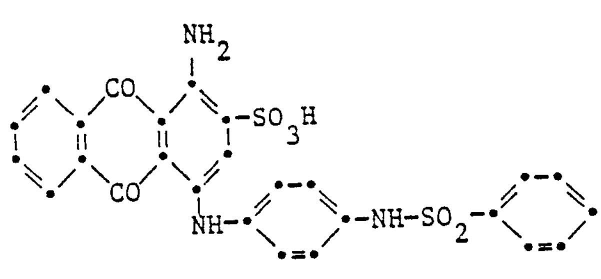

(43),

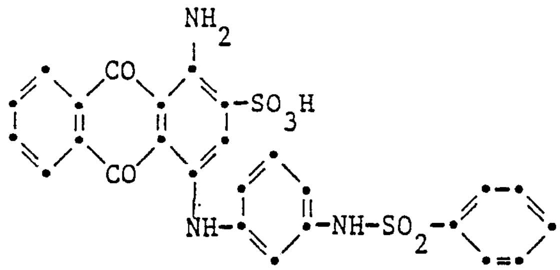

(44),

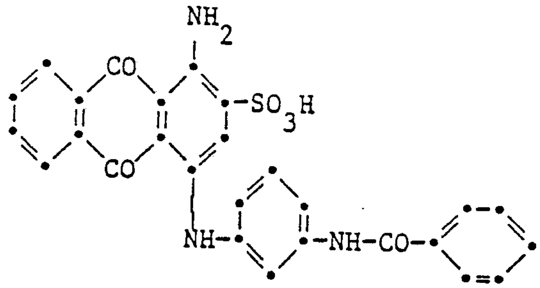

(45),

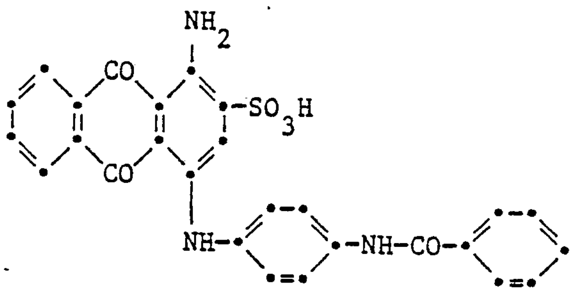

(46),

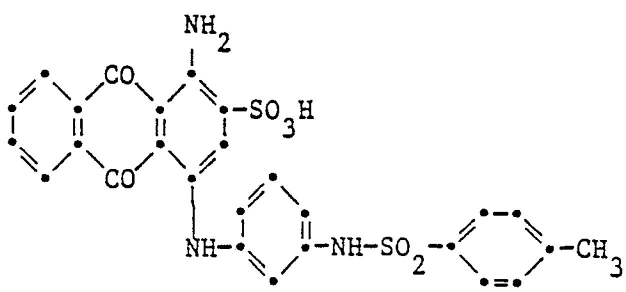

(47),

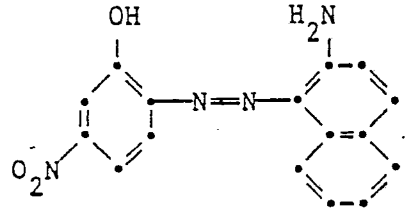

(48),

complexe de cobalt 1 : 2

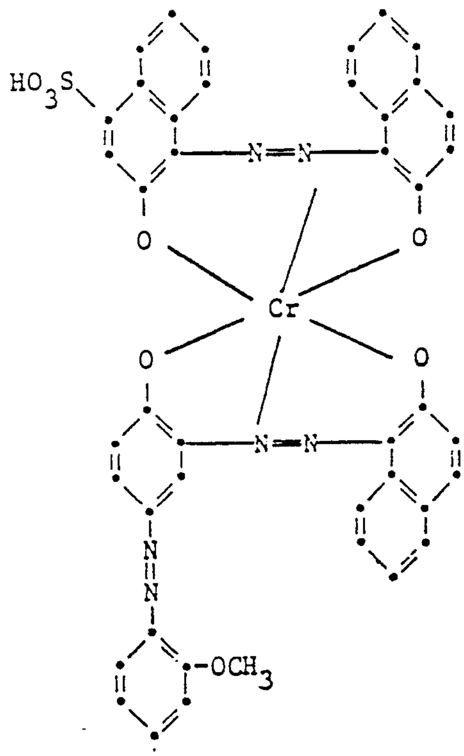

(49).

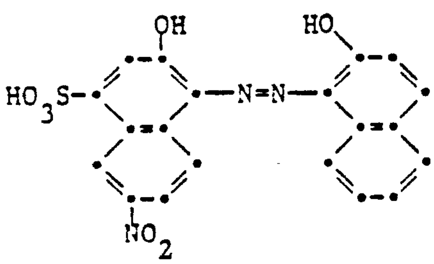

complexe de chrome 1 : 1

+

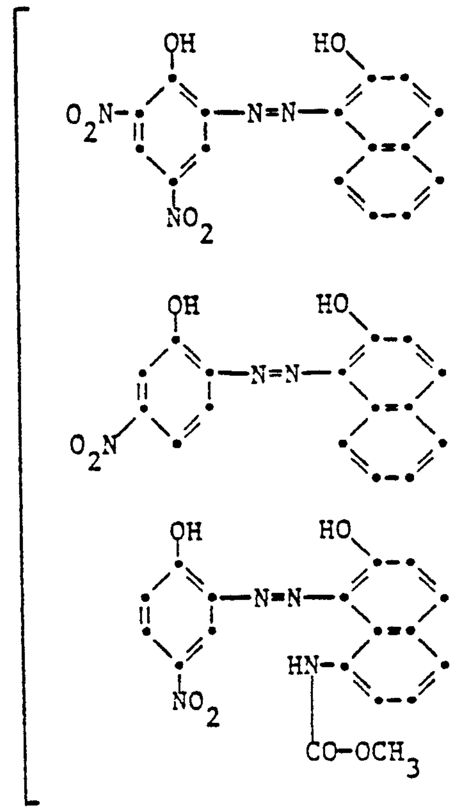

(50).

complexe mixte de chrome 1 : 2

ou un complexe mixte de cobalt 1 : 2 des colorants de formules (31), (32) et (33).

4. Procédé selon l'une des revendications 1 à 3, pour l'obtention de teintures en combinaison, caractérisé par le fait que l'on utilise des mélanges de colorants qui contiennent 3 ou 4 colorants choisis parmi les colorants de formules (1) à (10), ou de formules (11) à (39) et (41) à (50).

5. Procédé selon l'une des revendications 1 à 4, pour la teinture ou l'impression en trichromie, caractérisé par le fait que l'on utilise un mélange de 3 ou 4 colorants teignant en jaune ou orangé, en rouge et en bleu, convenablement choisis parmi les colorants de formules (1) à (10), ou de formules (11) à (39) et (41) à (50).

6. Procédé selon la revendication 5, caractérisé par le fait que l'on utilise un mélange de colorants qui contient un colorant de formule (7) ou (41) à (47).

7. Procédé selon l'une des revendications 1 à 6, caractérisé par le fait que l'on introduit les colorants ou mélanges de colorants dans des bains de teinture aqueux ou des pâtes à imprimer aqueuses, qui contiennent éventuellement d'autres additifs.

8. Procédé selon la revendication 7, caractérisé par le fait que l'on introduit les colorants ou mélanges de colorants dans des bains courts.

9. Procédé selon l'une des revendications 1 à 8, caractérisé par le fait que l'on emploie les colorants ou mélanges de colorants dans le processus de teinture à la mousse en continu.

10. Procédé selon l'une des revendications 1 à 9, caractérisé par le fait que l'on fixe la teinture ou l'impression par un vaporisage d'une durée de 1 à 2 minutes.

11. Procédé selon la revendication 3, caractérisé par le fait que l'on utilise des complexes de cobalt 1 : 2 de formules (11), (13), (20), (32), (33), (34) ou (35), des complexes de chrome 1 : 2 de formules (19), (49) ou (50), ou des complexes mixtes de cobalt 1 : 2 de formules (31), (32) et (33), ou des mélanges de ces complexes.

12. Procédé selon la revendication 1, caractérisé par le fait que l'on utilise un matériau pour tapis en polyamide synthétique.

13. Mélanges de 3 ou 4 colorants choisis parmi les colorants de formules (11) à (39) et (41) à (50), lesquels contiennent éventuellement d'autres additifs.

14. Bains de teinture aqueux ou pâtes à imprimer aqueuses, caractérisés par le fait qu'ils contiennent des mélanges de colorants selon la revendication 13.